# EUROPEAN PATENT SPECIFICATION

(11) **EP 1 862 743 B1**
(45) Date of publication and mention of the grant of the patent: **03.09.2014**
(21) Application number: 06712582.3
(22) Date of filing: 30.01.2006
(51) Int. Cl.: F24F 1/46, F24F 1/22, F24F 13/20, F25B 31/00, F24F 1/54

(54) **OUTDOOR UNIT OF AIR CONDITIONER**
AUSSENEINHEIT FÜR KLIMAANLAGE
UNITE EXTERIEURE DE CLIMATISATION

(30) Priority: 03.02.2005 JP 2005027238; 03.02.2005 JP 2005027236; 03.02.2005 JP 2005027237; 03.02.2005 JP 2005027239
(43) Date of publication of application: 05.12.2007
(60) Divisional application: 14176319.3
(73) Proprietor: DAIKIN INDUSTRIES, LTD., Osaka-shi, Osaka 530-8323 (JP)
(72) Inventor: KUROISHI, Masashi, c/o DAIKIN INDUSTRIES, LTD., Sakai-shi, Osaka, 5918511 (JP); YOKOMIZO, Tsuyoshi, c/o DAIKIN INDUSTRIES, LTD., Sakai-shi, Osaka, 5918511 (JP); ISHIHARA, Hiroki, c/o DAIKIN INDUSTRIES, LTD., Sakai-shi, Osaka, 5918511 (JP)
(74) Representative: HOFFMANN EITLE
(86) International application number: PCT/JP2006/301439
(87) International publication number: WO 2006/082779

(56) References cited:
- EP-A2- 1 500 882
- JP-A- 5 066 028
- JP-A- 02 004 163
- JP-A- 03 046 355
- JP-A- 09 236 286
- JP-A- 11 230 583
- JP-A- 11 337 118
- JP-A- 62 069 066
- JP-A- 2002 156 149
- JP-A- 2003 035 441
- JP-A- 2003 153 552
- JP-A- 2004 263 986

## Description

### TECHNICAL FIELD

The present invention relates to an outdoor unit of an air conditioner, and in particular to an outdoor unit of an air conditioner that has a structure where the space inside a substantially rectangular parallelepiped box-shaped casing is partitioned into a blower chamber and a machine chamber by a partition plate extending in a vertical direction, and that is also connected to an indoor unit via refrigerant communication pipes to configure a vapor compression type refrigerant circuit.

### BACKGROUND ART

As an outdoor unit of a conventional air conditioner, there is an outdoor unit that has a structure (so-called trunk type structure) where the space inside a substantially rectangular parallelepiped box-shaped casing is partitioned into a blower chamber and a machine chamber by a partition plate extending in a vertical direction. Mainly disposed in the blower chamber are an outdoor heat exchanger and an outdoor fan. Further, mainly disposed in the machine chamber are a compressor, refrigerant circuit components like a liquid storage container such as an accumulator or a receiver and valves and refrigerant pipes, and electrical equipment. When the capacity of the compressor is controlled by inverter control, an inverter board on which are mounted inverter control elements such as power transistors and diodes, for example, is further disposed as electrical equipment in addition to a control board for performing control of the operation of the outdoor unit. In an outdoor unit having a trunk type structure disposed with an inverter-controlled compressor, the inverter control elements emit heat during operation of the air conditioner, so a structure is employed where cooling fins for cooling the inverter control elements are disposed on a rear surface of the inverter board and the cooling fins are allowed to project from the partition plate toward the blower chamber (e.g., see Patent Document 1).

<Patent Document 1> JP-A No. 9-236286

### DISCLOSURE OF THE INVENTION

Incidentally, in an outdoor unit having the above-described conventional trunk type structure, making the entire unit compact is demanded. For this reason, effective utilization of the space inside the casing is required together with research and development to reduce the individual sizes of the various devices configuring the outdoor unit.

However, in an outdoor unit having the above-described conventional trunk type structure, a structure is employed where the cooling fins for cooling the inverter control elements are allowed to project from the partition plate toward the blower chamber, so the disposition of the inverter board inside the machine chamber becomes restricted, which is one reason why effective utilization of the space inside the machine chamber cannot be promoted.

It is an object of the present invention to provide, in an outdoor unit having a trunk type structure, a cooling structure for inverter control elements that can eliminate restrictions on the disposition of the inverter board.

An outdoor unit of an air conditioner pertaining to a first invention is in particular an outdoor unit of an air conditioner that has a structure where the space inside a substantially rectangular parallelepiped box-shaped casing is partitioned into a blower chamber and a machine chamber by a partition plate extending in a vertical direction, and that is also connected to an indoor unit via refrigerant communication pipes to configure a vapor compression type refrigerant circuit, the outdoor unit comprising: an outdoor heat exchanger and an outdoor fan that are disposed inside the blower chamber; a compressor that is disposed inside the machine chamber; a refrigerant circuit component; and an inverter board. The refrigerant circuit component is disposed inside the machine chamber and configures the refrigerant circuit together with the compressor and the outdoor heat exchanger. The inverter board is disposed inside the machine chamber and includes inverter control elements mounted thereon. The inverter board is attached to any of the refrigerant circuit component, an inner surface of an outer plate of the casing that the refrigerant circuit component contacts, and a machine chamber side surface of the partition plate that the refrigerant circuit component contacts.

In this outdoor unit of an air conditioner, the inverter board is attached to any of the refrigerant circuit component through which the refrigerant flows, the inner surface of the outer plate of the casing that the refrigerant circuit component contacts, and the machine chamber side surface of the partition plate that the refrigerant circuit component contacts, whereby a cooling structure is employed which causes the exhaust heat that the inverter control elements emit to be dissipated to the refrigerant flowing inside the refrigerant circuit, so that the cooling fins that project from the partition plate toward the blower chamber as in a conventional outdoor unit can be omitted. Thus, effective utilization of the space inside the machine chamber is promoted because the degree of freedom with which the inverter board may be disposed inside the machine chamber is raised, which can contribute to making the entire outdoor unit compact.

An outdoor unit of an air conditioner pertaining to the first invention further comprises the above outdoor unit of the air conditioner, wherein the refrigerant further comprises the above outdoor unit of the air conditioner, wherein the refrigerant circuit component is a component through which high pressure refrigerant flows.

In this outdoor unit of an air conditioner, the exhaust heat that the inverter control elements emit can be dissipated to the high pressure refrigerant. An outdoor unit of an air conditioner according to the preamble of claim 1 is known from JP 05 066028 and from JP 62-69 066.

An outdoor unit of an air conditioner pertaining to a second invention comprises the outdoor unit of an air conditioner of the first invention, wherein the refrigerant circuit component is a receiver for temporarily storing high pressure liquid refrigerant connected to a liquid side of the outdoor heat exchanger.

An outdoor unit of an air conditioner pertaining to a third invention comprises the outdoor unit of an air conditioner of the first invention, wherein the refrigerant circuit component is a high pressure plate pipe that configures a refrigerant pipe through which high pressure liquid refrigerant connected to a liquid side of the outdoor heat exchanger flows.

An outdoor unit of an air conditioner according to the disclosure comprises the outdoor unit of an air conditioner, wherein the refrigerant circuit component is an accumulator connected to a suction side of the compressor.

In this outdoor unit of an air conditioner, the exhaust heat that the inverter control elements emit can be dissipated to the low pressure refrigerant.

An outdoor unit of an air conditioner according to the disclosure comprises the outdoor unit of an air conditioner, wherein the refrigerant circuit component is a suction plate pipe that is disposed inside the machine chamber and configures a suction pipe of the compressor.

In this outdoor unit of an air conditioner, the exhaust heat that the inverter control elements emit can be dissipated to the low pressure refrigerant.

An outdoor unit of an air conditioner pertaining to a fourth invention comprises the outdoor unit of an air conditioner pertaining to the third invention, wherein the inverter board is disposed between the compressor and a bottom plate of the casing in a vertical direction.

In this outdoor unit of an air conditioner, effective utilization of the space in the vicinity of the bottom plate can be promoted because the compressor is disposed on the upper side of the inverter board while employing a structure that attaches the inverter board to the suction plate pipe or the high pressure plate pipe.

An outdoor unit of an air conditioner pertaining to a fifth invention comprises the outdoor unit of an air conditioner pertaining to any of the first to third invention, wherein the inverter board contacts an inner surface of a bottom plate configuring the outer plate and is disposed between the compressor and the bottom plate of the casing in a vertical direction.

In this outdoor unit of an air conditioner, effective utilization of the space in the vicinity of the bottom plate can be promoted because the compressor is disposed on the upper side of the inverter board while employing a structure that brings the inverter board into contact with the inner surface of the bottom plate.

An outdoor unit of an air conditioner pertaining to a sixth invention comprises the outdoor unit of an air conditioner pertaining to any of the first to fifth invention, wherein the inverter board is detachably attached to the outer plate.

In this outdoor unit of an air conditioner, it becomes difficult for serviceability during maintenance to be compromised because a structure is employed which detachably attaches the inverter board to the outer plate while employing a structure that brings the inverter board into contact with the inner surface of the outer plate.

An outdoor unit of an air conditioner pertaining to a seventh invention comprises the outdoor unit of an air conditioner pertaining to any of the first to sixth invention, wherein a heat storage body is disposed on any of the refrigerant circuit component, the inner surface of the outer plate of the casing that the refrigerant circuit component contacts, and the machine chamber side surface of the partition plate that the refrigerant circuit component contacts.

In this outdoor unit of an air conditioner, when the heat storage body is disposed on the refrigerant circuit component to which the inverter board is attached, the heat storage body can be cooled by the refrigerant flowing inside the refrigerant circuit, so the dissipation of the exhaust heat that the inverter control elements emit can be promoted and the cold energy from the refrigerant circuit component can be stored in a heat storage body, whereby the exhaust heat that the inverter control elements emit after the air conditioner stops can be efficiently dissipated. Further, when a heat storage body is disposed on the inner surface of the outer plate of the casing or the machine chamber side surface of the partition plate that the refrigerant circuit component contacts, the heat storage body can be cooled by the outdoor air, whereby the dissipation of the exhaust heat that the inverter control elements emit can be promoted.

An outdoor unit of an air conditioner pertaining to an eighth invention comprises the outdoor unit of an air conditioner pertaining to the seventh invention, wherein the heat storage body contacts the inverter board.

In this outdoor unit of an air conditioner, the inverter board is brought into contact with the heat storage body, whereby the exhaust heat that the inverter control elements emit can be dissipated to the heat storage body.

According to the eighth invention, an air conditioner according to one of the preceding inventions is provided.

### BRIEF DESCRIPTION OF THE DRAWINGS

FIG. 1 is a general refrigerant circuit diagram of an air conditioner where an outdoor unit of an air conditioner pertaining to a first embodiment of the present invention is employed.
FIG. 2 is a plan diagram of the outdoor unit (shown excluding a top plate and refrigerant circuit components other than a receiver).
FIG. 3 is a front diagram of the outdoor unit (shown excluding left and right front plates and refrigerant circuit components other than the receiver).
FIG. 4 is a right side diagram of the outdoor unit (shown excluding the right front plate, a right side plate, and refrigerant circuit components other than the receiver).
FIG. 5 is a perspective diagram showing a state where a second electrical equipment unit is attached to the receiver.
FIG. 6 is a perspective diagram showing a state where the second electrical equipment unit pertaining to modification 1 (when the second electrical equipment unit is attached to a high pressure plate pipe) is attached to a high pressure plate pipe.
FIG. 7 is a diagram where the high pressure plate pipe is seen from the direction of A in

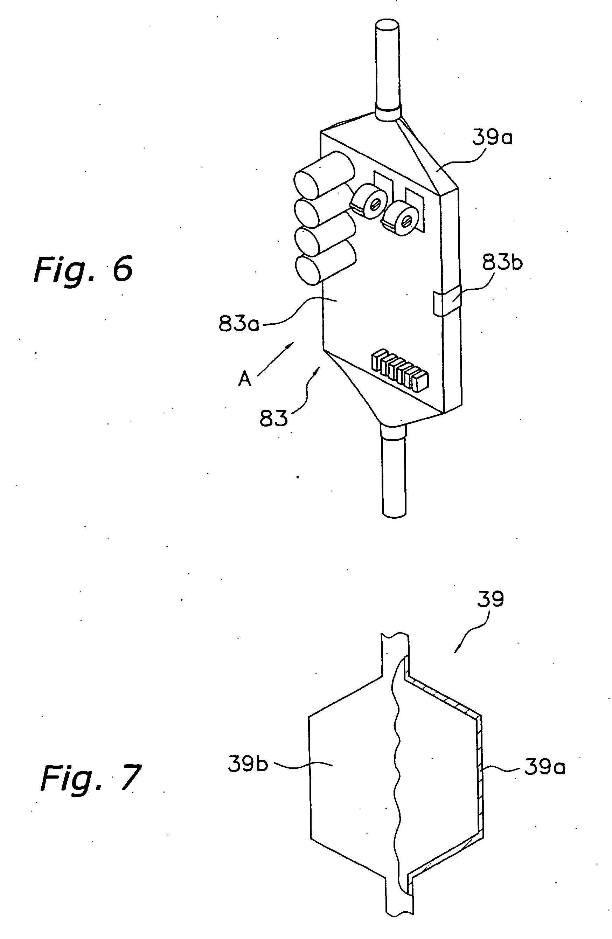

FIG. 6 (shown with part being broken out).

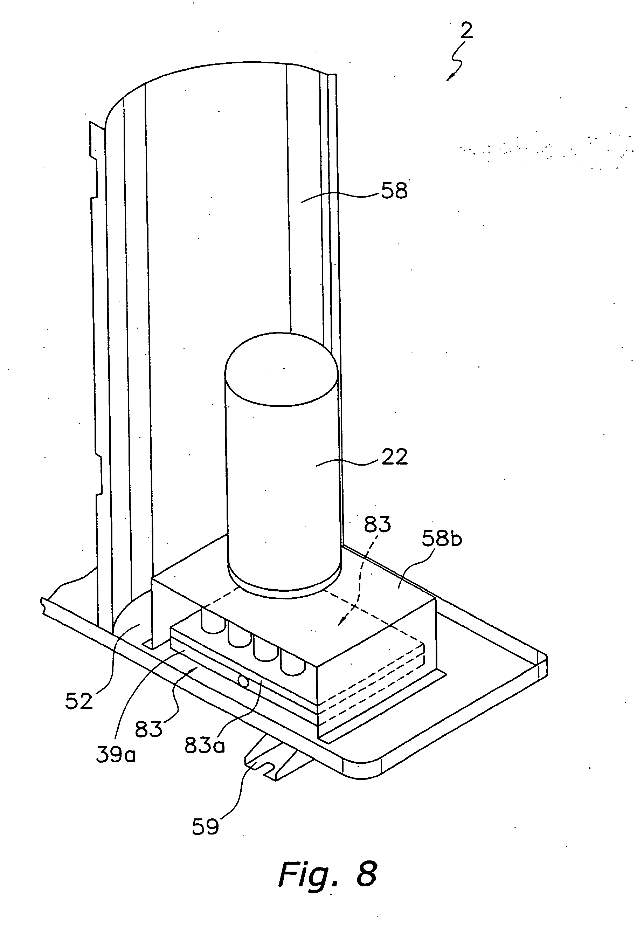

FIG. 8 is a partial perspective diagram where the outdoor unit pertaining to modification 1 (when the second electrical equipment unit is disposed along a bottom surface of a unit casing) is seen diagonally from the right and front (shown excluding the top plate, the front plates, the side plate, refrigerant circuit components other than the high pressure plate pipe, and a first electrical equipment unit).

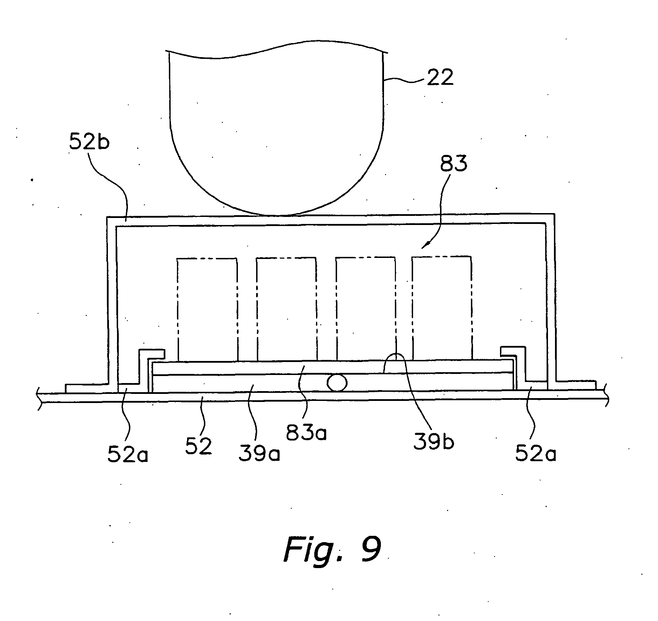

FIG. 9 is a front diagram showing a structure that attaches the high pressure plate pipe and the second electrical equipment unit between a compressor and a bottom plate of the unit casing in a vertical direction.

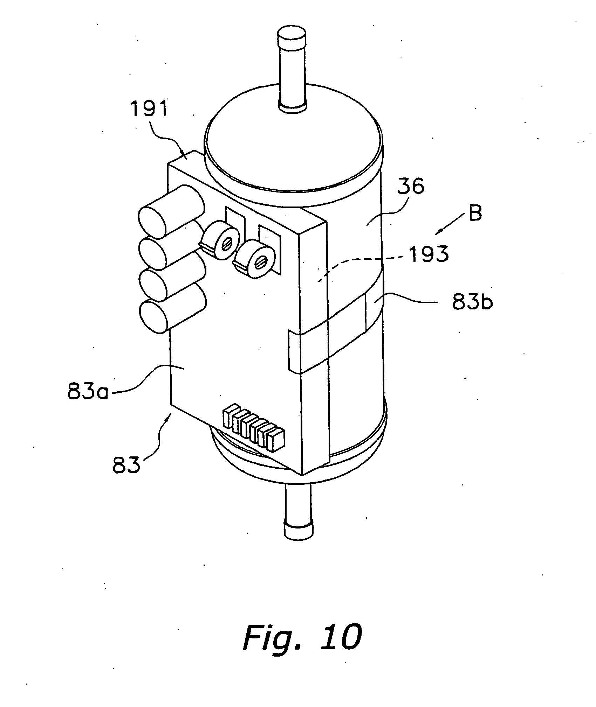

FIG. 10 is a perspective diagram showing a state where the second electrical equipment unit pertaining to modification 2 (when a heat storage material is disposed on the receiver) is attached to the receiver.

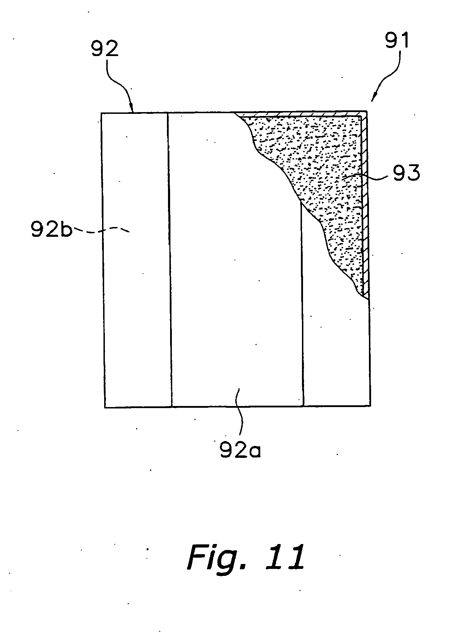

FIG. 11 is a diagram where a heat storage body is seen from the direction of B in FIG. 10 (shown with part being broken out).

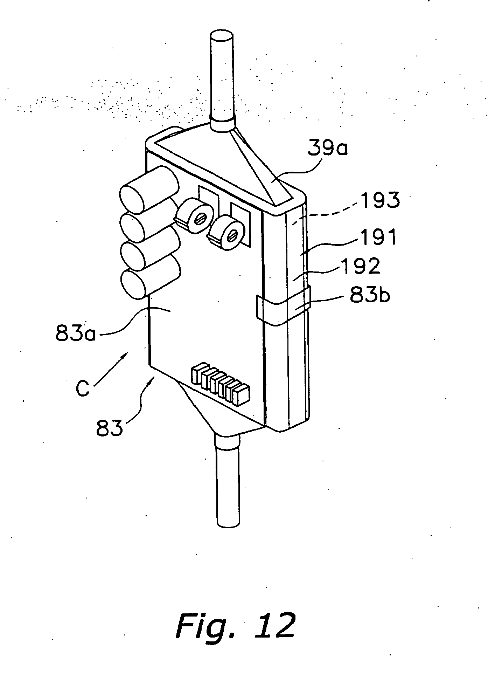

FIG. 12 is a perspective diagram showing a state where the second electrical equipment unit pertaining to modification 2 (when the heat storage material is disposed on the high pressure plate pipe) is attached to the high pressure plate pipe.

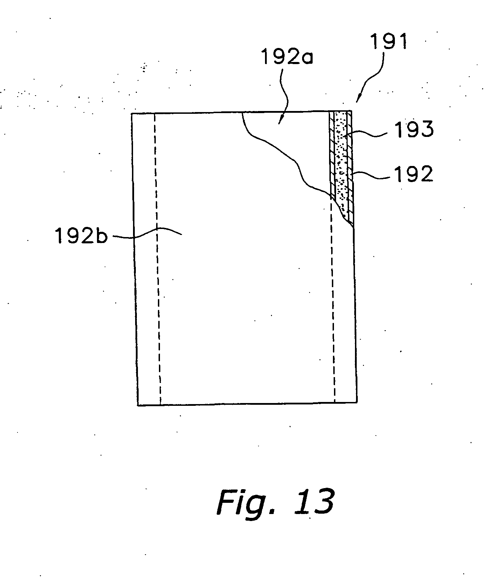

FIG. 13 is a diagram where the heat storage body is seen from the direction of C in FIG. 12 (shown with part being broken out).

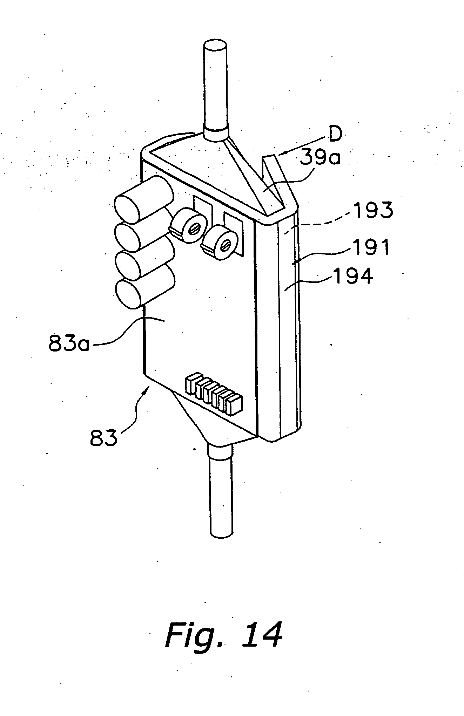

FIG. 14 is a diagram showing a heat storage body capable of being wrapped around the high pressure plate pipe.

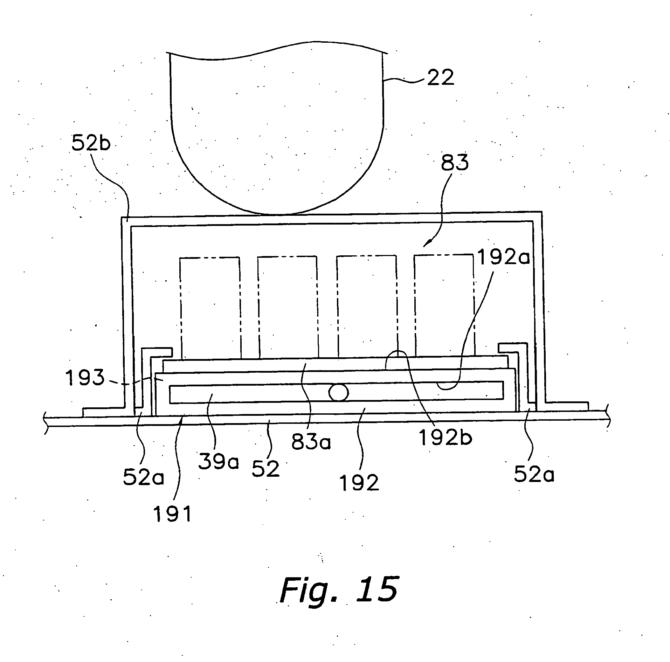

FIG. 15 is a front diagram showing a structure that attaches the high pressure plate pipe, the heat storage material and the second electrical equipment unit between the compressor and the bottom plate of the unit casing in the vertical direction.

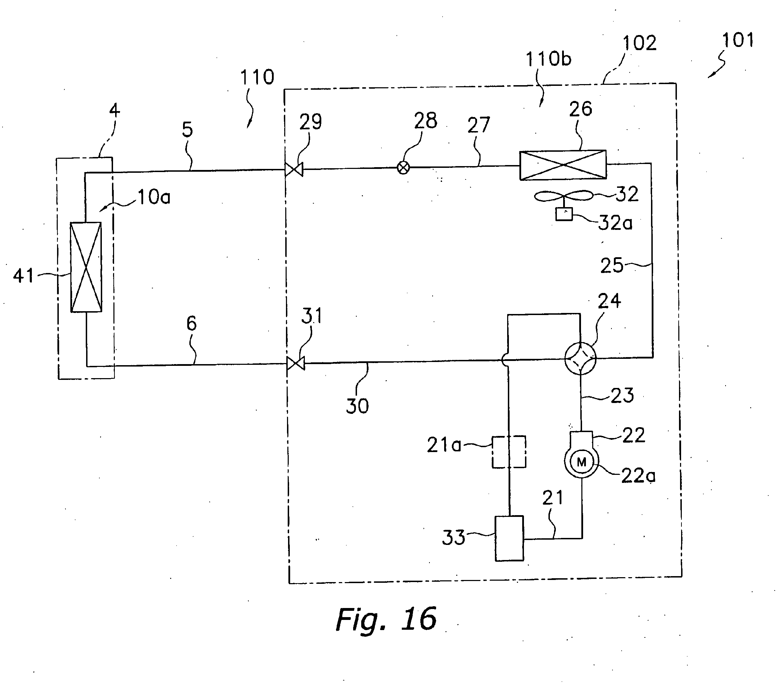

FIG. 16 is a general refrigerant circuit diagram of an air conditioner where an outdoor unit of an air conditioner pertaining to a second aspect is employed.

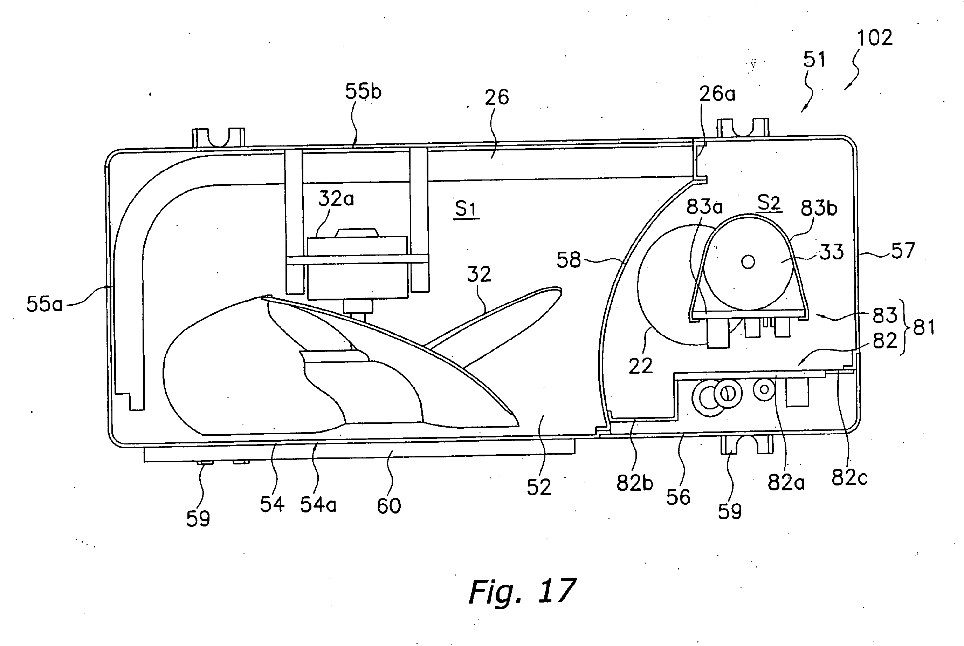

FIG. 17 is a plan diagram of the outdoor unit (shown excluding the top plate and refrigerant circuit components other than an accumulator).

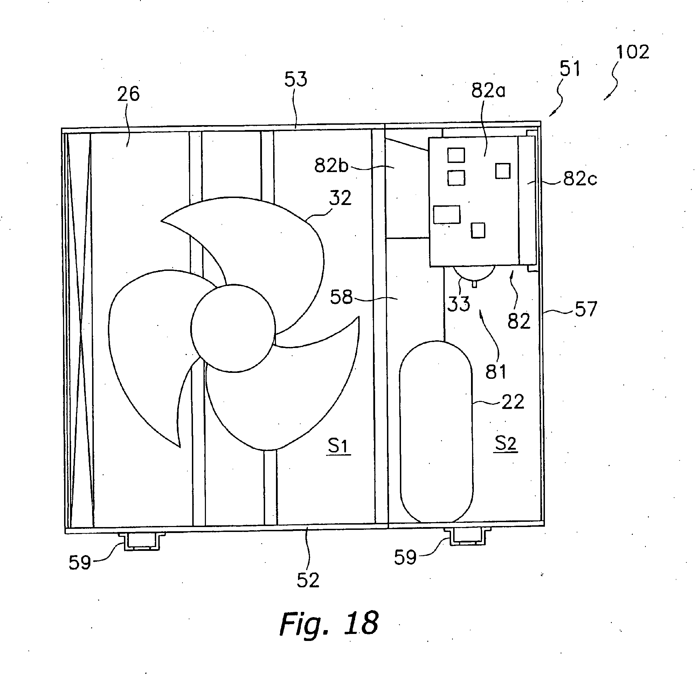

FIG. 18 is a front diagram of the outdoor unit (shown excluding the left and right front plates and refrigerant circuit components other than the accumulator).

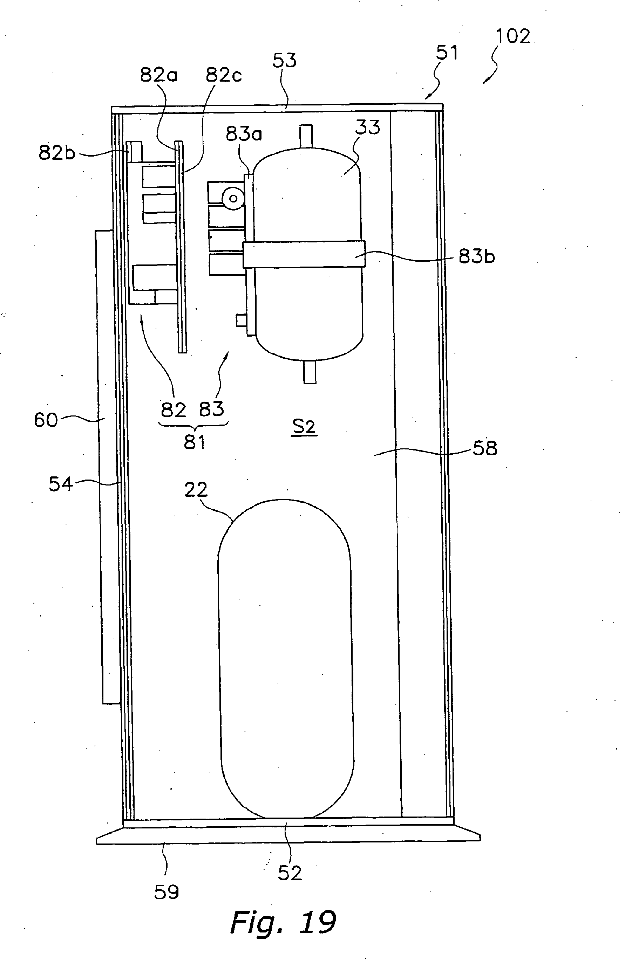

FIG. 19 is a right side diagram of the outdoor unit (shown excluding the right front plate, the right side plate, and refrigerant circuit components other than the accumulator).

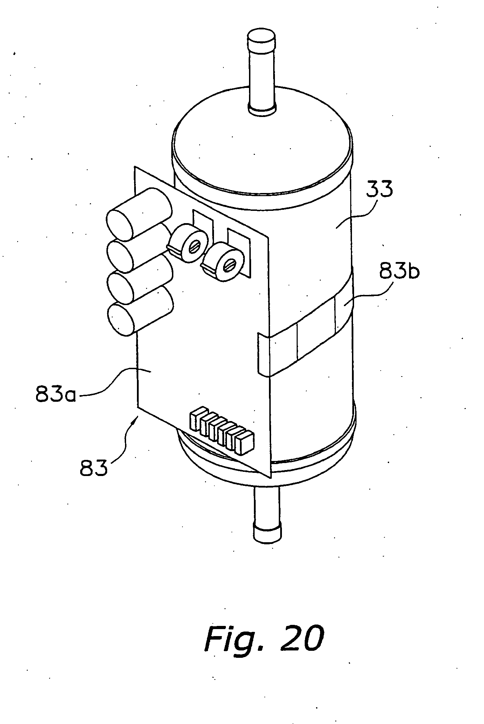

FIG. 20 is a perspective diagram showing a state where the second electrical equipment unit is attached to the accumulator.

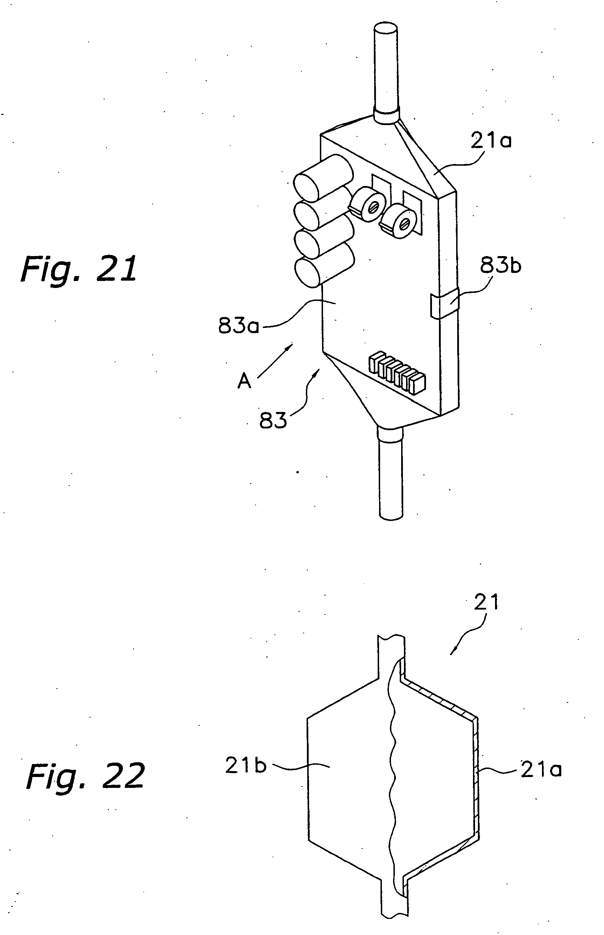

FIG. 21 is a perspective diagram showing a state where the second electrical equipment unit pertaining to modification 1 (when the second electrical equipment unit is attached to a suction plate pipe) is attached to a suction plate pipe.
FIG. 22 is a diagram where the suction plate pipe is seen from the direction of arrow A in
FIG. 21 (shown with part being broken out).

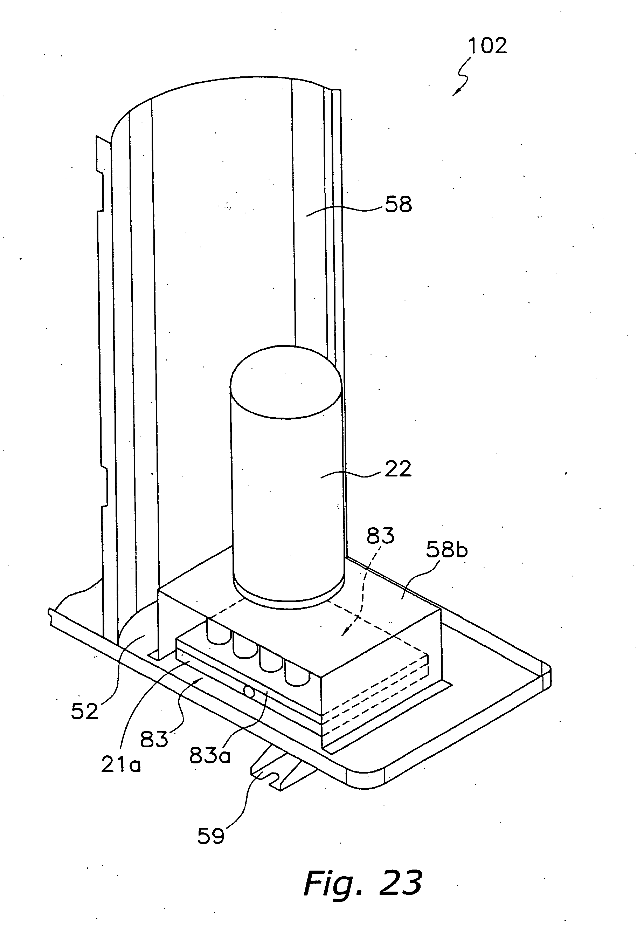

FIG. 23 is a partial perspective diagram where the outdoor unit pertaining to modification 1 (when the second electrical equipment unit is disposed along the bottom surface of the unit casing) is seen diagonally from the right and front (shown excluding the top plate, the front plates, the side plate, refrigerant circuit components other than the suction plate pipe, and the first electrical equipment unit).

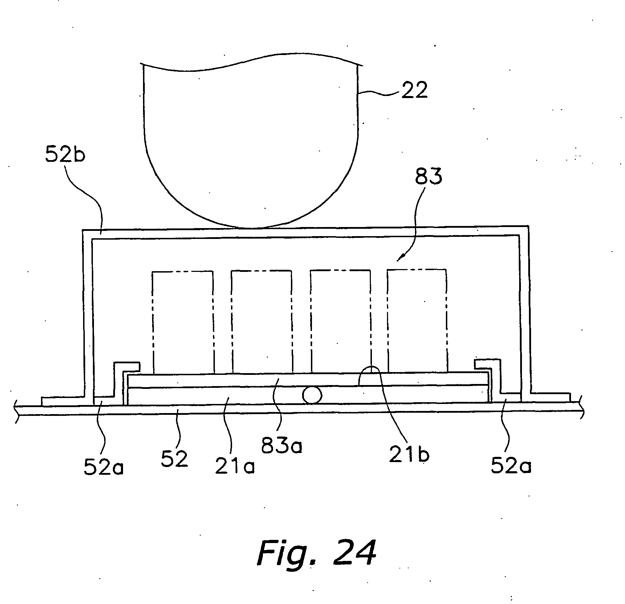

FIG. 24 is a front diagram showing a structure that attaches the suction plate pipe and the second electrical equipment unit between the compressor and the bottom plate of the unit casing in a vertical direction.

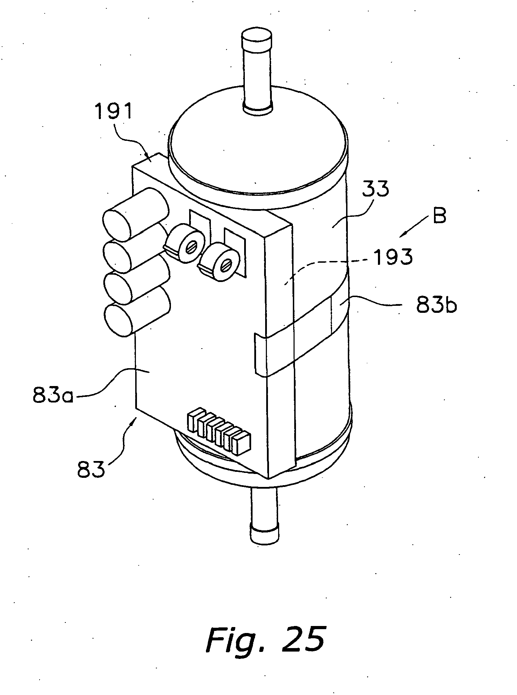

FIG. 25 is a perspective diagram showing a state where the second electrical equipment unit pertaining to modification 2 (when the heat storage material is disposed on the accumulator) is attached to the accumulator.

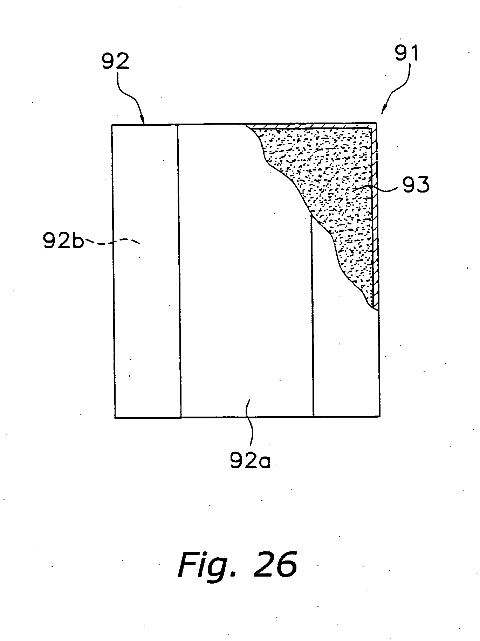

FIG. 26 is a diagram where the heat storage body is seen from the direction of B in FIG. 25 (shown with part being broken out).

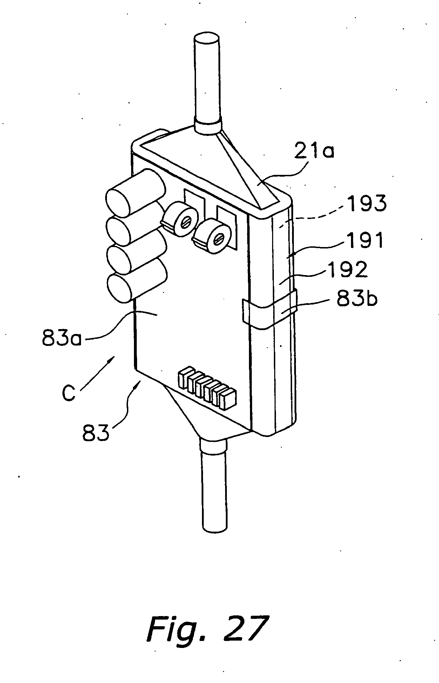

FIG 27 is a perspective diagram showing a state where the second electrical equipment unit pertaining to modification 2 (when the heat storage material is disposed on the suction plate pipe) is attached to the suction plate pipe.

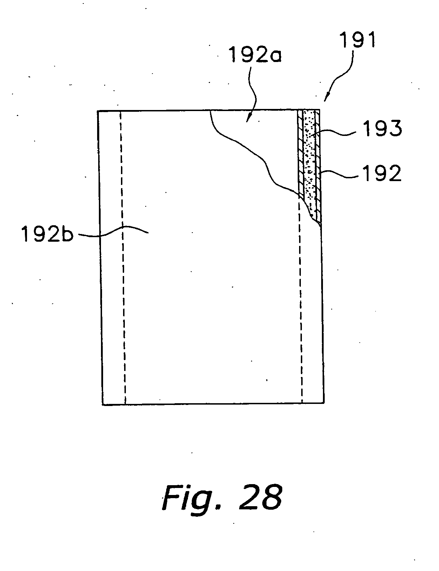

FIG. 28 is a diagram where the heat storage body is seen from the direction of C in FIG. 27 (shown with part being broken out).

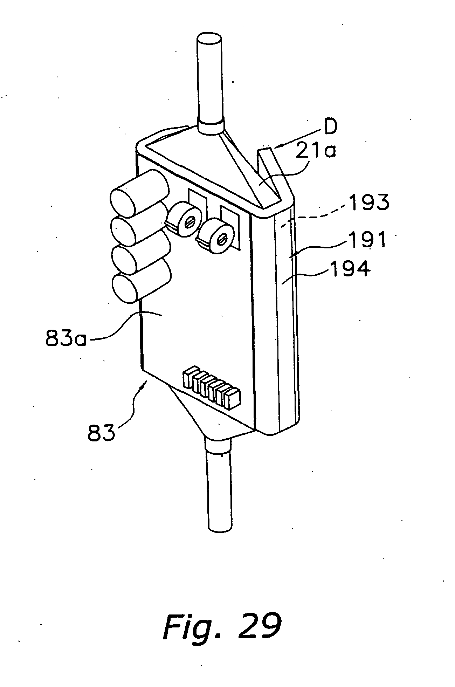

FIG. 29 is a diagram showing a heat storage body capable of being wrapped around the suction plate pipe.

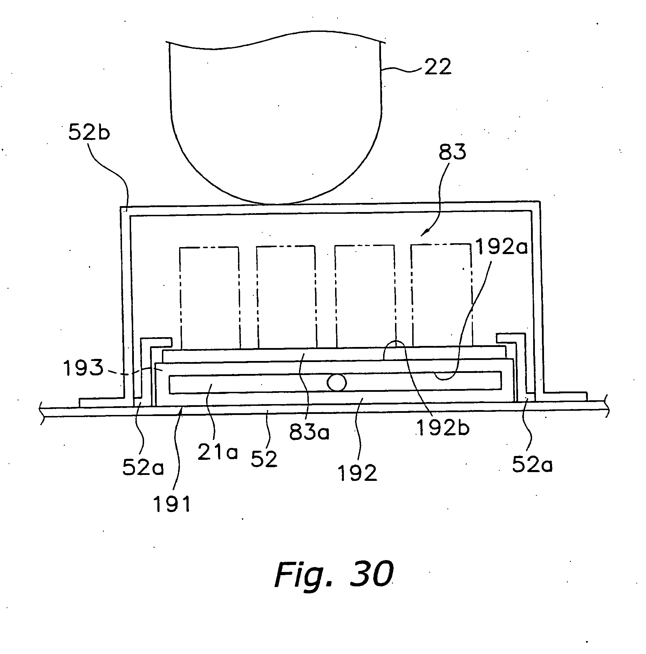

FIG. 30 is a front diagram showing a structure that attaches the suction plate pipe, the heat storage material and the second electrical equipment unit between the compressor and the bottom plate of the unit casing in the vertical direction.

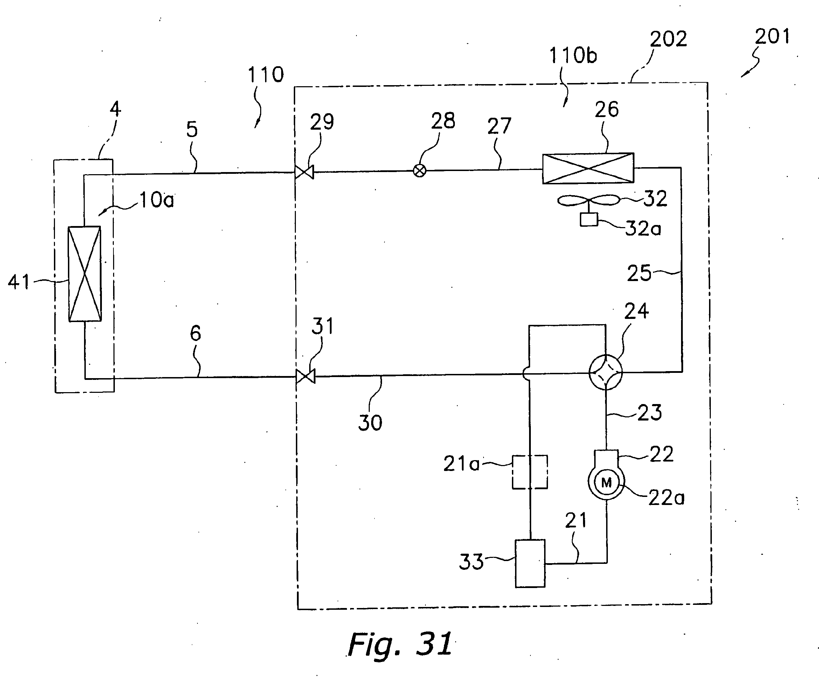

FIG. 31 is a general refrigerant circuit diagram of an air conditioner where an outdoor unit of an air conditioner pertaining to a third aspect is employed.

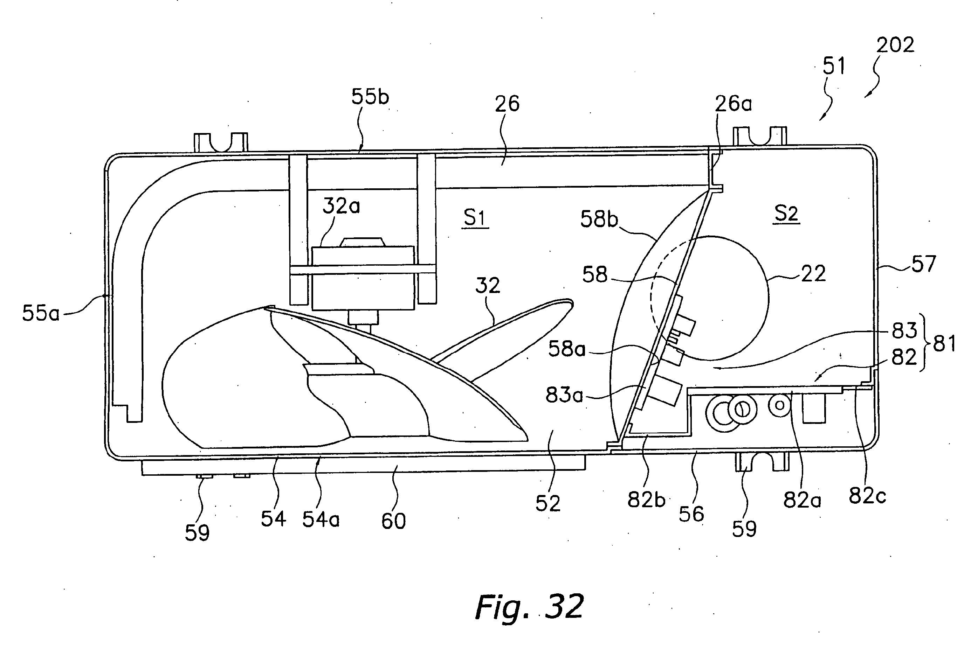

FIG. 32 is a plan diagram of the outdoor unit (shown excluding the top plate and refrigerant circuit components).

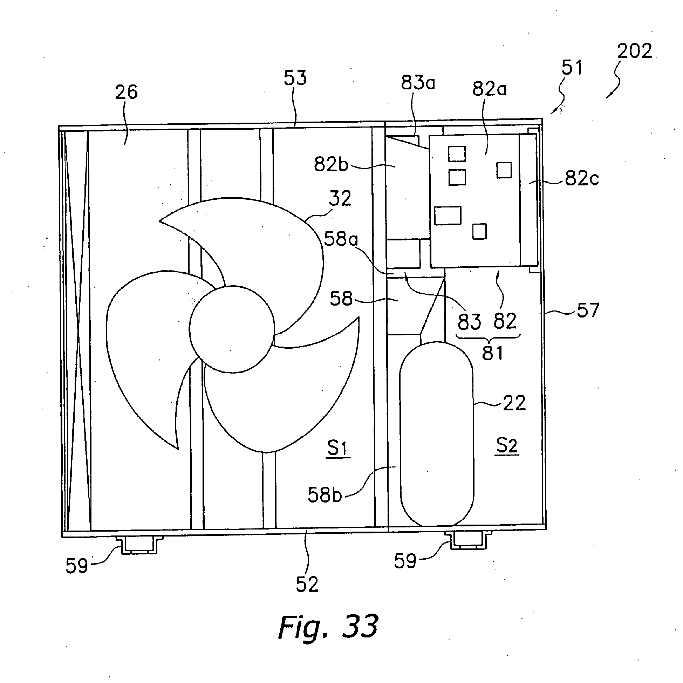

FIG. 33 is a front diagram of the outdoor unit (shown excluding the left and right front plates and refrigerant circuit components).

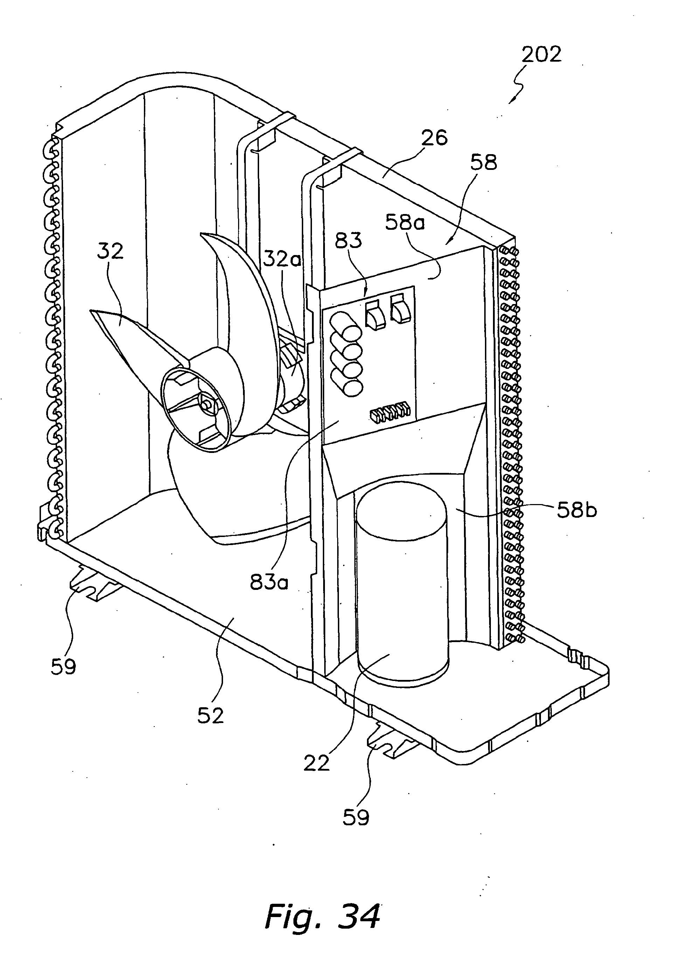

FIG. 34 is a perspective diagram where the outdoor unit is seen diagonally from the right and front (shown excluding the top plate, the front plates, the side plate, refrigerant circuit components, and the first electrical equipment unit).

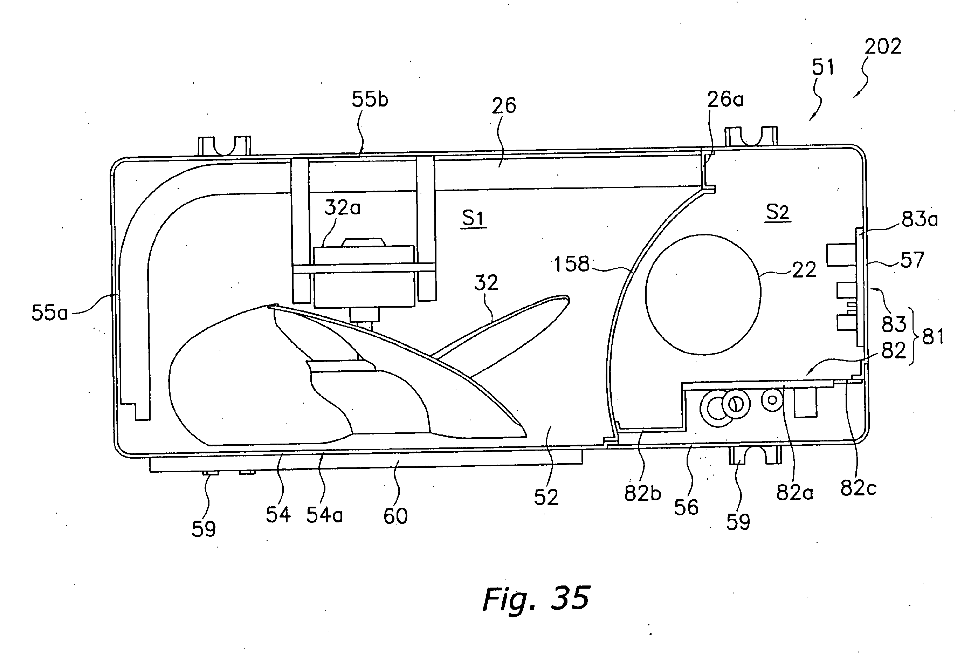

FIG. 35 is a plan diagram of the outdoor unit pertaining to modification 1 (when the second electrical equipment unit is brought into contact with the inner surface of a side surface of the unit casing).

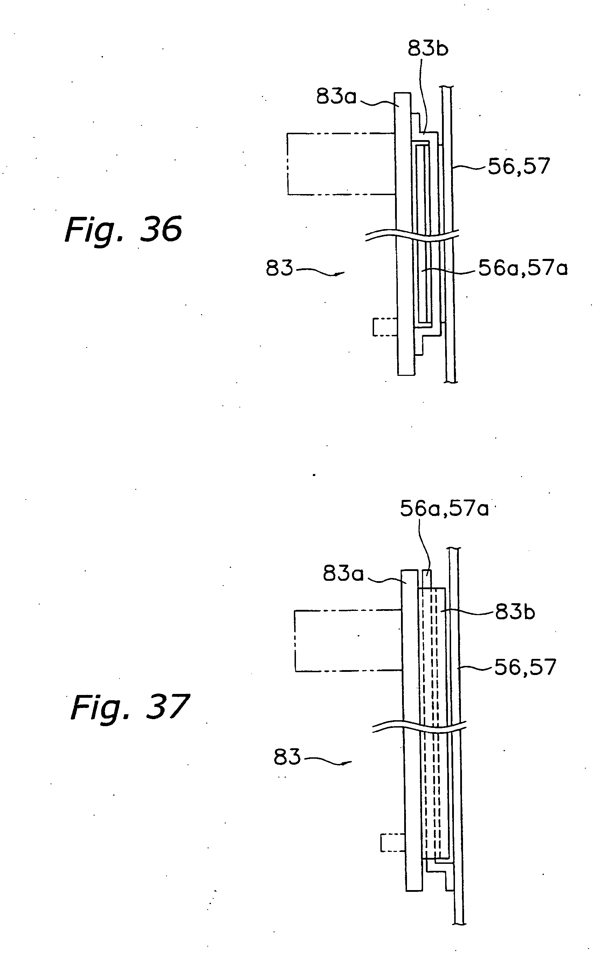

FIG. 36 is a plan diagram showing a structure that attaches the second electrical equipment unit to the right side plate or the right front plate of the unit casing.
FIG. 37 is a front diagram or a side diagram showing a structure that attaches the second electrical equipment unit to the right side plate or the right front plate of the unit casing.

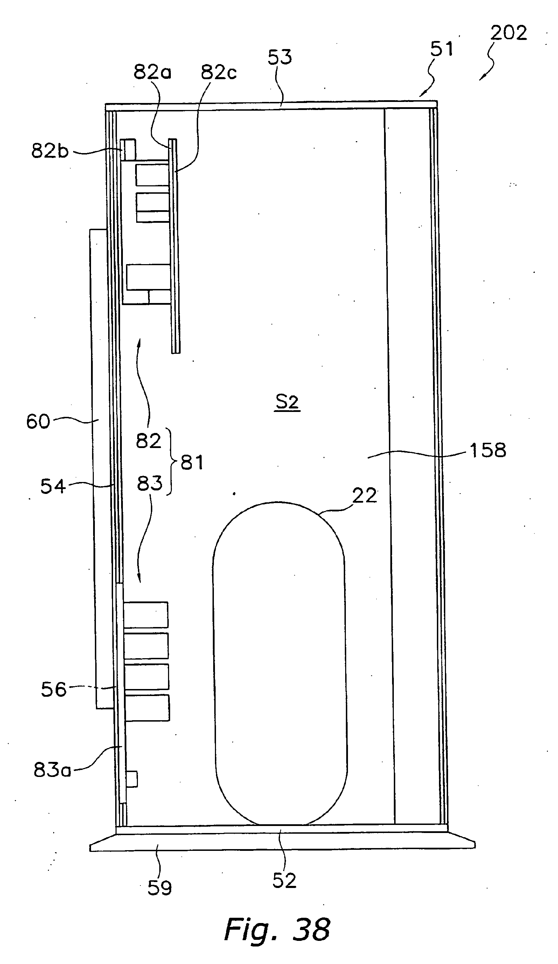

FIG. 38 is a right side diagram of the outdoor unit pertaining to modification 1 (when the second electrical equipment unit is brought into contact with the inner surface of a front surface of the unit casing).

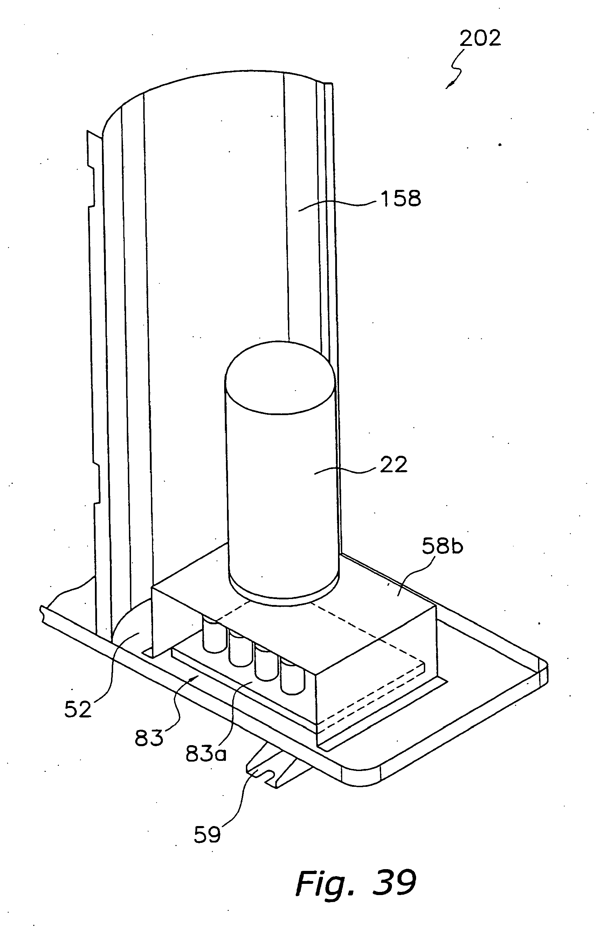

FIG. 39 is a partial perspective diagram where the outdoor unit pertaining to modification 1 (when the second electrical equipment unit is brought into contact with the inner surface of the bottom surface of the unit casing) is seen diagonally from right and front (shown excluding the top plate, the front plates, the side plate, refrigerant circuit components, and the first electrical equipment unit).

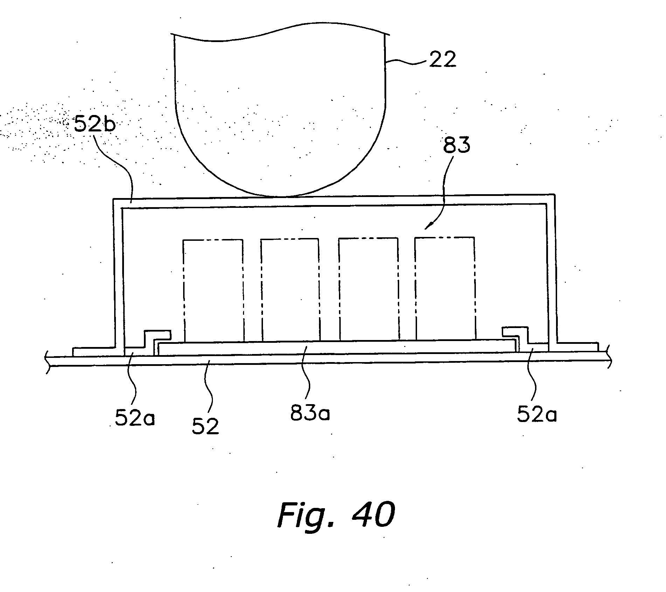

FIG. 40 is a front diagram showing a structure that attaches the second electrical equipment unit between the compressor and the bottom plate of the unit casing in the vertical direction.

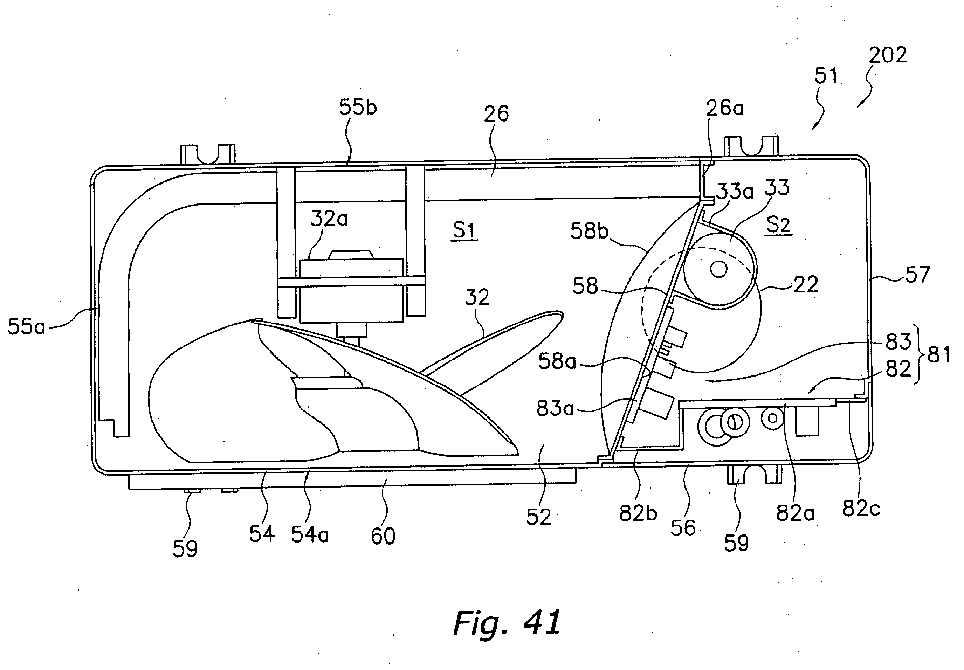

FIG. 41 is a plan diagram of the outdoor unit pertaining to modification 2 (when the accumulator is brought into contact with a machine chamber side surface of a partition plate) (shown excluding the top plate and refrigerant circuit components other than the accumulator).

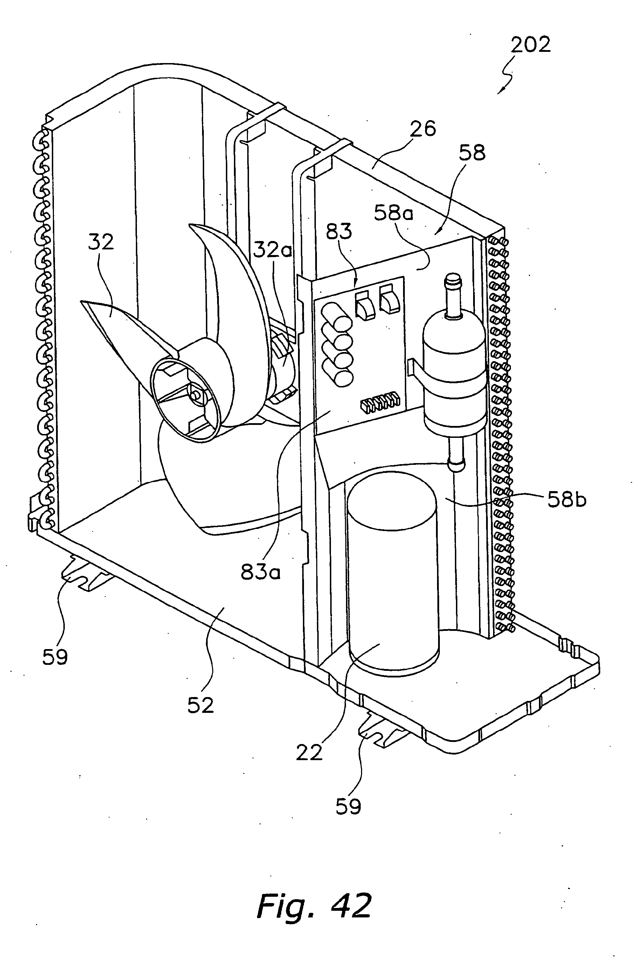

FIG. 42 is a perspective diagram where the outdoor unit pertaining to modification 2 (when the accumulator is brought into contact with the machine chamber side surface of the partition plate) is seen diagonally from right and front (shown excluding the top plate, the front plates, the side plate, refrigerant circuit components other than the accumulator, and the first electrical equipment unit).

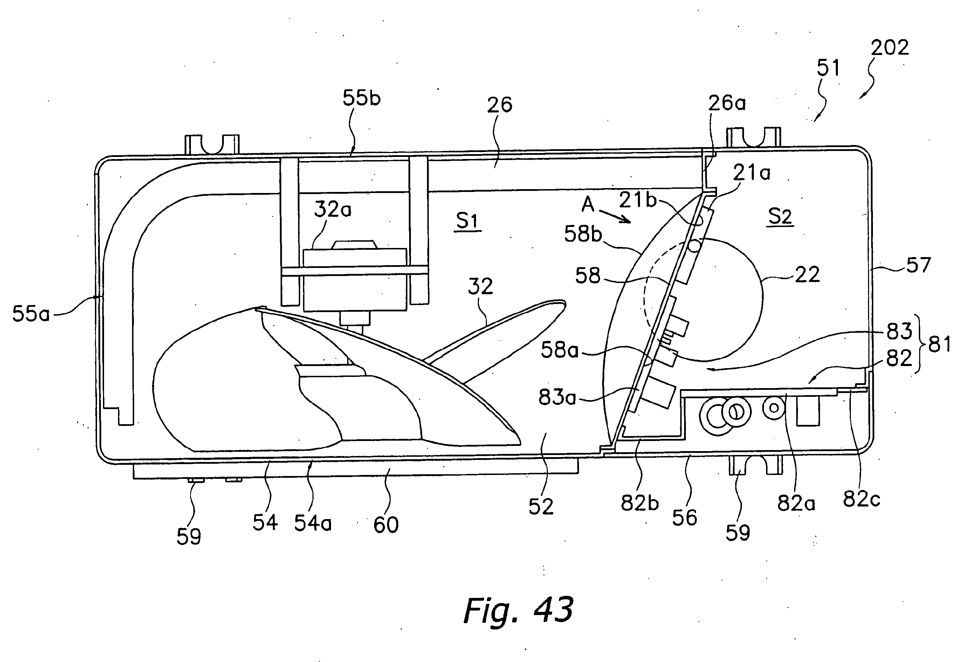

FIG 43 is a plan diagram of the outdoor unit pertaining to modification 2 (when the suction plate pipe is brought into contact with the machine chamber side surface of the partition plate) (shown excluding the top plate and refrigerant circuit components other than the suction plate pipe).

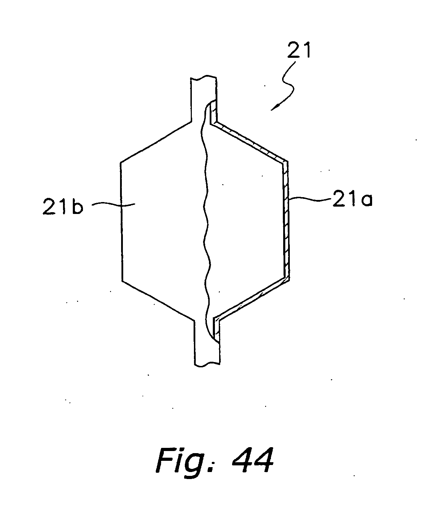

FIG. 44 is a diagram where the suction plate pipe is seen from the direction of A in FIG. 43 (shown with part being broken out).

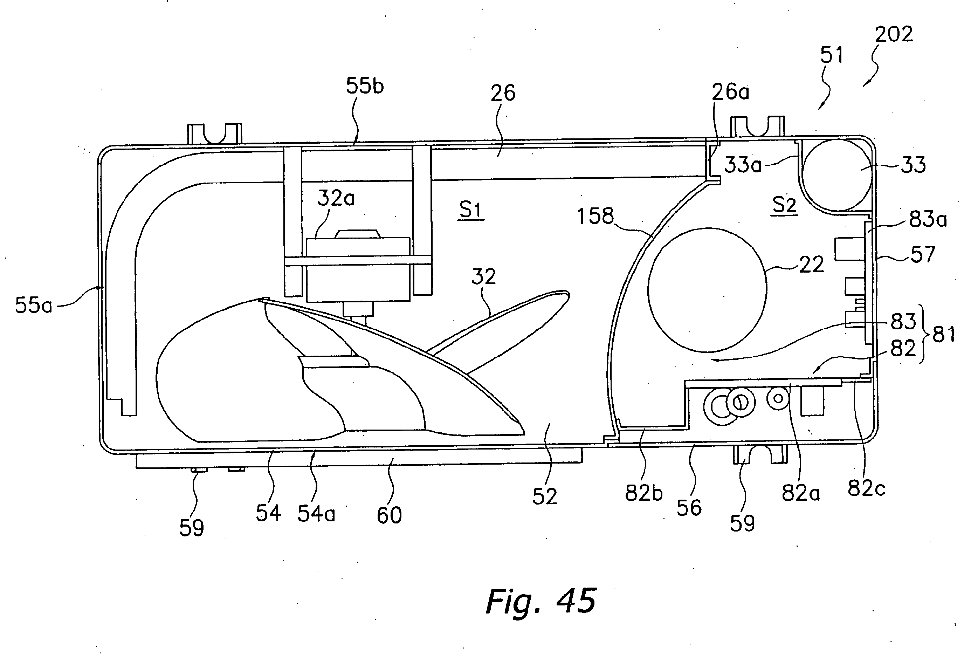

FIG. 45 is a plan diagram of the outdoor unit pertaining to modification 2 (when the accumulator is brought into contact with the inner surface of the right side surface of the unit casing) (shown excluding the top plate and refrigerant circuit components other than the accumulator).

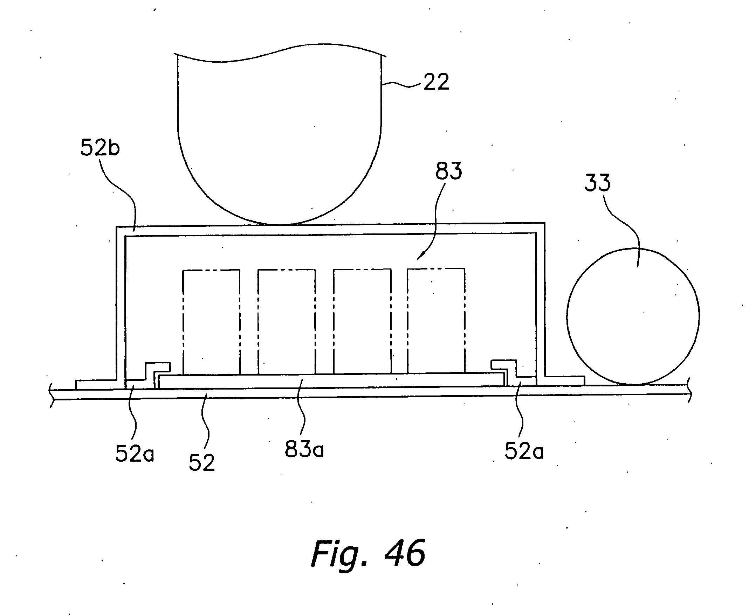

FIG. 46 is a front diagram showing a structure where the second electrical equipment unit is attached between the compressor and the bottom plate of the unit casing in the vertical direction and where the accumulator is installed in the vicinity thereof.

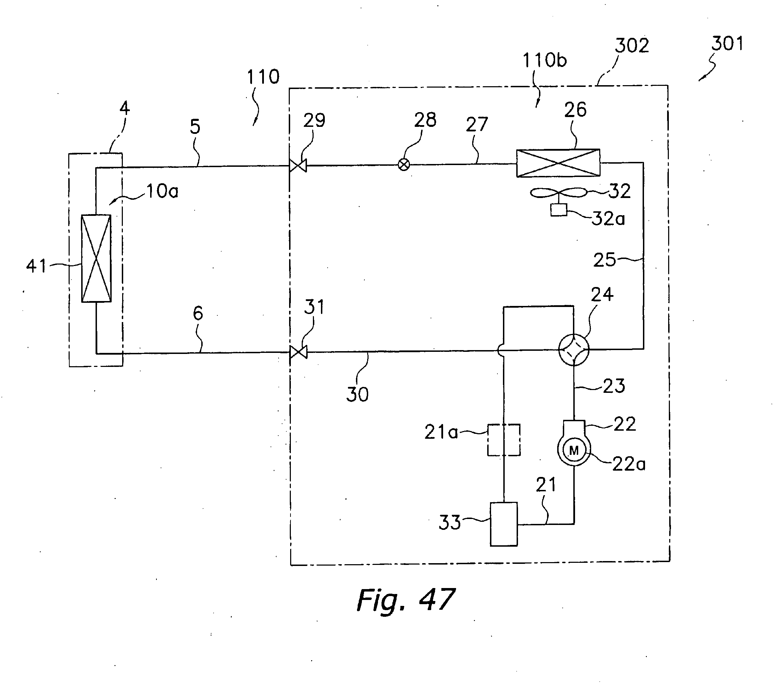

FIG. 47 is a general refrigerant circuit diagram of an air conditioner where an outdoor unit of an air conditioner pertaining to a fourth aspect is employed.

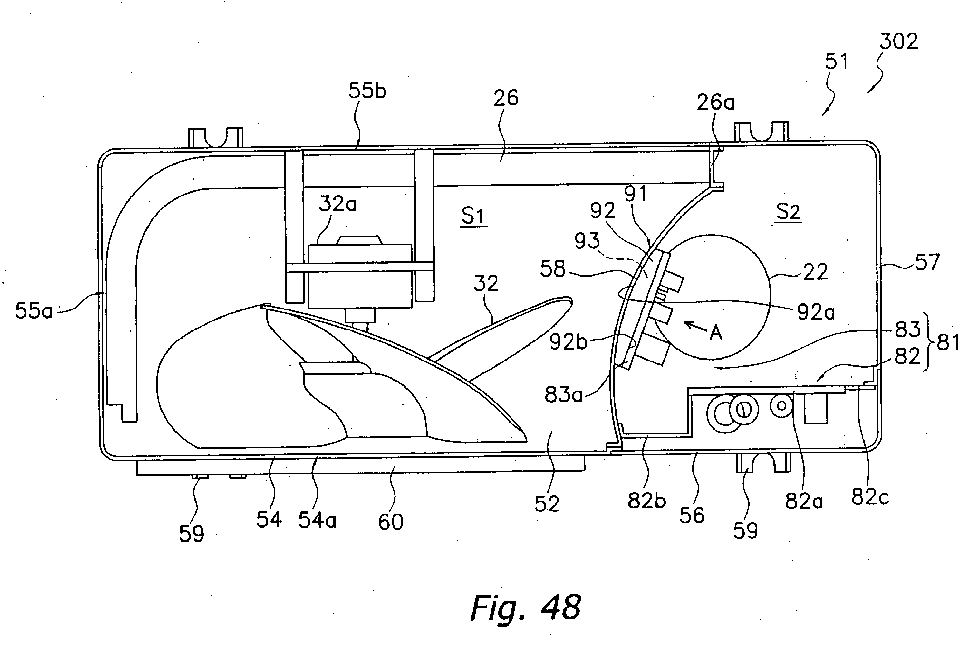

FIG. 48 is a plan diagram of the outdoor unit (shown excluding the top plate and refrigerant circuit components).

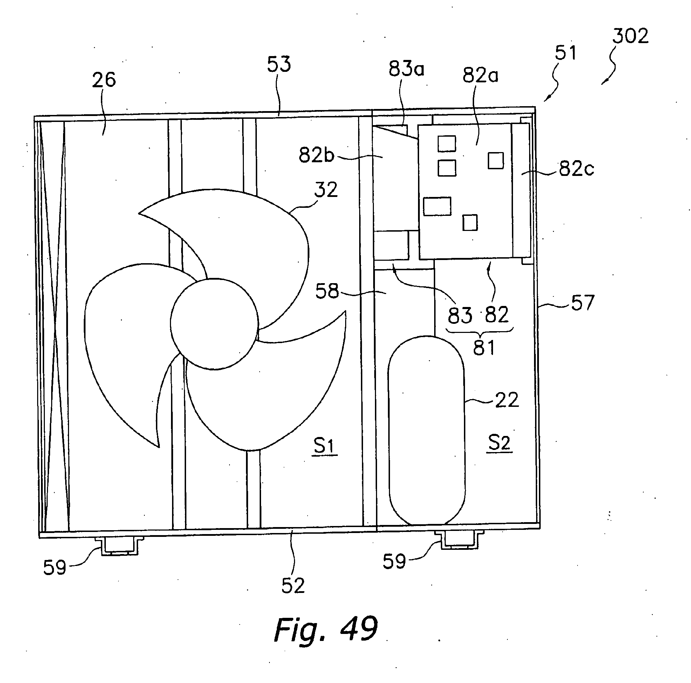

FIG. 49 is a front diagram of the outdoor unit (shown excluding the left and right front plates and refrigerant circuit components).

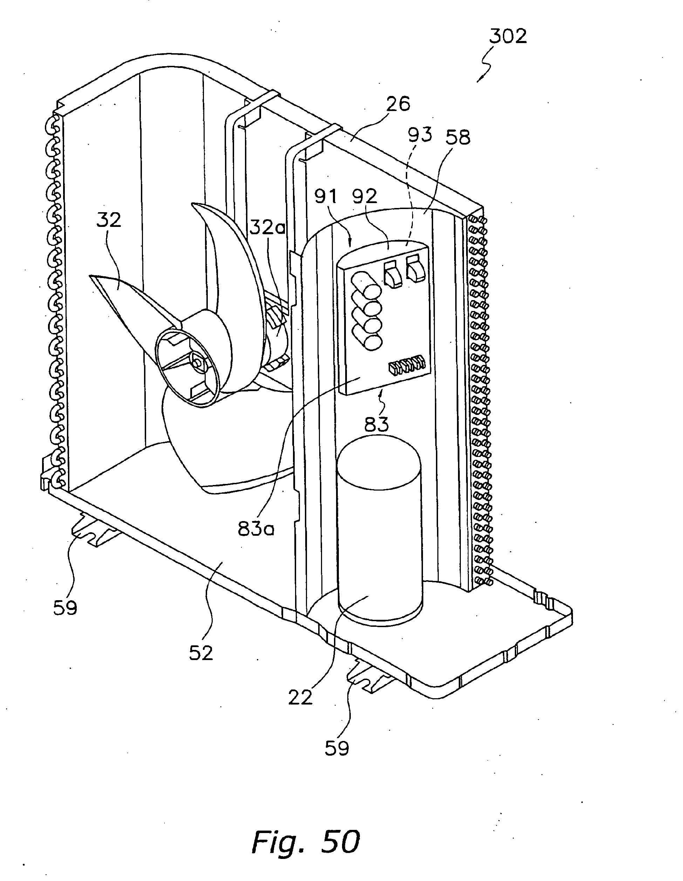

FIG. 50 is a perspective diagram where the outdoor unit is seen diagonally from the right and front (shown excluding the top plate, the front plates, the side plate, refrigerant circuit components, and the first electrical equipment unit).

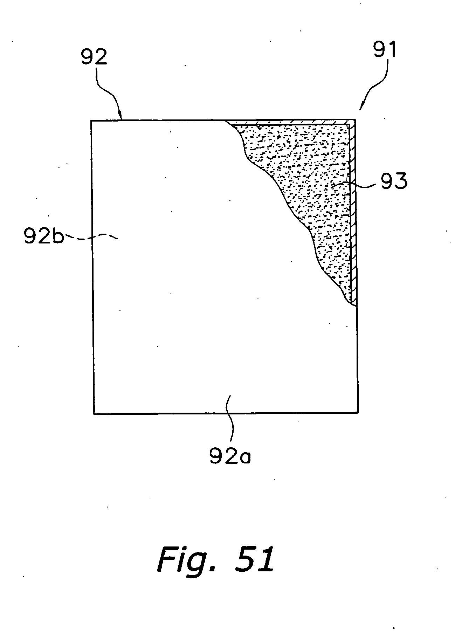

FIG. 51 is a diagram where the heat storage body is seen from the direction of A in FIG. 48,

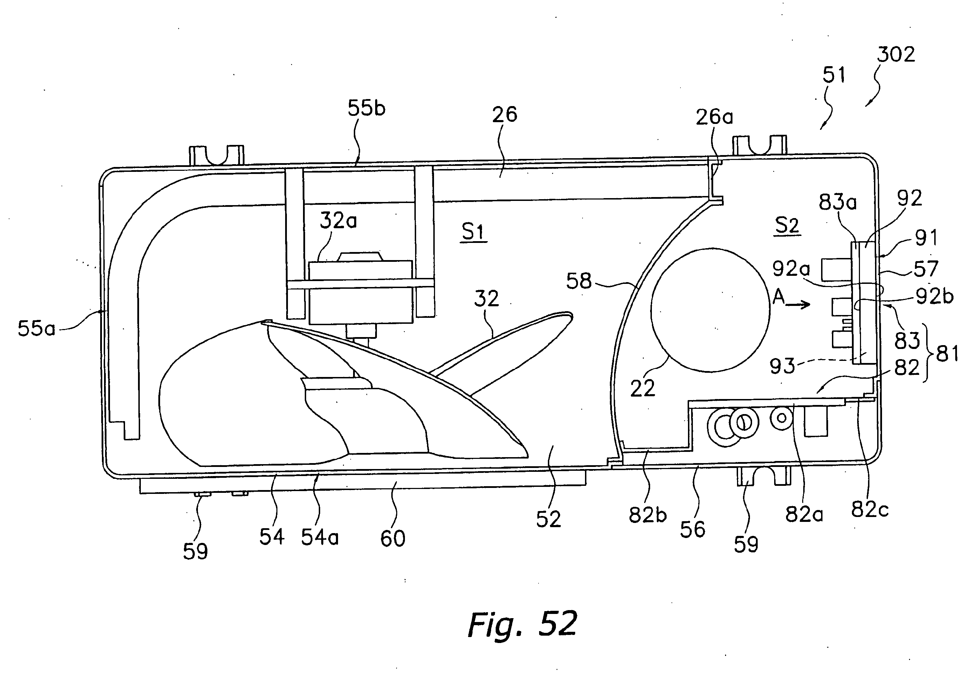

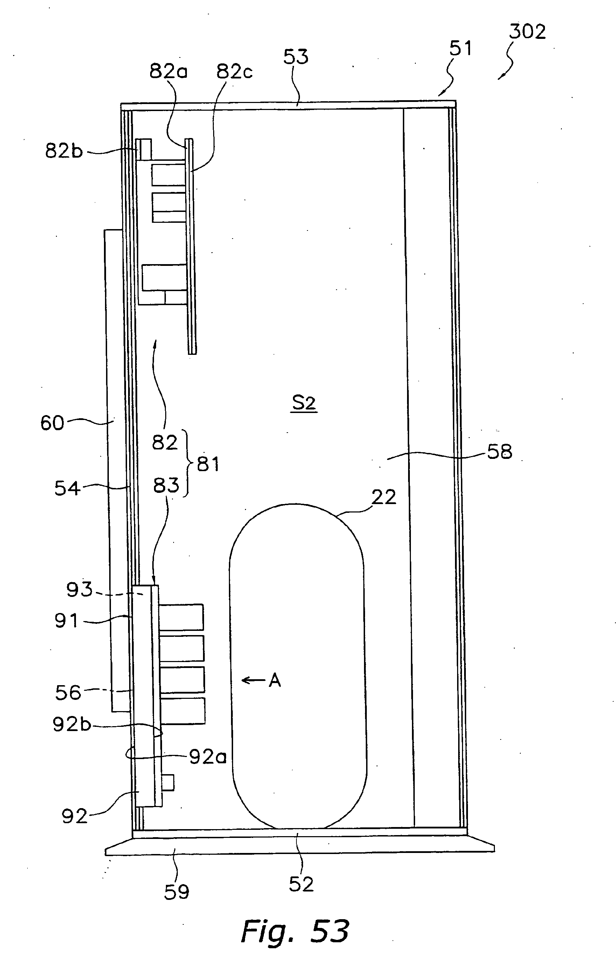

FIG. 52 and FIG. 53 (shown with part being broken out).
FIG. 52 is a plan diagram of the outdoor unit pertaining to modification 1 (when the heat storage body is brought into contact with the inner surface of a side surface of the unit casing).
FIG. 53 is a right side diagram of the outdoor unit pertaining to modification 1 (when the heat storage body is brought into contact with the inner surface of a front surface of the unit casing).

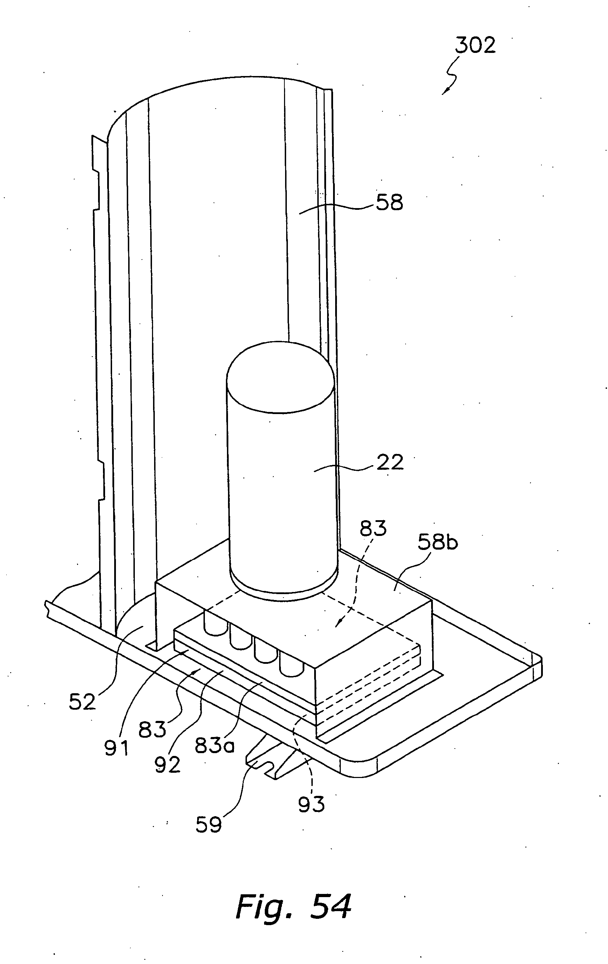

FIG 54 is a partial perspective diagram where the outdoor unit pertaining to modification 1 (when the heat storage body is brought into contact with the inner surface of the bottom surface of the unit casing) is seen diagonally from the right and front (shown excluding the top plate, the front plates, the side plate, refrigerant circuit components, and the first electrical equipment unit).

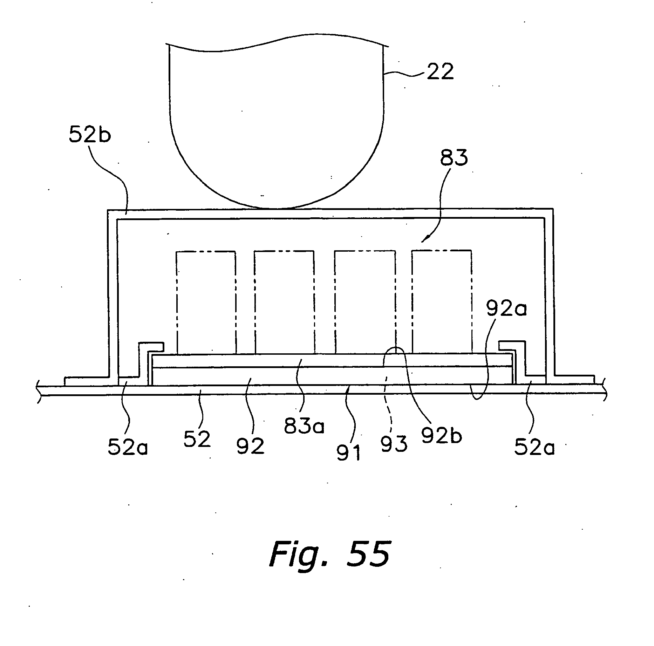

FIG. 55 is a front diagram showing a structure that attaches the second electrical equipment unit and the heat storage body between the compressor and the bottom plate of the unit casing in the vertical direction.

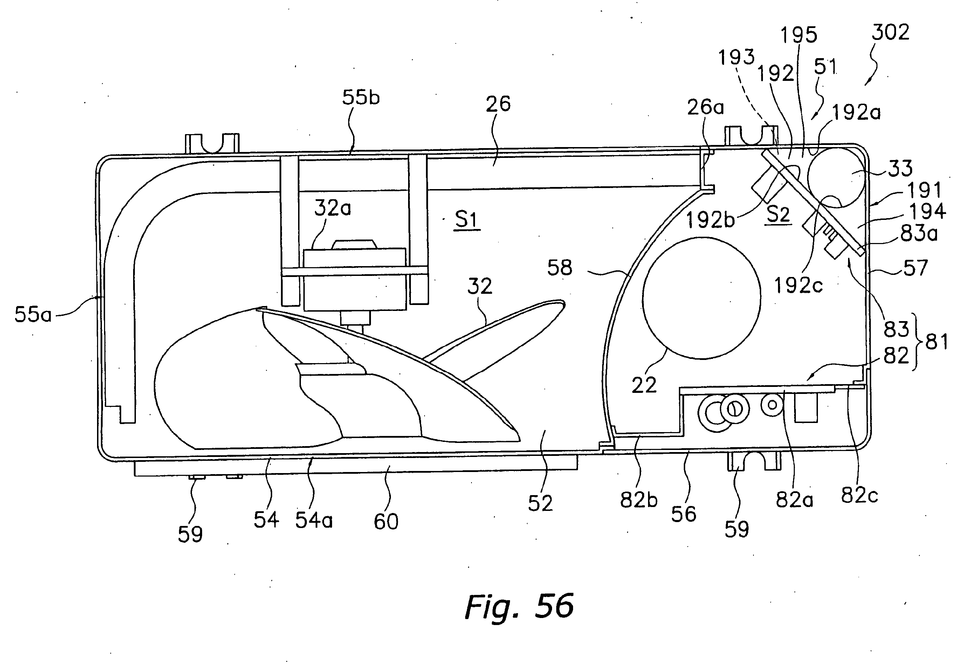

FIG. 56 is a plan diagram of the outdoor unit pertaining to modification 2 (when the accumulator is disposed in a corner portion of the right side plate and the heat storage body is brought into contact with the accumulator) (shown excluding the top plate and refrigerant circuit components other than the accumulator).

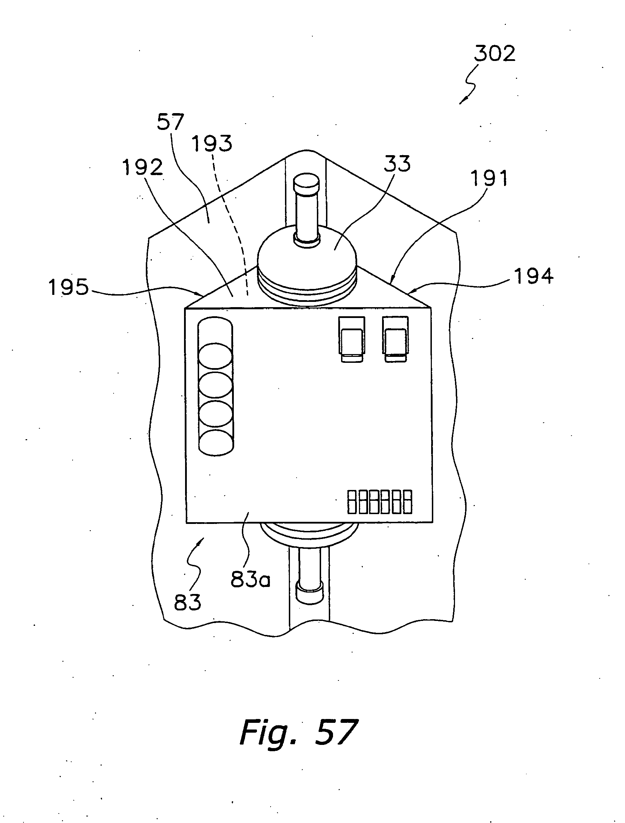

FIG. 57 is a perspective diagram showing the vicinity of the second electrical equipment unit pertaining to modification 2 (when the accumulator is disposed in the corner portion of the right side plate and the heat storage body is brought into contact with the accumulator).

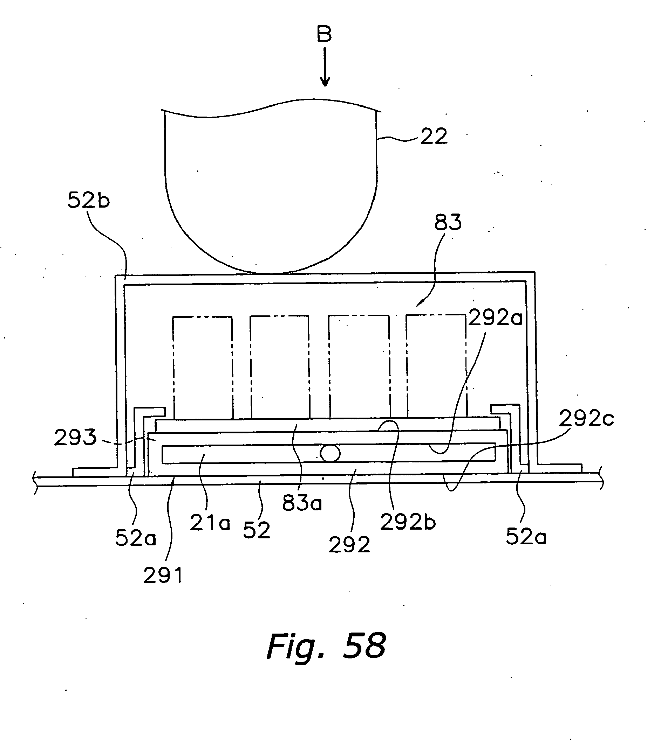

FIG. 58 is a front diagram showing a structure that attaches the suction plate pipe, the heat storage body and the second electrical equipment unit between the compressor and the bottom plate of the unit casing in the vertical direction.

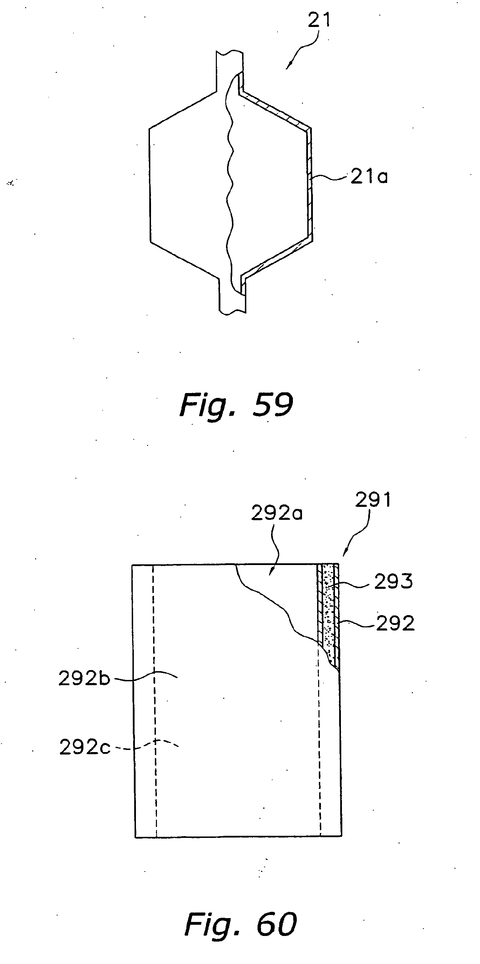

FIG. 59 is a diagram where the suction plate pipe is seen from the direction of B in FIG. 58 (shown with part being broken out).
FIG. 60 is a diagram where the heat storage body is seen from the direction of B in FIG. 58 (shown with part being broken out).

### DESCRIPTION OF THE REFERENCE NUMERALS

- 2, 102, 202, 302: Outdoor Units
- 5: Liquid Refrigerant Communication Pipe (Refrigerant Communication Pipe)
- 6: Gas Refrigerant Communication Pipe (Refrigerant Communication Pipe)
- 10, 110: Refrigerant Circuits
- 21a: Suction Plate Pipe
- 22: Compressor
- 26: Outdoor Heat Exchanger
- 32: Outdoor Fan
- 33: Accumulator
- 36: Receiver
- 39a: High Pressure Plate Pipe
- 51: Unit Casing (Casing)
- 52: Bottom Plate
- 58, 158: Partition Plates
- 83: Second Electrical Equipment Unit (Inverter Board)
- 91, 191, 291: Heat Storage Bodies
- S₁: Blower Chamber
- S₂: Machine Chamber

### BEST MODE FOR CARRYING OUT THE INVENTION

Embodiments of an outdoor unit of an air conditioner pertaining to the present invention will be described below on the basis of the drawings.

### <First Embodiment>

### (1) Configuration of Refrigerant Circuit of Air Conditioner

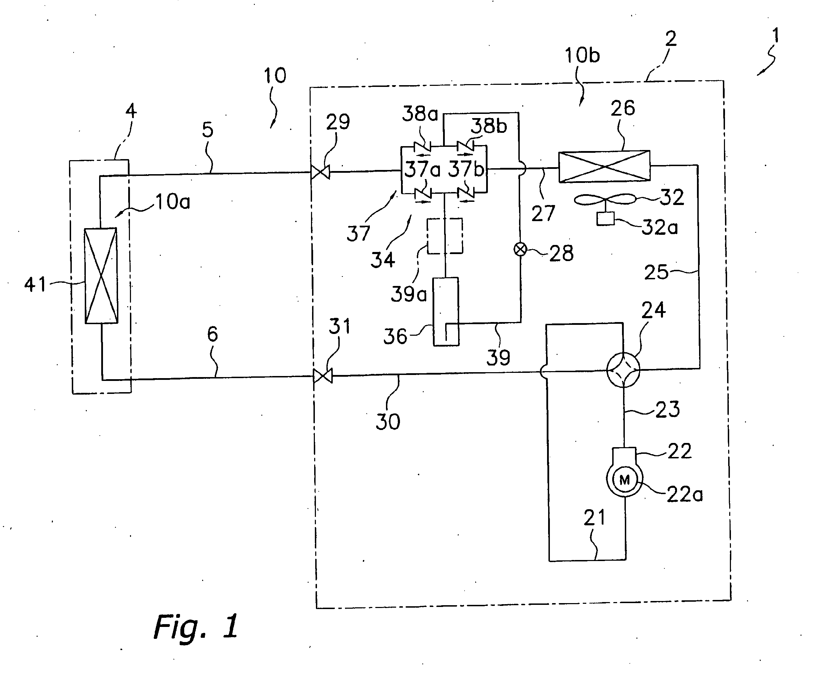

FIG. 1 is a general refrigerant circuit diagram of an air conditioner 1 where an outdoor unit of an air conditioner pertaining to a first embodiment of the present invention is employed. The air conditioner 1 is a so-called separate type air conditioner, is mainly disposed with an outdoor unit 2, an indoor unit 4, and a liquid refrigerant communication pipe 5 and a gas refrigerant communication pipe 6 that interconnect the outdoor unit 2 and the indoor unit 4, and configures a vapor compression type refrigerant circuit 10.

### <Configuration of Refrigerant Circuit of Indoor Unit>

The indoor unit 4 is installed indoors and disposed with an indoor refrigerant circuit 10a that configures part of the refrigerant circuit 10. The indoor refrigerant circuit 10a mainly includes an indoor heat exchanger 41.

The indoor heat exchanger 41 comprises a cross fin type fin-and-tube heat exchanger configured by a heat transfer tube and numerous fins, for example, and is a heat exchanger that functions as an evaporator of refrigerant to cool the indoor air during cooling operation and functions as a condenser of refrigerant to heat the indoor air during heating operation.
A liquid side of the indoor heat exchanger 41 is connected to the liquid refrigerant communication pipe 5, and a gas side of the indoor heat exchanger 41 is connected to the gas refrigerant communication pipe 6.

### <Configuration of Refrigerant Circuit of Outdoor Unit>

The outdoor unit 2 is installed outdoors and disposed with an outdoor refrigerant circuit 10b that configures part of the refrigerant circuit 10. The outdoor refrigerant circuit 10b mainly includes a compressor 22, a four-way switch valve 24, an outdoor heat exchanger 26, an expansion circuit 34, a liquid close valve 29, and a gas close valve 31. A suction opening of the compressor 22 and the four-way switch valve 24 are interconnected by a suction pipe 21. A discharge opening of the compressor 22 and the four-way switch valve 24 are interconnected by a discharge pipe 23. The four-way switch valve 24 and a gas side of the outdoor heat exchanger 26 are interconnected by a first gas refrigerant pipe 25. The outdoor heat exchanger 26 and the liquid close valve 29 are interconnected by a liquid refrigerant pipe 27. Additionally, the expansion circuit 34 is disposed in the liquid refrigerant pipe 27. Additionally, the liquid close valve 29 is connected to the liquid refrigerant communication pipe 5. The four-way switch valve 24 and the gas close valve 31 are interconnected by a second gas refrigerant pipe 30. Additionally, the gas close valve 31 is connected to the gas refrigerant communication pipe 6.

The compressor 22 is a positive displacement type compressor that includes the function of sucking in low pressure gas refrigerant from the suction pipe 21, compressing the low pressure gas refrigerant into high pressure gas refrigerant, and then discharging the high pressure gas refrigerant into the discharge pipe 23.

The four-way switch valve 24 is a valve for switching the direction of the flow of the refrigerant when switching between cooling operation and heating operation such that, during cooling operation, the four-way switch valve 24 is capable of interconnecting the discharge pipe 23 and the first gas refrigerant pipe 25 and also interconnecting the suction pipe 21 and the second gas refrigerant pipe 30, and such that, during heating operation, the four-way switch valve 24 is capable of interconnecting the discharge pipe 23 and the second gas refrigerant pipe 30 and also interconnecting the suction pipe 21 and the first gas refrigerant pipe 25.

The outdoor heat exchanger 26 comprises a cross fin type fin-and-tube heat exchanger configured by a heat transfer tube and numerous fins, for example, and is a heat exchanger that functions as a condenser of refrigerant using the outdoor air as a heat source during cooling operation and functions as an evaporator of refrigerant using the outdoor air as a heat source during heating operation.

The expansion circuit 34 is configured by a bridge circuit 37 and a communication pipe 39 that is connected to the bridge circuit 37. The bridge circuit 37 is connected to the liquid refrigerant pipe 27 and is capable of allowing the refrigerant to flow from one of the liquid close valve 29 side of the liquid refrigerant pipe 27 and the outdoor heat exchanger 26 side of the liquid refrigerant pipe 27 to the other of the liquid close valve 29 side of the liquid refrigerant pipe 27 and the outdoor heat exchanger 26 side of the liquid refrigerant pipe 27 via the communication pipe 39. Specifically, during cooling operation, the bridge circuit 37 is capable of allowing the refrigerant from the outdoor heat exchanger 26 side of the liquid refrigerant pipe 27 to flow into the communication pipe 39 and then allowing the refrigerant to flow through the liquid close valve 29 side of the liquid refrigerant pipe 27 via the communication pipe 39. Further, during heating operation, the bridge circuit 37 is capable of allowing the refrigerant from the liquid close valve 29 side of the liquid refrigerant pipe 27 to flow into the communication pipe 39 and then allowing the refrigerant to flow through the outdoor heat exchanger 26 side of the liquid refrigerant pipe 27 via the communication pipe 39.

The bridge circuit 37 is a circuit mainly comprising four check valves 37a, 37b, 38a and 38b. The inlet check valve 37a allows only flow of the refrigerant from the liquid close valve 29 side of the liquid refrigerant pipe 27 to the communication pipe 39. The inlet check valve 37b allows only flow of the refrigerant from the outdoor heat exchanger 26 side of the liquid refrigerant pipe 27 to the communication pipe 39. The inlet check valves 37a and 37b include the function of allowing the refrigerant to flow from one of the liquid close valve 29 side of the liquid refrigerant pipe 27 and the outdoor heat exchanger 26 side of the liquid refrigerant pipe 27 to the communication pipe 39. The outlet check valve 38a allows only flow of the refrigerant from the communication pipe 39 to the liquid close valve 29 side of the liquid refrigerant pipe 27. The outlet check valve 38b allows only flow of the refrigerant from the communication pipe 39 to the outdoor heat exchanger 26 side of the liquid refrigerant pipe 27. The outlet check valves 38a and 38b include the function of allowing the refrigerant to flow from the communication pipe 39 to the other of the gas close valve 29 side of the liquid refrigerant pipe 27 and the outdoor heat exchanger 26 side of the liquid refrigerant pipe 27.

Mainly disposed in the communication pipe 39 are a receiver 36 for temporarily storing high pressure liquid refrigerant and an expansion valve 28 that is connected to an outlet of the receiver 36. The expansion valve 28 is an electrically powered expansion valve capable of depressurizing high pressure liquid refrigerant during cooling operation and during heating operation.

Because of the expansion circuit 34, during cooling operation, high pressure liquid refrigerant condensed in the outdoor heat exchanger 26 is sent from the outdoor heat exchanger 26 side of the liquid refrigerant pipe 27 to the electrically powered valve 28 through the order of the inlet check valve 37b, the communication pipe 39 and the receiver 36, is depressurized by the electrically powered valve 28, and is then sent to the indoor heat exchanger 41 through the outlet check valve 38a, the liquid close valve 29 side of the liquid refrigerant pipe 27, the liquid close valve 29 and the liquid refrigerant communication pipe 5. Further, during heating operation, high pressure liquid refrigerant condensed in the indoor heat exchanger 41 is sent to the liquid refrigerant pipe 27 through the liquid refrigerant communication pipe 5 and the liquid close valve 29, is sent from the liquid close valve 29 side of the liquid refrigerant pipe 27 to the electrically powered valve 28 through the order of the inlet check valve 37a, the communication pipe 39 and the receiver 36, is depressurized, and is then sent to the outdoor heat exchanger 26 through the outlet check valve 38b and the outdoor heat exchanger 26 side of the liquid refrigerant pipe 27. Thus, the outdoor refrigerant circuit 10b has a circuit configuration where, regardless of cooling operation and heating operation, high pressure refrigerant always flows into the communication pipe 39 including the receiver 36, and the high pressure state is maintained until the refrigerant is depressurized by the expansion valve 28.

### (2) Structure of Outdoor Unit

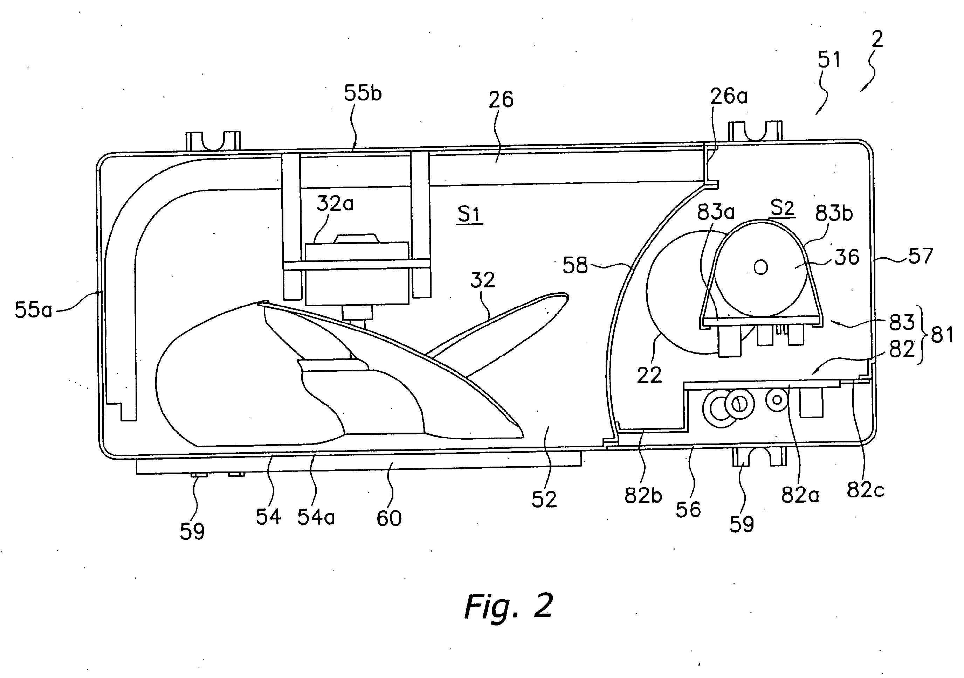

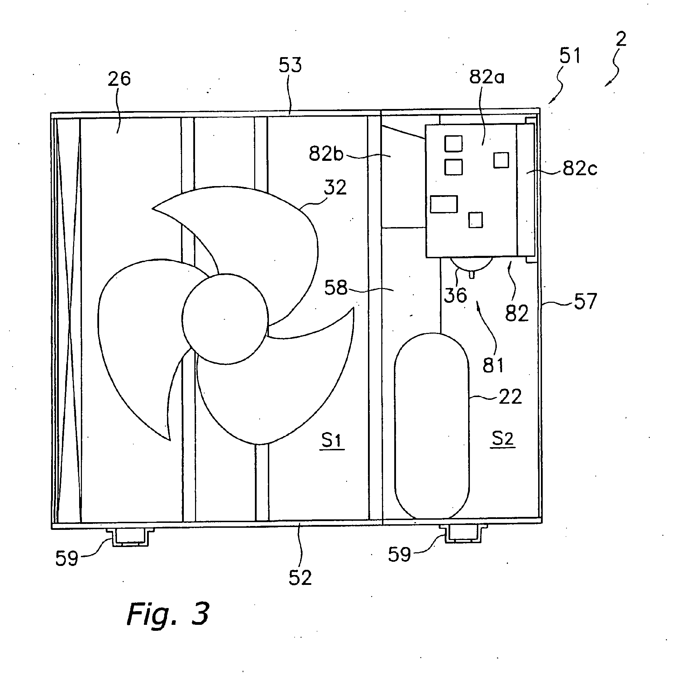

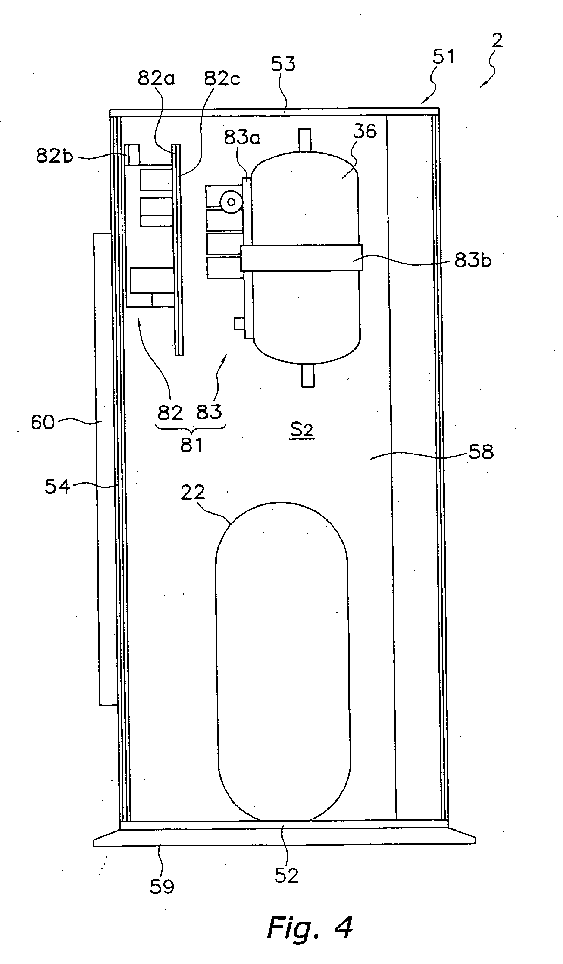

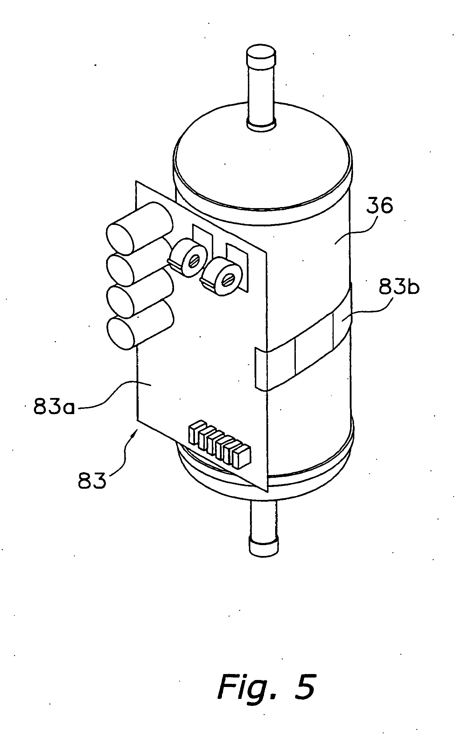

Next, the structure of the outdoor unit 2 disposed with the above-described outdoor refrigerant circuit 10b will be described using FIG. 2 to FIG. 5. Here, FIG. 2 is a plan diagram of the outdoor unit 2 (shown excluding a top plate 53 and refrigerant circuit components other than the receiver 36). FIG. 3 is a front diagram of the outdoor unit 2 (shown excluding left and right front plates 54 and 56 and refrigerant circuit components other than the receiver 36). FIG. 4 is a right side diagram of the outdoor unit 2 (shown excluding the right front plate 56, a right side plate 57, and refrigerant circuit components other than the receiver 36). FIG. 5 is a perspective diagram showing a state where a second electrical equipment unit 83 is attached to the receiver 36. The outdoor unit 2 has a structure (so-called trunk type structure) where the inside of a substantially rectangular parallelepiped box-shaped unit casing 51 is divided into a blower chamber S₁ and a machine chamber S₂ by a partition plate 58 extending vertically, and is mainly disposed with the substantially box-shaped unit casing 51, the outdoor heat exchanger 26, an outdoor fan 32, the compressor 22, refrigerant circuit components (see FIG. 1) that configure the outdoor refrigerant circuit 10b together with the outdoor heat exchanger 26 and the compressor 22, and an electrical equipment unit 81 that performs control of the operation of the outdoor unit 2.

### <Unit Casing>

The unit casing 51 is mainly disposed with a bottom plate 52, the top plate 53, the left front plate 54, the right front plate 56, the right side plate 57, and the partition plate 58.

The bottom plate 52 is a plate-shaped member that is made of metal, has a horizontally long substantially rectangular shape, and configures the bottom surface portion of the unit casing 51. The peripheral edge portion of the bottom plate 52 is bent upward. Two fixed legs 59 fixed to an on-site installation surface are disposed on the outer surface of the bottom plate 52. The fixed legs 59 are plate-shaped members that are made of metal, are substantially U-shaped when the unit casing 51 is seen in front view, and extend from the front side of the unit casing 51 to the rear side.

The top plate 53 is a plate-shaped member that is made of metal, has a horizontally long substantially rectangular shape, and configures the top surface portion of the outdoor unit 2.

The left front plate 54 is a plate-shaped member that is made of metal and mainly configures the left front surface portion and the left side surface portion of the unit casing 51, and the lower portion thereof is fixed to the bottom plate 52 by screws or the like. A suction opening 55a for air sucked inside the unit casing 51 by the outdoor fan 32 is formed in the left front plate 54. Further, a blowout opening 54a for blowing out, to the outside, air that has been taken into the inside from the rear surface side and the left side surface side of the unit casing 51 by the outdoor fan 32 is disposed in the left front plate 54. A fan grill 60 is disposed in the blowout opening 54a.

The right front plate 56 is a plate-shaped member that is made of metal and mainly configures the right front surface portion and the front portion of the right side surface of the unit casing 51, and the lower portion thereof is fixed to the bottom plate 52 by screws or the like. Further, the left end portion of the right front plate 56 is fixed to the right end portion of the left front plate 54 by screws or the like.

The right side plate 57 is a plate-shaped member that is made of metal and mainly configures the rear portion of the right side surface and the right rear surface portion of the unit casing 51, and the lower portion thereof is fixed to the bottom plate 52 by screws or the like. Additionally, a suction opening 55b for air sucked inside the unit casing 51 by the outdoor fan 32 is formed between the rear end portion of the left front plate 54 and the rear surface side end portion of the right side plate 57 in the left-right direction.

The partition plate 58 is a plate-shaped member that is made of metal and extends vertically disposed on the bottom plate 52, and is disposed so as to partition the space inside the unit casing 51 into two left and right spaces. The lower portion of the partition plate 58 is fixed to the bottom plate 52 by screws or the like. Further, the right end portion of the left front plate 54 is fixed to the front end portion of the partition plate 58 by screws or the like. Moreover, the rear surface side end portion of the right side plate 57 is fixed to a tube plate 26a of the outdoor heat exchanger 26 by screws or the like.

In this manner, the space inside the unit casing 51 is divided into the blower chamber S₁ and the machine chamber S₂ by the partition plate 58. More specifically, the blower chamber S₁ is a space enclosed by the bottom plate 52, the top plate 53, the left front plate 54 and the partition plate 58, and the outdoor fan 32 and the outdoor heat exchanger 26 are disposed therein. The machine chamber S₂ is a space enclosed by the bottom plate 52, the top plate 53, the right front plate 56, the right side plate 57 and the partition plate 58, and the compressor 22, refrigerant circuit components and the electrical equipment unit 81 are disposed therein. The unit casing 51 is configured such that the inside of the machine chamber S₂ may be seen by removing the right front plate 56.

### <Outdoor Heat Exchanger>

The outdoor heat exchanger 26 is disposed inside the blower chamber S₁ and performs heat exchange with the air that has been taken inside the unit casing 51 by the outdoor fan 32. The outdoor heat exchanger 26 is substantially L-shaped when the unit casing 51 is seen in plan view, and is disposed so as to follow the left side surface of the unit casing 51 to the rear surface. Further, the tube plate 26a is disposed on the right end portion of the outdoor heat exchanger 26.

### <Outdoor Fan>

The outdoor fan 32 is a propeller fan that includes plural blades and is disposed on the front side of the outdoor heat exchanger 26 inside the blower chamber S₁. The outdoor fan 32 is configured such that it is driven to rotate by an outdoor fan motor 32a. When the outdoor fan 32 is driven, air is taken inside through the suction openings 55a and 55b in the rear surface and the left side surface of the unit casing 51 and passes through the outdoor heat exchanger 26, and the air is thereafter blown out to the outside of the unit casing 51 from the blowout opening 54a in the front surface of the unit casing 51.

### <Compressor>

The compressor 22 is a hermetic type compressor that houses a compressor motor 22a (see FIG. 1) inside a housing and is disposed inside the machine chamber S₂. Here, the compressor motor 22a is a so-called inverter type motor whose frequency is capable of being controlled. In the present embodiment, the compressor 22 has an upright circular cylinder shape with a height substantially half the entire height of the unit casing 51, and the lower portion thereof is fixed to the bottom plate 52. Further, when the unit casing 51 is seen in plan view, the compressor 22 is disposed in the vicinity of the center of the unit casing 51 in the front-rear direction and in the vicinity of the partition plate 58 on the right side of the unit casing 51 in the left-right direction.

### <Refrigerant Circuit Components>

The refrigerant circuit components are parts that mainly configure the outdoor refrigerant circuit 10b (excluding the compressor 22 and the outdoor heat exchanger 26) including the suction pipe 21, the discharge pipe 23, the four-way switch valve 24, the first gas refrigerant pipe 25, the liquid refrigerant pipe 27, the expansion circuit 34 (specifically, the expansion valve 28, the receiver 36, the bridge circuit 37 and the communication pipe 39), the liquid close valve 29, the second gas refrigerant pipe 30 and the gas close valve 31. The refrigerant circuit components are mainly disposed on the front side, the upper side, the right transverse side and the rear side of the compressor 22 inside the machine chamber S₂. In the present embodiment, the receiver 36 is a container having an upright circular cylinder shape and is disposed on the upper side of the compressor 22 in the substantial center of the machine chamber S₂ in the front-rear direction and the left-right direction. It will be noted that the disposition of the receiver 36 is not limited to the position in the present embodiment. Further, the electrical equipment unit 81 is attached to the receiver 36, but the details thereof will be described later.

### <Electrical Equipment Unit>

The electrical equipment unit 81 is disposed with various electrical equipment such as an inverter board and a control board including a microcomputer and the like for performing operation control. In the present embodiment, the electrical equipment unit 81 is mainly configured from a first electrical equipment unit 82 and a second electrical equipment unit 83 that are disposed in the space in the upper portion of the machine chamber S₂.

The first electrical equipment unit 82 mainly includes the control board on which are mounted low heat emitting parts -- such as a microcomputer -- whose heat emission amount is small during operation. The first electrical equipment unit 82 is disposed facing the front surface of the unit casing 51 -- that is, the right front plate 56 -- and includes a board body 82a on which the various low heat emitting parts are mounted so as to face frontward and support portions 82b and 82c that are disposed on both side end portions of the board body 82a. The support portion 82b is fixed in the vicinity of the front end portion of the partition plate 58 by screws or claws or the like, and the support portion 82c is fixed to the front end portion of the right side plate 57 by screws or the like. Thus, during maintenance, the first electrical equipment unit 82 can be easily accessed by removing the right front plate 56.

The second electrical equipment unit 83 is mainly an inverter board on which are mounted high heat emitting parts whose heat emission amount is large during operation, including inverter control elements comprising power transistors, diodes and the like, and includes a board body 83a on which the various high heat emitting parts including the inverter control elements are mounted. In the present embodiment, inverter control elements used for inverter control of the compressor motor 22a are mounted on the board body 83a. The second electrical equipment unit 83 is disposed facing the right front plate 56 on the rear side of the first electrical equipment unit 82 and is attached to the receiver 36. More specifically, in the present embodiment, the second electrical equipment unit 83 is detachably attached to the receiver 36 by a band member 83b or the like in a state where the rear surface of the board body 83a, or the various high heat emitting parts including the inverter control elements, contacts the outer peripheral surface of the receiver 36, and cooling fins that project from the partition plate 58 toward the blower chamber S₁ as in a conventional outdoor unit are omitted. For this reason, the exhaust heat that the high heat emitting parts such as the inverter control elements emit during operation is mainly dissipated to the high pressure liquid refrigerant temporarily stored inside the receiver 36. That is, disposed in the outdoor unit 2 of the present embodiment is a cooling structure where the exhaust heat that the high heat emitting parts such as the inverter control elements emit is dissipated to the high pressure liquid refrigerant stored inside the receiver 36. It will be noted that the rear surface of the board body 83a, or the various high heat emitting parts including the inverter control elements, may directly contact the outer peripheral surface of the receiver 36 or may contact the outer peripheral surface of the receiver 36 via a plate member made of metal. Further, with respect to the disposition of the second electrical equipment unit 83, the second electrical equipment unit 83 is not limited to being disposed facing the right front plate 56 as in the present embodiment.

### (3) Operation of Outdoor Unit

Next, the operation of the outdoor unit 2 including the operation of cooling the second electrical equipment unit 83 will be described.

First, operation of the outdoor unit 2 during cooling operation and heating operation will be described.

During cooling operation, the four-way switch valve 24 of the refrigerant circuit 10 is in the state indicated by the solid lines in FIG. 1, that is, a state where the discharge pipe 23 is connected to the first gas refrigerant pipe 25 and where the suction pipe 21 is connected to the second gas refrigerant pipe 30. Further, the liquid close valve 29 and the gas close valve 31 are open, and the opening of the expansion valve 28 is controlled to depressurize the refrigerant.

Operation of the outdoor fan 32 and the compressor 22 is performed in this state of the refrigerant circuit 10. Then, because of the operation of the outdoor fan 32, a flow of outdoor air is formed where the outdoor air is taken inside the unit casing 51 from the suction openings 55a and 55b in the left side surface and the rear surface of the unit casing 51, is utilized as a heat source as a result of passing through the outdoor heat exchanger 26, and is blown out from the blowout opening 54a in the front surface of the unit casing 51. Further, because of the operation of the compressor 22, low pressure gas refrigerant is sucked into the compressor 22 through the suction pipe 21, is compressed into high pressure gas refrigerant, and is thereafter discharged into the discharge pipe 23. The high pressure gas refrigerant discharged into the discharge pipe 23 is sent to the outdoor heat exchanger 26 through the four-way switch valve 24 and the first gas refrigerant pipe 25, is cooled and condensed by heat exchange with the outdoor air, becomes high pressure liquid refrigerant, and is sent to the liquid refrigerant pipe 27. The high pressure liquid refrigerant sent to the liquid refrigerant pipe 27 is sent from the outdoor heat exchanger 26 side of the liquid refrigerant pipe 27 to the expansion valve 28 through the order of the inlet check valve 37b, the communication pipe 39 and the receiver 36. The high pressure liquid refrigerant sent to the expansion valve 28 is depressurized by the expansion valve 28, becomes refrigerant in a low pressure gas-liquid two-phase state, and is sent to the indoor heat exchanger 41 through the outlet check valve 38a, the liquid close valve 29 side of the liquid refrigerant pipe 27, the liquid close valve 29 and the liquid refrigerant communication pipe 5. The refrigerant in the low pressure gas-liquid two-phase state sent to the indoor heat exchanger 41 is heated and evaporated by heat exchange with the indoor air, becomes low pressure gas refrigerant, is returned to the suction pipe 21 through the gas refrigerant communication pipe 6, the gas close valve 31, the second gas refrigerant pipe 30 and the four-way switch valve 24, and is again sucked into the compressor 22.

Next, during heating operation, the four-way switch valve 24 of the refrigerant circuit 10 is in the state indicated by the dotted lines in FIG. 1, that is, a state where the discharge pipe 23 is connected to the second gas refrigerant pipe 30 and where the suction pipe 21 is connected to the first gas refrigerant pipe 25. Further, the liquid close valve 29 and the gas close valve 31 are open, and the opening of the expansion valve 28 is controlled to depressurize the refrigerant.

Operation of the outdoor fan 32 and the compressor 22 is performed in this state of the refrigerant circuit 10. Then, because of the operation of the outdoor fan 32, a flow of outdoor air is formed where the outdoor air is taken inside the unit casing 51 from the suction openings 55a and 55b in the left side surface and the rear surface of the unit casing 51, is utilized as a heat source as a result of passing through the outdoor heat exchanger 26, and is blown out from the blowout opening 54a in the front surface of the unit casing 51. Further, because of the operation of the compressor 22, low pressure gas refrigerant is sucked into the compressor 22 through the suction pipe 21, is compressed into high pressure gas refrigerant, and is thereafter discharged into the discharge pipe 23. The high pressure gas refrigerant discharged into the discharge pipe 23 is sent to the indoor heat exchanger 41 through the four-way switch valve 24, the second gas refrigerant pipe 30 and the gas close valve 31, is cooled and condensed by heat exchange with the indoor air, becomes high pressure liquid refrigerant, and is sent to the liquid refrigerant pipe 27 through the liquid refrigerant communication pipe 5 and the liquid close valve 29. The high pressure liquid refrigerant sent to the liquid refrigerant pipe 27 is sent from the liquid close valve 29 side of the liquid refrigerant pipe 27 to the expansion valve 28 through the order of the inlet check valve 37a, the communication pipe 39 and the receiver 36. The high pressure liquid refrigerant sent to the expansion valve 28 is depressurized by the expansion valve 28, becomes refrigerant in a low pressure gas-liquid two-phase state, and is sent to the outdoor heat exchanger 26 through the outlet check valve 38b and the outdoor heat exchanger 26 side of the liquid refrigerant pipe 27. The refrigerant in the low pressure gas-liquid two-phase state sent to the outdoor heat exchanger 26 is heated and evaporated by heat exchange with the outdoor air, becomes low pressure gas refrigerant, is returned to the suction pipe 21 through the first gas refrigerant pipe 25 and the four-way switch valve 24, and is again sucked into the compressor 22.

In the above-described cooling operation and heating operation, the electrical equipment unit 81 of the outdoor unit 2 is powered in order to control operation of the air conditioner 1, and the high heat emitting parts such as the inverter control elements of the second electrical equipment unit 83 emit heat. However, in the outdoor unit 2 of the present embodiment, a structure is employed where the second electrical equipment unit 83 (specifically, the rear surface of the board body 83a) serving as an inverter board is attached to the receiver 36, so the exhaust heat that the inverter control elements mounted on the second electrical equipment unit 83 emit is dissipated to the high pressure liquid refrigerant stored inside the receiver 36. Thus, anomalous heating of the inverter control elements can be prevented.

### (4) Characteristics of Outdoor Unit

In the outdoor unit 2 that has been described using FIG 2 to FIG. 5, the second electrical equipment unit 83 serving as an inverter board is attached to the receiver 36 serving as a refrigerant circuit component through which high pressure refrigerant flows, whereby a cooling structure is employed which causes the exhaust heat that the inverter control elements emit to be dissipated to the high pressure refrigerant stored inside the receiver 36, so the cooling fins that project from the partition plate toward the blower chamber as in a conventional outdoor unit can be omitted. Thus, effective utilization of the space inside the machine chamber S₂ is promoted because the degree of freedom with which the second electrical equipment unit 83 may be disposed inside the machine chamber S₂ is raised, which can contribute to making the entire outdoor unit 2 compact.

Moreover, the liquid refrigerant that has been condensed in the outdoor heat exchanger 26 or the indoor heat exchanger 41 flows to the communication pipe 39 including the receiver 36 (the portion until the refrigerant is depressurized by the expansion valve 28), and this liquid refrigerant is at a temperature that is about the same as or higher than the air temperature inside the machine chamber S₂ and a temperature that is equal to or lower than the condensing temperature in the outdoor heat exchanger 26 or the indoor heat exchanger 41, so the electrical equipment unit 83 can be cooled to a temperature that is lower than the use upper limit temperature of the inverter control elements while preventing the occurrence of condensation in the portion where the receiver 36 and the second electrical equipment unit 83 directly contact each other, which is suitable for cooling the electrical equipment unit 83. Moreover, a high cooling effect is obtained because the evaporation heat of that liquid refrigerant can also be utilized.

Further, by omitting the cooling fins, a reduction in cost and a reduction in the ventilation resistance of the blower chamber S₁ are realized and it becomes difficult for the outer peripheral portions of the blades of the outdoor fan 32 and the partition plate 58 to interfere with each other, whereby it becomes possible to enlarge the space of the machine chamber S₂ in the left-right direction.

Moreover, because the second electrical equipment unit 83 is detachably attached to the receiver 36, the serviceability of the second electrical equipment unit 83 during maintenance can be ensured.

It will be noted that the disposition of the receiver 36 and the second electrical equipment unit 83 inside the machine chamber S₂ is not limited to the upper side of the compressor 22 as shown in FIG 2 to FIG. 4; the receiver 36 and the second electrical equipment unit 83 may also be disposed in another place inside the machine chamber S₂.

### (5) Modification 1

In the outdoor unit 2 that has been described using FIG. 2 to FIG. 5, the second electrical equipment unit 83 serving as an inverter board is attached to the receiver 36 serving as a refrigerant circuit component through which high pressure refrigerant flows, whereby a cooling structure is employed which causes the exhaust heat that the inverter control elements emit to be dissipated to the high pressure liquid refrigerant stored inside the receiver 36, but the present invention is not limited to this; as shown in FIG. 6, the second electrical equipment unit 83 may also be detachably attached by the band member 83b or the like to a high pressure plate pipe 39a that configures part of the communication pipe 39, whereby a cooling structure is employed which causes the exhaust heat that the inverter control elements emit to be dissipated to high pressure liquid refrigerant flowing inside the high pressure plate pipe 39a. Here, as shown in FIG 7, for example, the high pressure plate pipe 39a comprises a pair of plate materials that are adhered together by brazing or the like to the portion of the communication pipe 39 between the receiver 36 and the inlet check valves 37a and 37b (see FIG. 1) to form a flow path inside. Additionally, a surface 39b that has a shape along the rear surface of the second electrical equipment unit 83 and contacts the rear surface of the second electrical equipment unit 83 or the high heat emitting parts including the inverter control elements is formed on the high pressure plate pipe 39a. It will be noted that FIG. 6 is a perspective diagram showing a state where the second electrical equipment unit 83 pertaining to modification 1 (when the second electrical equipment unit 83 is attached to the high pressure plate pipe 39a) is attached to the high pressure plate pipe 39a. FIG. 7 is a diagram where the high pressure plate pipe 39a is seen from the direction of A in FIG. 6 (shown with part being broken out).

In this case, similar to when the second electrical equipment unit 83 is attached to the receiver 36, a high cooling effect is obtained because the exhaust heat that the inverter control elements emit can be dissipated utilizing the high pressure refrigerant. Moreover, the surface 39b that has a shape along the rear surface of the second electrical equipment unit 83 is formed on the high pressure plate pipe 39a, and the area of contact between the high pressure plate pipe 39a and the second electrical equipment unit 83 can be enlarged, so the efficiency with which the second electrical equipment unit 83 can be cooled is raised and the dissipation of the exhaust heat that the inverter control elements emit can be promoted.

It will be noted that, with respect to the disposition of the high pressure plate pipe 39a and the second electrical equipment unit 83 inside the machine chamber S₂, similar to when the second electrical equipment unit 83 is attached to the receiver 36 in FIG. 2 to FIG. 4, the high pressure plate pipe 39a and the second electrical equipment unit 83 may also be disposed on the upper side of the compressor 22 or in another place inside the machine chamber S₂.

For example, the high pressure plate pipe 39a and the second electrical equipment unit 83 may also be disposed along the inner surface of the bottom surface, the top surface, the right front surface, the right side surface, or the right rear surface (in the present embodiment, the bottom plate 52, the top plate 53, the right front plate 56, or the right side plate 57) that are outer plates of the unit casing 51 and form the machine chamber S₂. In this case, the space in the vicinity of the outer plates of the unit casing 51 can be effectively utilized. As a specific example, a case will be described where the second electrical equipment unit 83 is disposed along the bottom surface of the unit casing 51.

When, of the space inside the machine chamber S₂, space is to be utilized in the vicinity of the bottom surface of the unit casing 51, as shown in FIG. 8, the high pressure plate pipe 39a and the second electrical equipment unit 83 can be disposed along the bottom surface (in the present embodiment, the bottom plate 52) of the unit casing 51. Here, FIG. 8 is a partial perspective diagram where the outdoor unit 2 pertaining to modification 1 (when the second electrical equipment unit 83 is disposed along the bottom surface of the unit casing 51) is seen diagonally from the right and front (shown excluding the top plate 53, the front plates 54 and 56, the side plate 57, refrigerant circuit components other than the high pressure plate pipe 39a, and the first electrical equipment unit 82).

In this case, in order to avoid interference between the compressor 22 and the second electrical equipment unit 83, it is preferable for the second electrical equipment unit 83 and the high pressure plate pipe 39a to be installed between the compressor 22 and the bottom plate 52 in the vertical direction and for the second electrical equipment unit 83 to be detachably attached to the high pressure plate 39a in consideration of the serviceability of the second electrical equipment unit 83 during maintenance. For example, as shown in FIG 9, a mount 52b for installing the compressor 22 may be disposed on the bottom plate 52, a space for installing the second electrical equipment unit 83 and the high pressure plate pipe 39a may be formed between the compressor 22 and the bottom plate 52 in the vertical direction, rail members 52a may be disposed in this space, the high pressure plate pipe 39a may be disposed along the bottom plate 52, and the side end portions of the board body 83a of the second electrical equipment unit 83 may be attached so as to be slidable in the front-rear direction on the surface 39b of the high pressure plate pipe 39a. Here, FIG. 9 is a front diagram showing a structure that attaches the second electrical equipment unit 83 and the high pressure plate pipe 39a between the compressor 22 and the bottom plate 52 of the unit casing 51 in the vertical direction.

### (6) Modification 2

In the outdoor unit 2 that has been described using FIG. 2 to FIG. 9, the second electrical equipment unit 83 serving as an inverter board is attached to the receiver 36 or the high pressure plate pipe 39a, whereby a cooling structure is employed which causes the exhaust heat that the inverter control elements emit to be dissipated to the high pressure refrigerant flowing inside the receiver 36 or the high pressure plate pipe 39a, so that the exhaust heat that the inverter control elements emit can be sufficiently dissipated as a result of the refrigerant circulating inside the refrigerant circuit 10 during operation of the air conditioner 1. However, the inverter control elements transiently emit heat even after the air conditioner 1 stops. For this reason, it is preferable to remove the transient exhaust heat that the inverter control elements emit for a while even after the air conditioner 1 stops. Thus, a heat storage material may be disposed on the receiver 36 or the high pressure plate pipe 39a to which the second electrical equipment unit 83 is attached. Thus, because the cold energy from the receiver 36 or the high pressure plate pipe 39a can be stored in the heat storage material during operation of the air conditioner 1, the exhaust heat that the inverter control elements transiently emit can be efficiently dissipated after the air conditioner 1 stops. Here, it is preferable for the quantity of the heat storage material to be a quantity capable of storing a cold energy amount that can absorb the exhaust heat that the inverter control elements emit after the air conditioner 1 stops.

Specific examples thereof will be described below.

### <When heat storage material is disposed on receiver>

For example, when the second electrical equipment unit 83 is to be attached to the receiver 36, as shown in FIG. 10, a heat storage body 91 filled with a heat storage material 93 can be disposed on the receiver 36. In the present modification, the second electrical equipment unit 83 is attached to the receiver 36 by the band member 83b or the like in a state where the heat storage body 91 is interposed between the second electrical equipment unit 83 and the outer peripheral surface of the receiver 36. Here, as shown in FIG. 11, the heat storage body 91 mainly includes: a box body 92 that includes a recessed surface 92a along the outer peripheral surface of the receiver 36 and a surface 92b that contacts the rear surface of the board body 83a or the high heat emitting parts including the inverter control elements, with a hollow space being formed inside the box body 92; and the heat storage material 93 that fills the inside of the box body 92. In the present modification, the heat storage material 93 is a latent heat storage material that performs heat storage utilizing latent heat of fusion, and a material whose melting point is lower than the use upper limit temperature of the inverter control elements and is higher than the temperature of the high pressure refrigerant flowing inside the receiver 36 is used. For example, it is preferable to use a paraffin or salt whose melting point is about 60 to 80°C. It will be noted that FIG 10 is a perspective diagram showing a state where the second electrical equipment unit 83 pertaining to modification 2 (when the heat storage material 93 is disposed on the receiver 36) is attached to the receiver 36. FIG. 11 is a diagram where the heat storage body 91 is seen from the direction of B in FIG. 10 (shown with part being broken out).

### <When heat storage material is disposed on high pressure plate pipe>

For example, when the second electrical equipment unit 83 is to be attached to the high pressure plate pipe 39a, as shown in FIG. 12, a heat storage body 191 filled with a heat storage material 193 can be disposed on the high pressure plate pipe 39a. In the present modification, the second electrical equipment unit 83 is detachably attached to the high pressure plate pipe 39a by the band member 83b or the like in a state where part of the heat storage body 191 is interposed between the second electrical equipment unit 83 and the outer peripheral surface of the high pressure plate pipe 39a. Here, as shown in FIG. 13, the heat storage body 191 mainly includes: a box body 192 that includes a rectangular hole 192a into which the high pressure plate pipe 39a can be inserted, with a hollow cylindrical space being formed inside the box body 192; and the heat storage material 193 that fills the inside of the box body 192. The box body 192 includes a surface 192b that covers the outer peripheral surface of the high pressure plate pipe 39a in a state where the high pressure plate pipe 39a has been inserted into the rectangular hole 192a and contacts the rear surface of the board body 83a or the high heat emitting parts including the inverter control elements. In the present modification, the heat storage material 193 is a latent heat storage material that performs heat storage utilizing latent heat of fusion, and a material whose melting point is lower than the use upper limit temperature of the inverter control elements and is higher than the temperature of the high pressure refrigerant flowing inside the high pressure plate pipe 39a is used. For example, it is preferable to use a paraffin or salt whose melting point is about 60 to 80 deg. C. It will be noted that FIG. 12 is a perspective diagram showing a state where the second electrical equipment unit 83 pertaining to modification 2 (when the heat storage material 193 is disposed on the high pressure plate pipe 39a) is attached to the high pressure plate pipe 39a. FIG 13 is a diagram where the heat storage body 191 is seen from the direction of C in FIG. 12 (shown with part being broken out).

Further, instead of the box body 192 that includes the rectangular hole 192a into which the high pressure plate pipe 39a can be inserted and has a hollow cylindrical space formed inside, as shown in FIG. 14, a bag body 194 capable of being wrapped around the high pressure plate pipe 39a may also be used. In this case, the second electrical equipment unit 83 can be attached to the bag body 194 filled with the heat storage material 193 and wrapped around the high pressure plate pipe 39a (see arrow D in FIG. 14). Here, FIG. 14 is a diagram showing the heat storage body 191 capable of being wrapped around the high pressure plate pipe 39a.

Further, even when the second electrical equipment unit 83 is installed between the compressor 22 and the bottom plate 52 in the vertical direction (see FIG. 8 and FIG. 9), as shown in FIG. 15, a mount 52b for installing the compressor 22 may be disposed on the bottom plate 52, a space for installing the second electrical equipment unit 83, the high pressure plate pipe 39a and the heat storage body 191 may be formed between the compressor 22 and the bottom plate 52 in the vertical direction, the second electrical equipment unit 83 and the high pressure plate pipe 39a that has been inserted into the rectangular hole 192a in the heat storage body 191 may be installed in this space so as to be vertically stacked, rail members 52a may be disposed in this space, the high pressure plate pipe 39a may be disposed along the bottom plate 52, and the side end portions of the board body 83a of the second electrical equipment unit 83 may be attached so as to be slidable in the front-rear direction on the surface 192b of the heat storage body 191. Here, FIG. 15 is a front diagram showing a structure that attaches the high pressure plate pipe 39a, the heat storage material 193 and the second electrical equipment unit 83 between the compressor 22 and the bottom plate 52 of the unit casing 51 in the vertical direction.

### <Second Aspect>

### (1) Structure of Refrigerant Circuit of Air Conditioner

FIG. 16 is a general refrigerant circuit diagram of an air conditioner 101 where an outdoor unit of an air conditioner pertaining to a second aspect is employed. The air conditioner 101 is a so-called separate type air conditioner, is mainly disposed with an outdoor unit 102, an indoor unit 4, and a liquid refrigerant communication pipe 5 and a gas refrigerant communication pipe 6 that interconnect the outdoor unit 102 and the indoor unit 4, and configures a vapor compression type refrigerant circuit 110.

### <Configuration of Refrigerant Circuit of Indoor Unit>

The indoor unit 4 is installed indoors and disposed with an indoor refrigerant circuit 10a that configures part of the refrigerant circuit 110. The indoor refrigerant circuit 10a mainly includes an indoor heat exchanger 41.

It will be noted that because the configuration of the indoor refrigerant circuit 10a is the same as the configuration of the indoor refrigerant circuit 10a of the first embodiment, description will be omitted here.

### <Configuration of Refrigerant Circuit of Outdoor Unit>

The outdoor unit 102 is installed outdoors and disposed with an outdoor refrigerant circuit 110b that configures part of the refrigerant circuit 110. The outdoor refrigerant circuit 110b mainly includes a compressor 22, a four-way switch valve 24, an outdoor heat exchanger 26, an expansion valve 28, a liquid close valve 29, a gas close valve 31, and an accumulator 33. A suction opening of the compressor 22 and the four-way switch valve 24 are interconnected by a suction pipe 21, and the accumulator 33 is disposed therebetween.

A discharge opening of the compressor 22 and the four-way switch valve 24 are interconnected by a discharge pipe 23. The four-way switch valve 24 and a gas side of the outdoor heat exchanger 26 are interconnected by a first gas refrigerant pipe 25. The outdoor heat exchanger 26 and the liquid close valve 29 are interconnected by a liquid refrigerant pipe 27. Additionally, the expansion valve 28 is disposed in the liquid refrigerant pipe 27. Additionally, the liquid close valve 29 is connected to the liquid refrigerant communication pipe 5. The four-way switch valve 24 and the gas close valve 31 are interconnected by a second gas refrigerant pipe 30. Additionally, the gas close valve 31 is connected to the gas refrigerant communication pipe 6.

The accumulator 33 is a liquid storage container for temporarily storing low pressure refrigerant circulating inside the refrigerant circuit 110.

It will be noted that because the configurations of the compressor 22, the four-way switch valve 24, the outdoor heat exchanger 26 and the expansion valve 28 are the same as the configurations of the compressor 22, the four-way switch valve 24, the outdoor heat exchanger 26 and the expansion valve 28 of the first embodiment, description will be omitted here.

### (2) Structure of Outdoor Unit

Next, the structure of the outdoor unit 102 disposed with the above-described outdoor refrigerant circuit 110b will be described using FIG. 17 to FIG. 20. Here, FIG. 17 is a plan diagram of the outdoor unit 102 (shown excluding the top plate 53 and refrigerant circuit components other than the accumulator 33). FIG. 18 is a front diagram of the outdoor unit 102 (shown excluding the left and right front plates 54 and 56 and refrigerant circuit components other than the accumulator 33). FIG. 19 is a right side diagram of the outdoor unit 102 (shown excluding the right front plate 56, the right side plate 57 and refrigerant circuit components other than the accumulator 33). FIG. 20 is a perspective diagram showing a state where the second electrical equipment unit 83 is attached to the accumulator 33. The outdoor unit 102 has a structure (so-called trunk type structure) where the inside of a substantially rectangular parallelepiped box-shaped unit casing 51 is divided into a blower chamber S₁ and a machine chamber S₂ by a partition plate 58 extending vertically, and is mainly disposed with the substantially box-shaped unit casing 51, the outdoor heat exchanger 26, an outdoor fan 32, the compressor 22, refrigerant circuit components (see FIG. 16) that configure the outdoor refrigerant circuit 110b together with the outdoor heat exchanger 26 and the compressor 22, and an electrical equipment unit 81 that performs control of the operation of the outdoor unit 102.

It will be noted that because the structures of the unit casing 51, the outdoor heat exchanger 26, the outdoor fan 32 and the compressor 22 are the same as the structures of the unit casing 51, the outdoor heat exchanger 26, the outdoor fan 32 and the compressor 22 of the first embodiment, description will be omitted here.

### <Refrigerant Circuit Components>

The refrigerant circuit components are parts that mainly configure the outdoor refrigerant circuit 110b (excluding the compressor 22 and the outdoor heat exchanger 26) including the suction pipe 21, the discharge pipe 23, the four-way switch valve 24, the first gas refrigerant pipe 25, the liquid refrigerant pipe 27, the expansion valve 28, the liquid close valve 29, the second gas refrigerant pipe 30, the gas close valve 31, and the accumulator 33. The refrigerant circuit components are mainly disposed on the front side, the upper side, the right transverse side and the rear side of the compressor 22 inside the machine chamber S₂. The accumulator 33 is a container having an upright circular cylinder shape and is disposed on the upper side of the compressor 22 in the substantial center of the machine chamber S₂ in the front-rear direction and the left-right direction. It will be noted that the disposition of the accumulator 33 is not limited to the position in the present aspect. Further, the electrical equipment unit 81 is attached to the accumulator 33, but the details thereof will be described later.

### <Electrical Equipment Unit>

The electrical equipment unit 81 is disposed with various electrical equipment such as an inverter board and a control board including a microcomputer and the like for performing operation control. In the present aspect, the electrical equipment unit 81 is mainly configured from a first electrical equipment unit 82 and a second electrical equipment unit 83 that are disposed in the space in the upper portion of the machine chamber S₂.

The second electrical equipment unit 83 is mainly an inverter board on which are mounted high heat emitting parts whose heat emission amount is large during operation, including inverter control elements comprising power transistors, diodes and the like, and includes a board body 83 a on which the various high heat emitting parts including the inverter control elements are mounted. In the present aspect, inverter control elements used for inverter control of the compressor motor 22a are mounted on the board body 83a. The second electrical equipment unit 83 is disposed facing the right front plate 56 on the rear side of the first electrical equipment unit 82 and is attached to the accumulator 33. More specifically, in the present aspect, the second electrical equipment unit 83 is detachably attached to the accumulator 33 by a band member 83b or the like in a state where the rear surface of the board body 83a, or the various high heat emitting parts including inverter control elements, contacts the outer peripheral surface of the accumulator 33, and cooling fins that project from the partition plate 58 toward the blower chamber S1 as in a conventional outdoor unit are omitted. For this reason, the exhaust heat that the high heat emitting parts such as the inverter control elements emit during operation is mainly dissipated to the low pressure gas refrigerant passing through the accumulator 33 and the low pressure liquid refrigerant temporarily stored inside the accumulator 33. That is, disposed in the outdoor unit 102 of the present aspect is a cooling structure where the exhaust heat that the high heat emitting parts such as the inverter control elements emit is dissipated to the low pressure gas refrigerant passing through the accumulator 33 and the low pressure liquid refrigerant stored inside the accumulator 33. It will be noted that the rear surface of the board body 83a, or the various high heat emitting parts including the inverter control elements, may directly contact the outer peripheral surface of the accumulator 33 or may contact the outer peripheral surface of the accumulator 33 via a plate member made of metal. Further, the second electrical equipment unit 83 is not limited to being disposed facing the right front plate 56 as in the present aspect.

It will be noted that because the configuration of the first electrical equipment unit 82 is the same as the configuration of the first electrical equipment unit 82 of the first embodiment, description will be omitted here.

### (3) Operation of Outdoor Unit

Next, the operation of the outdoor unit 102 including the operation of cooling the second electrical equipment unit 83 will be described.

First, operation of the outdoor unit 102 during cooling operation and heating operation will be described.

During cooling operation, the four-way switch valve 24 of the refrigerant circuit 110 is in the state indicated by the solid lines in FIG. 16, that is, a state where the discharge pipe 23 is connected to the first gas refrigerant pipe 25 and where the suction pipe 21 is connected to the second gas refrigerant pipe 30. Further, the liquid close valve 29 and the gas close valve 31 are open, and the opening of the expansion valve 28 is controlled to depressurize the refrigerant.

Operation of the outdoor fan 32 and the compressor 22 is performed in this state of the refrigerant circuit 110. Then, because of the operation of the outdoor fan 32, a flow of outdoor air is formed where the outdoor air is taken inside the unit casing 51 from the suction openings 55a and 55b in the left side surface and the rear surface of the unit casing 51, is utilized as a heat source as a result of passing through the outdoor heat exchanger 26, and is blown out from the blowout opening 54a in the front surface of the unit casing 51. Further, because of the operation of the compressor 22, low pressure gas refrigerant is sucked into the compressor 22 through the suction pipe 21 and the accumulator 33, is compressed into high pressure gas refrigerant, and is thereafter discharged into the discharge pipe 23. The high pressure gas refrigerant discharged into the discharge pipe 23 is sent to the outdoor heat exchanger 26 through the four-way switch valve 24 and the first gas refrigerant pipe 25, is cooled and condensed by heat exchange with the outdoor air, becomes high pressure liquid refrigerant, and is sent to the liquid refrigerant pipe 27. The high pressure liquid refrigerant sent to the liquid refrigerant pipe 27 is depressurized in the expansion valve 28, becomes refrigerant in a low pressure gas-liquid two-phase state, and is sent to the indoor heat exchanger 41 through the liquid refrigerant pipe 27, the liquid close valve 29 and the liquid refrigerant communication pipe 5. The refrigerant in the low pressure gas-liquid two-phase state sent to the indoor heat exchanger 41 is heated and evaporated by heat exchange with the indoor air, becomes low pressure gas refrigerant, is returned to the suction pipe 21 through the gas refrigerant communication pipe 6, the gas close valve 31, the second gas refrigerant pipe 30 and the four-way switch valve 24, passes through the accumulator 33, and is again sucked into the compressor 22.

Next, during heating operation, the four-way switch valve 24 of the refrigerant circuit 110 is in the state indicated by the dotted lines in FIG. 16, that is, a state where the discharge pipe 23 is connected to the second gas refrigerant pipe 30 and where the suction pipe 21 is connected to the first gas refrigerant pipe 25. Further, the liquid close valve 29 and the gas close valve 31 are open, and the opening of the expansion valve 28 is controlled to depressurize the refrigerant.

Operation of the outdoor fan 32 and the compressor 22 is performed in this state of the refrigerant circuit 110. Then, because of the operation of the outdoor fan 32, a flow of outdoor air is formed where the outdoor air is taken inside the unit casing 51 from the suction openings 55a and 55b in the left side surface and the rear surface of the unit casing 51, is utilized as a heat source as a result of passing through the outdoor heat exchanger 26, and is blown out from the blowout opening 54a in the front surface of the unit casing 51. Further, because of the operation of the compressor 22, low pressure gas refrigerant is sucked into the compressor 22 through the suction pipe 21 and the accumulator 33, is compressed into high pressure gas refrigerant, and is thereafter discharged into the discharge pipe 23. The high pressure gas refrigerant discharged into the discharge pipe 23 is sent to the indoor heat exchanger 41 through the four-way switch valve 24, the second gas refrigerant pipe 30 and the gas close valve 31, is cooled and condensed by heat exchange with the indoor air, becomes high pressure liquid refrigerant, and is sent to the expansion valve 28 through the liquid refrigerant communication pipe 5, the liquid close valve 29 and the liquid refrigerant pipe 27. The high pressure liquid refrigerant sent to the expansion valve 28 is depressurized in the expansion valve 28, becomes refrigerant in a low pressure gas-liquid two-phase state, and is sent to the outdoor heat exchanger 26 through the liquid refrigerant pipe 27. The refrigerant in the low pressure gas-liquid two-phase state sent to the outdoor heat exchanger 26 is heated and evaporated by heat exchange with the outdoor air, becomes low pressure gas refrigerant, is returned to the suction pipe 21 through the first gas refrigerant pipe 25 and the four-way switch valve 24, passes through the accumulator 33, and is again sucked into the compressor 22.

In the above-described cooling operation and heating operation, the electrical equipment unit 81 of the outdoor unit 102 is powered in order to control operation of the air conditioner 101, and the high heat emitting parts such as the inverter control elements of the second electrical equipment unit 83 emit heat. However, in the outdoor unit 102 of the present aspect, a structure is employed where the second electrical equipment unit 83 (specifically, the rear surface of the board body 83a) serving as an inverter board is attached to the accumulator 33, so the exhaust heat that the inverter control elements mounted on the second electrical equipment unit 83 emit is dissipated to the low pressure gas refrigerant passing through the accumulator 33 and the low pressure liquid refrigerant stored inside the accumulator 33. Thus, anomalous heating of the inverter control elements can be prevented.

### (4) Characteristics of Outdoor Unit

In the outdoor unit 102 that has been described using FIG. 17 to FIG. 20, the second electrical equipment unit 83 serving as an inverter board is attached to the accumulator 33, whereby a cooling structure is employed which causes the exhaust heat that the inverter control elements emit to be dissipated to the low pressure refrigerant flowing inside the accumulator 33, the cooling fins that project from the partition plate toward the blower chamber as in a conventional outdoor unit can be omitted. Thus, effective utilization of the space inside the machine chamber S₂ is promoted because the degree of freedom with which the second electrical equipment unit 83 may be disposed inside the machine chamber S₂ is raised, which can contribute to making the entire outdoor unit 102 compact.

Moreover, a high cooling effect is obtained because the low pressure refrigerant flowing inside the suction pipe 21 and the accumulator 23 is the refrigerant with the lowest temperature of the cold energy sources inside the outdoor unit 102. Moreover, because the low pressure liquid refrigerant is stored inside the accumulator 33, the evaporation heat of that low pressure liquid refrigerant can also be utilized.

Further, by omitting the cooling fins, a reduction in cost and a reduction in the ventilation resistance of the blower chamber S1 are realized and it becomes difficult for the outer peripheral portions of the blades of the outdoor fan 32 and the partition plate 58 to interfere with each other, whereby it becomes possible to enlarge the space of the machine chamber S₂ in the left-right direction.

Moreover, because the second electrical equipment unit 83 is detachably attached to the accumulator 33, the serviceability of the second electrical equipment unit 83 during maintenance can be ensured.

It will be noted that the disposition of the accumulator 33 and the second electrical equipment unit 83 inside the machine chamber S₂ is not limited to the upper side of the compressor 22 as shown in FIG. 17 to FIG. 19; the accumulator 33 and the second electrical equipment unit 83 may also be disposed in another place inside the machine chamber S₂.

### (5) Modification 1

In the outdoor unit 102 that has been described using FIG. 17 to FIG 20, the second electrical equipment unit 83 serving as an inverter board is attached to the accumulator 33, whereby a cooling structure is employed which causes the exhaust heat that the inverter control elements emit to be dissipated to the low pressure refrigerant flowing inside the accumulator 33, but the present invention is not limited to this; as shown in FIG. 21, the second electrical equipment unit 83 may also be detachably attached by a band member 83b or the like to a suction plate pipe 21a that configures part of the suction pipe 21, whereby a cooling structure is employed which causes the exhaust heat that the inverter control elements emit to be dissipated to low pressure refrigerant flowing inside the suction plate pipe 21 a. Here, as shown in FIG. 22, for example, the suction plate pipe 21a comprises a pair of plate materials that are adhered together by brazing or the like to the portion of the suction pipe 21 between the four-way switch valve 24 and the accumulator 33 (see FIG 16) to form a flow path inside. Additionally, a surface 21b that has a shape along the rear surface of the second electrical equipment unit 83 and contacts the rear surface of the second electrical equipment unit 83 is formed on the suction plate pipe 21a. It will be noted that FIG. 21 is a perspective diagram showing a state where the second electrical equipment unit 83 pertaining to modification 1 (when the second electrical equipment unit 83 is attached to the suction plate pipe 21 a) is attached to the suction plate pipe 21a. FIG. 22 is a diagram where the suction plate pipe 21a is seen from the direction of A in FIG. 21 (shown with part being broken out).

In this case, similar to when the second electrical equipment unit 83 is attached to the accumulator 33, a high cooling effect is obtained because the exhaust heat that the inverter control elements emit can be dissipated utilizing the low pressure refrigerant. Moreover, the surface 21 b that has a shape along the rear surface of the second electrical equipment unit 83 is formed on the suction plate pipe 21 a, and the area of contact between the suction plate pipe 21 a and the second electrical equipment unit 83 can be enlarged, so the efficiency with which the second electrical equipment unit 83 can be cooled is raised and the dissipation of the exhaust heat that the inverter control elements emit can be promoted.

It will be noted that, with respect to the disposition of the suction plate pipe 21a and the second electrical equipment unit 83 inside the machine chamber S₂, similar to when the second electrical equipment unit 83 is attached to the accumulator 33 in FIG. 17 to FIG. 19, the suction plate pipe 21a and the second electrical equipment unit 83 may also be disposed on the upper side of the compressor 22 or in another place inside the machine chamber S₂.

For example, the suction plate pipe 21a and the second electrical equipment unit 83 may also be disposed along the inner surface of the bottom surface, the top surface, the right front surface, the right side surface, or the right rear surface (in the present aspect, the bottom plate 52, the top plate 53, the right front plate 56, or the right side plate 57) that are outer plates of the unit casing 51 and form the machine chamber S₂. In this case, the space in the vicinity of the outer plates of the unit casing 51 can be effectively utilized. As a specific example, a case will be described where the second electrical equipment unit 83 is disposed along the bottom surface of the unit casing 51.

When, of the space inside the machine chamber S₂, space is to be utilized in the vicinity of the bottom surface of the unit casing 51, as shown in FIG. 23, the suction plate pipe 21 a and the second electrical equipment unit 83 can be disposed along the bottom surface (in the present aspect, the bottom plate 52) of the unit casing 51. Here, FIG. 23 is a partial perspective diagram where the outdoor unit 102 pertaining to modification 1 (when the second electrical equipment unit 83 is disposed along the bottom surface of the unit casing 51) is seen diagonally from the right and front (shown excluding the top plate 53, the front plates 54 and 56, the side plate 57, refrigerant circuit components other than the suction plate pipe 21 a, and the first electrical equipment unit 82).

In this case, in order to avoid interference between the compressor 22 and the second electrical equipment unit 83, it is preferable for the second electrical equipment unit 83 and the suction plate pipe 21 a to be installed between the compressor 22 and the bottom plate 52 in the vertical direction and for the second electrical equipment unit 83 to be detachably attached to the suction plate pipe 21 a in consideration of the serviceability of the second electrical equipment unit 83 during maintenance. For example, as shown in FIG. 24, a mount 52b for installing the compressor 22 may be disposed on the bottom plate 52, a space for installing the second electrical equipment unit 83 and the suction plate pipe 21a may be formed between the compressor 22 and the bottom plate 52 in the vertical direction, rail members 52a may be disposed in this space, the suction plate pipe 21 a may be disposed along the bottom plate 52, and the side end portions of the board body 83a of the second electrical equipment unit 83 may be attached so as to be slidable in the front-rear direction on the surface 21b of the suction plate pipe 21a. Here, FIG. 24 is a front diagram showing a structure that attaches the second electrical equipment unit 83 between the compressor 22 and the bottom plate 52 of the unit casing 51 in the vertical direction.

### (6) Modification 2

In the outdoor unit 102 that has been described using FIG. 17 to FIG. 24, the second electrical equipment unit 83 serving as an inverter board is attached to the accumulator 33 or the suction plate pipe 21 a, whereby a cooling structure is employed which causes the exhaust heat that the inverter control elements emit to be dissipated to the low pressure refrigerant flowing inside the accumulator 33 or the suction plate pipe 21a, so that the exhaust heat that the inverter control elements emit can be sufficiently dissipated as a result of the refrigerant circulating inside the refrigerant circuit 110 during operation of the air conditioner 101. However, the inverter control elements transiently emit heat even after the air conditioner 101 stops. For this reason, it is preferable to remove the transient exhaust heat that the inverter control elements emit for a while even after the air conditioner 101 stops. Thus, a heat storage material may be disposed on the accumulator 33 or the suction plate pipe 21a to which the second electrical equipment unit 83 is attached. Thus, because the cold energy from the accumulator 33 or the suction plate pipe 21a can be stored in the heat storage material during operation of the air conditioner 101, the exhaust heat that the inverter control elements transiently emit can be efficiently dissipated after the air conditioner 101 stops. Here, it is preferable for the quantity of the heat storage material to be a quantity capable of storing a cold energy amount that can absorb the exhaust heat that the inverter control elements emit after the air conditioner 101 stops.

Further, because the low pressure refrigerant flowing inside the accumulator 33 or the suction plate pipe 21 a is lower than the air temperature inside the machine chamber S₂, there is the potential for condensation to form when the accumulator 33 or the suction plate pipe 21 a and the second electrical equipment unit 83 are brought into direct contact with each other, but by disposing the heat storage material such that it is interposed between the accumulator 33 or the suction plate pipe 21 a and the second electrical equipment unit 83 (specifically, the rear surface of the board body 83a), this can also contribute to preventing condensation in the second electrical equipment unit 83.

Specific examples thereof will be described below.

### <When heat storage material is disposed on accumulator>

For example, when the second electrical equipment unit 83 is to be attached to the accumulator 33, as shown in FIG. 25, a heat storage body 91 filled with a heat storage material 93 can be disposed on the accumulator 33. In the present modification, the second electrical equipment unit 83 is attached to the accumulator 33 by the band member 83b or the like in a state where the heat storage body 91 is interposed between the second electrical equipment unit 83 and the outer peripheral surface of the accumulator 33. Here, as shown in FIG 26, the heat storage body 91 mainly includes: a box body 92 that includes a recessed surface 92a along the outer peripheral surface of the accumulator 33 and a surface 92b that contacts the rear surface of the board body 83a or the high heat emitting parts including the inverter control elements, with a hollow space being formed inside the box body 92; and the heat storage material 93 that fills the inside of the box body 92. In the present modification, the heat storage material 93 is a latent heat storage material that performs heat storage utilizing latent heat of fusion, and a material whose melting point is lower than the use upper limit temperature of the inverter control elements and is higher than the temperature of the low pressure refrigerant flowing inside the accumulator 33 is used. For example, it is preferable to use a paraffin or salt whose melting point is about 60 to 80°C. It will be noted that FIG 25 is a perspective diagram showing a state where the second electrical equipment unit 83 pertaining to modification 2 (when the heat storage material 93 is disposed on the accumulator 33) is attached to the accumulator 33. FIG. 26 is a diagram where the heat storage body 91 is seen from the direction of B in FIG. 25 (shown with part being broken out).

### <When heat storage material is disposed on suction plate pipe>

For example, when the second electrical equipment unit 83 is to be attached to the suction plate pipe 21a, as shown in FIG. 27, a heat storage body 191 filled with a heat storage material 193 can be disposed on the suction plate pipe 21a. In the present modification, the second electrical equipment unit 83 is detachably attached to the suction plate pipe 21a by the band member 83b or the like in a state where part of the heat storage body 191 is interposed between the second electrical equipment unit 83 and the outer peripheral surface of the suction plate pipe 21a. Here, as shown in FIG. 28, the heat storage body 191 mainly includes: a box body 192 that includes a rectangular hole 192a into which the suction plate pipe 21a can be inserted, with a hollow cylindrical space being formed inside the box body 192; and the heat storage material 193 that fills the inside of the box body 192. The box body 192 includes a surface 192b that covers the outer peripheral surface of the suction plate pipe 21a in a state where the suction plate pipe 21a has been inserted into the rectangular hole 192a and contacts the rear surface of the board body 83a or the high heat emitting parts including the inverter control elements. In the present modification, the heat storage material 193 is a latent heat storage material that performs heat storage utilizing latent heat of fusion, and a material whose melting point is lower than the use upper limit temperature of the inverter control elements and is higher than the temperature of the low pressure refrigerant flowing inside the suction plate pipe 21a is used. For example, it is preferable to use a paraffin or salt whose melting point is about 60 to 80°C. It will be noted that FIG. 27 is a perspective diagram showing a state where the second electrical equipment unit 83 pertaining to modification 2 (when the heat storage material 193 is disposed on the suction plate pipe 21a) is attached to the suction plate pipe 21a. FIG. 28 is a diagram where the heat storage body 191 is seen from the direction of C in FIG. 27 (shown with part being broken out).

Further, instead of the box body 192 that includes the rectangular hole 192a into which the suction plate pipe 21a can be inserted and has a hollow cylindrical space formed inside, as shown in FIG. 28, a bag body 194 capable of being wrapped around the suction plate pipe 21a may also be used. In this case, the second electrical equipment unit 83 can be attached to the bag body 194 filled with the heat storage material 193 and wrapped around the suction plate pipe 21a (see arrow D in FIG. 29). Here, FIG. 29 is a diagram showing the heat storage body 191 capable of being wrapped around the suction plate pipe 21 a.

Further, even when the second electrical equipment unit 83 is installed between the compressor 22 and the bottom plate 52 in the vertical direction (see FIG. 23 and FIG. 24), as shown in FIG. 30, a mount 52b for installing the compressor 22 may be disposed on the bottom plate 52, a space for installing the second electrical equipment unit 83, the suction plate pipe 21 a and the heat storage body 191 may be formed between the compressor 22 and the bottom plate 52 in the vertical direction, the second electrical equipment unit 83 and the suction plate pipe 21 a that has been inserted into the rectangular hole 192a in the heat storage body 191 may be installed in this space so as to be vertically stacked, rail members 52a may be disposed in this space, the suction plate pipe 21a may be disposed along the bottom plate 52, and the side end portions of the board body 83a of the second electrical equipment unit 83 may be attached so as to be slidable in the front-rear direction on the surface 192b of the heat storage body 191. Here, FIG. 30 is a front diagram showing a structure that attaches the suction plate pipe 21a, the heat storage material 193 and the second electrical equipment unit 83 between the compressor 22 and the bottom plate 52 of the unit casing 51 in the vertical direction.

### <Third Aspect>

### (1) Configuration of Refrigerant Circuit of Air Conditioner

FIG. 31 is a general refrigerant circuit diagram of an air conditioner 201 where an outdoor unit of an air conditioner pertaining to a third aspect is employed. The air conditioner 201 is a so-called separate type air conditioner, is mainly disposed with an outdoor unit 202, an indoor unit 4, and a liquid refrigerant communication pipe 5 and a gas refrigerant communication pipe 6 that interconnect the outdoor unit 202 and the indoor unit 4, and configures a vapor compression type refrigerant circuit 110.

### <Configuration of Refrigerant Circuit of Indoor Unit>

The indoor unit 4 is installed indoors and disposed with an indoor refrigerant circuit 10a that configures part of the refrigerant circuit 110. The indoor refrigerant circuit 10a mainly includes an indoor heat exchanger 41.

It will be noted that because the configuration of the indoor refrigerant circuit 10a is the same as the configuration of the indoor refrigerant circuit 10a of the first embodiments and the second aspect, description will be omitted here.

### <Configuration of Refrigerant Circuit of Outdoor Unit>

The outdoor unit 202 is installed outdoors and disposed with an outdoor refrigerant circuit 110b that configures part of the refrigerant circuit 110. The outdoor refrigerant circuit 110b mainly includes a compressor 22, a four-way switch valve 24, an outdoor heat exchanger 26, an expansion valve 28, a liquid close valve 29, a gas close valve 31, and an accumulator 33.

It will be noted that because the configuration of the outdoor refrigerant circuit 110b is the same as the configuration of the outdoor refrigerant circuit 110b of the second aspect, description will be omitted here.

### (2) Structure of Outdoor Unit

Next, the structure of the outdoor unit 202 disposed with the above-described outdoor refrigerant circuit 110b will be described using FIG. 32 to FIG. 34. Here, FIG. 32 is a plan diagram of the outdoor unit 202 (shown excluding the top plate 53 and refrigerant circuit components). FIG. 33 is a front diagram of the outdoor unit 202 (shown excluding the left and right front plates 54 and 56 and refrigerant circuit components). FIG. 34 is a perspective diagram where the outdoor unit 202 is seen diagonally from the right and front (shown excluding the top plate 53, the front plates 54 and 56, the side plate 57, refrigerant circuit components, and the first electrical equipment unit 82). The outdoor unit 202 has a structure (so-called trunk type structure) where the inside of a substantially rectangular parallelepiped box-shaped unit casing 51 is divided into a blower chamber S ₁ and a machine chamber S₂ by a partition plate 58 extending vertically, and is mainly disposed with the substantially box-shaped unit casing 51, the outdoor heat exchanger 26, an outdoor fan 32, the compressor 22, refrigerant circuit components (see FIG. 31) that configure the outdoor refrigerant circuit 110b together with the outdoor heat exchanger 26 and the compressor 22, and an electrical equipment unit 81 that performs control of the operation of the outdoor unit 202.

### <Unit Casing>

The unit casing 51 is mainly disposed with a bottom plate 52, a top plate 53, a left front plate 54, a right front plate 56, a right side plate 57, and the partition plate 58.

The bottom plate 52 is a plate-shaped member that is made of metal, has a horizontally long substantially rectangular shape, and configures the bottom surface portion of the unit casing 51. The peripheral edge portion of the bottom plate 52 is bent upward. Two fixed legs 59 fixed to an on-site installation surface are disposed on the outer surface of the bottom plate 52. The fixed legs 59 are plate-shaped members that are made of metal, are substantially U-shaped when the unit casing 51 is seen in front view, and extend from the front side of the unit casing 51 to the rear side.

The top plate 53 is a plate-shaped member that is made of metal, has a horizontally long substantially rectangular shape, and configures the top surface portion of the outdoor unit 202.

The left front plate 54 is a plate-shaped member that is made of metal and mainly configures the left front surface portion and the left side surface portion of the unit casing 51, and the lower portion thereof is fixed to the bottom plate 52 by screws or the like. A suction opening 55a for air sucked inside the unit casing 51 by the outdoor fan 32 is formed in the left front plate 54. Further, a blowout opening 54a for blowing out, to the outside, air that has been taken into the inside from the rear surface side and the left side surface side of the unit casing 51 by the outdoor fan 32 is disposed in the left front plate 54. A fan grill 60 is disposed in the blowout opening 54a.

The right front plate 56 is a plate-shaped member that is made of metal and mainly configures the right front surface portion and the front portion of the right side surface of the unit casing 51, and the lower portion thereof is fixed to the bottom plate 52 by screws or the like. Further, the left end portion of the right front plate 56 is fixed to the right end portion of the left front plate 54 by screws or the like.

The right side plate 57 is a plate-shaped member that is made of metal and mainly configures the rear portion of the right side surface and the right rear surface portion of the unit casing 51, and the lower portion thereof is fixed to the bottom plate 52 by screws or the like. Additionally, a suction opening 55b for air sucked inside the unit casing 51 by the outdoor fan 32 is formed between the rear end portion of the left front plate 54 and the rear surface side end portion of the right side plate 57 in the left-right direction.

The partition plate 58 is a plate-shaped member that is made of metal and extends vertically disposed on the bottom plate 52, and is disposed so as to partition the space inside the unit casing 51 into two left and right spaces. In the present aspect, formed in the partition plate 58 are a flat portion 58a that configures the upper portion of the partition plate 58 and a curved portion 58b that configures the lower portion of the partition plate 58. The flat portion 58a is a portion that extends straightly from the right side end portion of the heat exchanger 26 (i.e., the tube plate 26a of the heat exchanger 26) toward the right side end portion of the left front plate 54 when the unit casing 51 is seen in plan view, and the curved portion 58b is a portion that curves so as to project further toward the blower chamber S1 than the flat portion 58a when the unit casing 51 is seen in plan view. The lower portion of the partition plate 58 is fixed to the bottom plate 52 by screws or the like. Further, the right end portion of the left front plate 54 is fixed to the front end portion of the partition plate 58 by screws or the like. Moreover, the rear surface side end portion of the right side plate 57 is fixed to the tube plate 26a of the heat exchanger 26 by screws or the like.

In this manner, the space inside the unit casing 51 is divided into the blower chamber S1 and the machine chamber S₂ by the partition plate 58. More specifically, the blower chamber S1 is a space enclosed by the bottom plate 52, the top plate 53, the left front plate 54 and the partition plate 58, and the outdoor fan 32 and the outdoor heat exchanger 26 are disposed therein. The machine chamber S₂ is a space enclosed by the bottom plate 52, the top plate 53, the right front plate 56, the right side plate 57 and the partition plate 58, and the compressor 22, refrigerant circuit components and the electrical equipment unit 81 are disposed therein. The unit casing 51 is configured such that the inside of the machine chamber S₂ may be seen by removing the right front plate 56.

### <Compressor>

The compressor 22 is a hermetic type compressor that houses a compressor motor 22a (see FIG. 31) inside a housing and is disposed inside the machine chamber S₂. Here, the compressor motor 22a is a so-called inverter type motor whose frequency is capable of being controlled. In the present aspect, the compressor 22 has an upright circular cylinder shape with a height substantially half the entire height of the unit casing 51, and the lower portion thereof is fixed to the bottom plate 52. Further, when the unit casing 51 is seen in plan view, the compressor 22 is disposed in the vicinity of the center of the unit casing 51 in the front-rear direction and in the vicinity of the partition plate 58 on the right side of the unit casing 51 in the left-right direction. More specifically, the compressor 22 is disposed in the vicinity of the curved portion 58b formed in the lower portion of the partition plate 58. For this reason, the compressor 22 is disposed so as to overlap the flat portion 58a formed in the upper portion of the partition plate 58 when the unit casing 51 is seen in plan view.

It will be noted that because the structures of the outdoor heat exchanger 26 and the outdoor fan 32 are the same as the structures of the outdoor heat exchanger 26 and the outdoor fan 32 of the first embodiment and the second aspect, description will be omitted here.

### <Refrigerant Circuit Components>

The refrigerant circuit components are parts that mainly configure the outdoor refrigerant circuit 110b (excluding the compressor 22 and the outdoor heat exchanger 26) including the suction pipe 21, the discharge pipe 23, the four-way switch valve 24, the first gas refrigerant pipe 25, the liquid refrigerant pipe 27, the expansion valve 28, the liquid close valve 29, the second gas refrigerant pipe 30, the gas close valve 31, and the accumulator 33. The refrigerant circuit components are mainly disposed on the front side, the upper side, the right transverse side and the rear side of the compressor 22 inside the machine chamber S₂.

### <Electrical Equipment Unit>

The electrical equipment unit 81 is disposed with various electrical equipment such as an inverter board and a control board including a microcomputer and the like for performing operation control. In the present aspect, the electrical equipment unit 81 is mainly configured from a first electrical equipment unit 82 and a second electrical equipment unit 83 that are disposed in the space in the upper portion of the machine chamber S₂.

The second electrical equipment unit 83 is mainly an inverter board on which are mounted high heat emitting parts whose heat emission amount is large during operation, including inverter control elements comprising power transistors, diodes and the like, and includes a board body 83a on which the various high heat emitting parts including the inverter control elements are mounted. In the present aspect, inverter control elements used for inverter control of the compressor motor 22a are mounted on the board body 83a. The second electrical equipment unit 83 contacts the partition plate 58 on the rear side of the first electrical equipment unit 82. More specifically, in the present embodiment, the second electrical equipment unit 83 is fixed to the flat portion 58a formed in the upper portion of the partition plate 58, whereby the rear surface of the board body 83a, or the various high heat emitting parts including the inverter control elements, contact the machine chamber S₂ side surface of the flat portion 58a, and cooling fins that project from the partition plate 58 toward the blower chamber S1 as in a conventional outdoor unit are omitted. For this reason, the exhaust heat that the high heat emitting parts such as the inverter control elements emit during operation is mainly dissipated through the partition plate 58. That is, disposed in the outdoor unit 202 of the present aspect is a cooling structure where the exhaust heat that the high heat emitting parts such as the inverter control elements emit is dissipated through the partition plate 58. It will be noted that the rear surface of the board body 83a, or the various high heat emitting parts including the inverter control elements, may directly contact the outer peripheral surface of the partition plate 58 or may contact the outer peripheral surface of the partition plate 58 via a plate member made of metal.

It will be noted that because the configuration of the first electrical equipment unit 82 is the same as the configuration of the first electrical equipment unit 82 of the first embodiment and second aspect, description will be omitted here.

### (3) Operation of Outdoor Unit

Next, the operation of the outdoor unit 202 including the operation of cooling the second electrical equipment unit 83 will be described.

In the present aspect also, cooling operation and heating operation are performed, but because the content thereof is the same as cooling operation and heating operation in the second aspect as described above, description will be omitted here.

Additionally, during cooling operation and heating operation, the electrical equipment unit 81 of the outdoor unit 202 is powered in order to control operation of the air conditioner 201, and the high heat emitting parts such as the inverter control elements of the second electrical equipment unit 83 emit heat. However, in the outdoor unit 202 of the present aspect, a structure is employed which brings the second electrical equipment unit 83 (specifically, the rear surface of the board body 83a or the high heat emitting parts including the inverter control elements) serving as an inverter board into contact with the machine chamber S₂ side surface of the partition plate 58, so the exhaust heat that the inverter control elements mounted on the second electrical equipment unit 83 emit is dissipated through the partition plate 58. Thus, anomalous heating of the inverter control elements can be prevented.

### (4) Characteristics of Outdoor Unit

In the outdoor unit 202 that has been described using FIG 32 to FIG. 34, the second electrical equipment unit 83 serving as an inverter board is brought into contact with the machine chamber S₂ side surface of the partition plate 58, whereby a cooling structure is employed which causes the exhaust heat that the inverter control elements emit to be dissipated from the partition plate 58, so the cooling fins that project from the partition plate toward the blower chamber as in a conventional outdoor unit can be omitted. Thus, effective utilization of the space inside the machine chamber S₂ is promoted because the degree of freedom with which the second electrical equipment unit 83 may be disposed inside the machine chamber S₂ is raised, which can contribute to making the entire outdoor unit 202 compact.

Further, by omitting the cooling fins, a reduction in cost and a reduction in the ventilation resistance of the blower chamber S1 are realized and it becomes difficult for the outer peripheral portions of the blades of the outdoor fan 32 and the partition plate 58 to interfere with each other, whereby it becomes possible to enlarge the space of the machine chamber S₂ in the left-right direction.

### (5) Modification 1

In the outdoor unit 202 that has been described using FIG. 32 to FIG 34, the second electrical equipment unit 83 serving as an inverter board is brought into contact with the machine chamber S₂ side surface of the partition plate 58, whereby a cooling structure is employed which causes the exhaust heat that the inverter control elements emit to be dissipated from the partition plate 58, but the present invention is not limited to this; the second electrical equipment unit 83 may also be brought into contact with the inner surface of the bottom surface, the top surface, the right front surface, the right side surface, or the right rear surface (in the present aspect, the bottom plate 52, the top plate 53, the right front plate 56, or the right side plate 57) that are outer plates of the unit casing 51 and form the machine chamber S₂, whereby a cooling structure is employed which causes the exhaust heat that the inverter control elements emit to be dissipated from an outer plate of the unit casing 51. In this case, the exhaust heat that the inverter control elements emit is mainly cooled by natural convection heat transfer of the outdoor air, so the efficiency of heat transfer is somewhat inferior in comparison to when the second electrical equipment unit 83 is brought into contact with the partition plate 58, but effective utilization of the space inside the machine chamber S₂ is further promoted because the degree of freedom with which the second electrical equipment unit 83 may be disposed inside the machine chamber S₂ is further raised.

Specific examples thereof will be described below.

### <When second electrical equipment unit is brought into contact with side surface of unit casing>

For example, when, of the space inside the machine chamber S₂, there is empty space in the vicinity of the right side surface of the unit casing 51, as shown in FIG. 35, the second electrical equipment unit 83 serving as an inverter board can be brought into contact with the inner surface of the right side surface (in the present aspect, the right side plate 57) of the unit casing 51. Here, FIG. 35 is a plan diagram of the outdoor unit 202 pertaining to modification 1 (when the second electrical equipment unit 83 is brought into contact with the inner surface of a side surface of the unit casing 51). It will be noted that in the present modification, a partition plate 158 does not include a portion corresponding to the flat portion 58a of the partition plate 58 shown in FIG 32 to FIG. 34 but has, in its entirety in the vertical direction, a shape that is the same as that of the curved portion 58b of the partition plate 58.

In this case, it is preferable for the second electrical equipment unit 83 to be detachably attached to the right side plate 57 in consideration of the serviceability of the second electrical equipment unit 83 during maintenance. For example, as shown in FIG 36 and FIG 37, a locking claw 57a that extends upward may be disposed on the inner surface of the right side plate 57 and an attachment member 83b that includes a square hole into which the locking claw 57a can be inserted may be disposed on the rear surface of the board body 83a of the second electrical equipment unit 83, whereby a structure that is capable of detachably attaching the board body 83a to the right side plate 57 can be obtained. Here, FIG. 36 is a plan diagram showing the structure that attaches the second electrical equipment unit 83 to the right side plate 57 of the unit casing 51. FIG. 37 is a front diagram showing the structure that attaches the second electrical equipment unit 83 to the right side plate 57 of the unit casing 51. Further, when such a detachable structure is employed, a gap arises between the rear surface of the board body 83a and the inner surface of the right side plate 57 and there is a tendency for the ability to dissipate the exhaust heat that the inverter control elements emit to drop, so it is preferable to interpose a material whose heat conduction is good, such as silicon oil, and fill the gap between the rear surface of the board body 83a and the inner surface of the right side plate 57.

### <When second electrical equipment unit is brought into contact with front surface of unit casing>

For example, when, of the space inside the machine chamber S₂, there is empty space in the vicinity of the right front surface of the unit casing 51, as shown in FIG. 38, the second electrical equipment unit 83 serving as an inverter board can be brought into contact with the inner surface of the right front surface (in the present aspect, the right front plate 56) of the unit casing 51. Here, FIG. 38 is a right side diagram of the outdoor unit 202 pertaining to modification 1 (when the second electrical equipment unit 83 is brought into contact with the inner surface of a front surface of the unit casing 51).

In this case, it is preferable for the second electrical equipment unit 83 to be detachably attached to the right front plate 56 in consideration of performing the work of removing the right front plate 56 during maintenance. At this time, similar to when the second electrical equipment unit 83 is brought into contact with the right side surface of the unit casing 51, as shown in FIG. 36 and FIG. 37, a locking claw 56a that extends upward may be disposed on the inner surface of the right front plate 56 and an attachment member 83b that includes a square hole into which the locking claw 56a can be inserted may be disposed on the rear surface of the board body 83a of the second electrical equipment unit 83, whereby a structure that is capable of detachably attaching the board body 83a to the right front plate 56 can be obtained. Further, when such a detachable structure is employed, similar to when the second electrical equipment unit 83 is brought into contact with the right side surface of the unit casing 51, it is preferable to fill the gap between the rear surface of the board body 83a and the inner surface of the right front plate 56 with a material whose heat conduction is good, such as silicon oil.

### <When brought into contact with bottom surface of unit casing>

For example, when, of the space inside the machine chamber S₂, the second electrical equipment unit 83 is to be disposed in the vicinity of the bottom surface of the unit casing 51, as shown in FIG. 39, the second electrical equipment unit 83 serving as an inverter board can be brought into contact with the inner surface of the bottom surface (in the present aspect, the bottom plate 52) of the unit casing 51. Here, FIG. 39 is a partial perspective diagram where the outdoor unit 202 pertaining to modification 1 (when the second electrical equipment unit 83 is brought into contact with the inner surface of the bottom surface of the unit casing 51) is seen diagonally from the right and front (shown excluding the top plate 53, the front plates 54 and 56, the side plate 57, the refrigerant circuit components, and the first electrical equipment unit 82).

In this case, in order to avoid interference between the compressor 22 and the second electrical equipment unit 83, it is preferable to install the second electrical equipment unit 83 between the compressor 22 and the bottom plate 52 in the vertical direction and to detachably attach the second electrical equipment unit 83 to the bottom plate 52 in consideration of the serviceability of the second electrical equipment unit 83 during maintenance. For example, as shown in FIG. 40, a mount 52b for installing the compressor 22 may be disposed on the bottom plate 52, a space for installing the second electrical equipment unit 83 may be formed between the compressor 22 and the bottom plate 52 in the vertical direction, rail members 52a may be disposed in this space, and the second electrical equipment unit 83 may be brought into contact with the bottom plate 52 and attached so as to be slidable in the front-rear direction of the bottom plate 52. Here, FIG. 40 is a front diagram showing a structure that attaches the second electrical equipment unit 83 between the compressor 22 and the bottom plate 52 of the unit casing 51 in the vertical direction.

### (6) Modification 2

In the outdoor unit 202 that has been described using FIG. 32 to FIG. 40, the second electrical equipment unit 83 serving as an inverter board is brought into contact with the inner surface of an outer plate (specifically, the right front plate 56, the right side plate 57, the bottom plate 52, etc.) of the unit casing 51 or the machine chamber S₂ side surface of the partition plate 58, whereby a cooling structure is employed which causes the exhaust heat that the inverter control elements emit to be dissipated from the outer plate of the unit casing 51 or the partition plate 58, but some of the refrigerant circuit components may also be brought into contact with the outer plate of the unit casing 51 or the partition plate 58 with which the second electrical equipment unit 83 has been brought into contact. In this case, the dissipation of the exhaust heat that the inverter control elements emit can be promoted because the outer plate of the unit casing 51 or the partition plate 58 can be cooled by the refrigerant circulating inside the refrigerant circuit 110.

Specific examples thereof will be described below.

### <When accumulator is brought into contact with partition plate>

For example, when the second electrical equipment unit 83 is brought into contact with the machine chamber S₂ side surface of the partition plate 58 (see FIG. 32 to FIG. 34), as shown in FIG. 41 and FIG. 42, the accumulator 33 serving as a liquid storage container can be brought into contact with the machine chamber S₂ side surface (specifically, the flat portion 58a) of the partition plate 58. Here, the accumulator 33 is a container having an upright circular cylinder shape and is fixed to the partition plate 58 by the band member 33a or the like. It will be noted that FIG. 41 is a plan diagram of the outdoor unit 202 pertaining to modification 2 (when the accumulator 33 is brought into contact with the machine chamber S₂ side surface of the partition plate 58) (shown excluding the top plate 53 and refrigerant circuit components other than the accumulator 33). FIG. 42 is a perspective diagram where the outdoor unit 202 pertaining to modification 2 (when the accumulator 33 is brought into contact with the machine chamber S₂ side surface of the partition plate 58) is seen diagonally from the right and front (shown excluding the top plate 53, the front plates 54 and 56, the side plate 57, refrigerant circuit components other than the accumulator 33, and the first electrical equipment unit 82).

In this case, the dissipation of the exhaust heat that the inverter control elements emit can be promoted because the partition plate 58 can be cooled utilizing the low pressure gas refrigerant passing through the accumulator 33 and the low pressure liquid refrigerant stored inside the accumulator 33. At this time, it is preferable for the accumulator 33 to be brought into contact with the vicinity of the second electrical equipment unit 83, but even when it is difficult to ensure space to install the accumulator 33 inside the machine chamber S₂ and the accumulator 33 must be disposed in a place away from the second electrical equipment unit 83, the degree of freedom with which the accumulator 33 may be disposed can also be ensured because this can contribute to the cooling of the partition plate 58.

### <When suction plate pipe is brought into contact with partition plate>

For example, when the second electrical equipment unit 83 is brought into contact with the machine chamber S₂ side surface of the partition plate 58 (see FIG. 32 to FIG. 34), as shown in FIG. 43, the suction plate pipe 21a that configures part of the suction pipe 21 can be brought into contact with the machine chamber S₂ side surface of the partition plate 58. Here, as shown in FIG. 44, for example, the suction plate pipe 2 1 a comprises a pair of plate materials that are adhered together by brazing or the like to the portion of the suction pipe 21 between the four-way switch valve 24 and the accumulator 33 (see FIG. 31) to form a flow path inside. Additionally, a contact surface 21 b that has a shape along the machine chamber S₂ side surface of the partition plate 58 is formed on the suction plate pipe 21a. It will be noted that FIG. 43 is a plan diagram of the outdoor unit 202 pertaining to modification 2 (when the suction plate pipe 2 1 a is brought into contact with the machine chamber S₂ side surface of the partition plate 58) (shown excluding the top plate 53 and refrigerant circuit components other than the suction plate pipe 21 a). FIG. 44 is a diagram where the suction plate pipe 21 a is seen from the direction of A in FIG. 43 (shown with part being broken out).

In this case, the partition plate 58 can be cooled utilizing the low pressure gas refrigerant passing through the suction plate pipe 21a. Moreover, the contact surface 21 b that has a shape along the machine chamber S₂ side surface of the partition plate 58 is formed on the suction plate pipe 21a, and the area of contact between the suction plate pipe 21 a and the partition plate 58 can be enlarged, so the efficiency with which the second electrical equipment unit 83 can be cooled is raised and the dissipation of the exhaust heat that the inverter control elements emit can be promoted.

### <When accumulator is brought into contact with side surface of unit casing>

For example, when the second electrical equipment unit 83 is brought into contact with the inner surface of the right side surface (in the present aspect, the right side plate 57) of the unit casing 51 (see FIG. 45), as shown in FIG. 45, the accumulator 33 serving as a liquid storage container can be brought into contact with the inner surface of the right side surface (in the present aspect, the right side plate 57) of the unit casing 51. Here, the accumulator 33 is a container having an upright circular cylinder shape and is fixed to the right side plate 57 by the band member 33a or the like. It will be noted that FIG. 45 is a plan diagram of the outdoor unit 202 pertaining to modification 2 (when the accumulator 33 is brought into contact with the inner surface of the right side surface of the unit casing 51) (shown excluding the top plate 53 and refrigerant circuit components other than the accumulator 33).

In this case also, the dissipation of the exhaust heat that the inverter control elements emit can be promoted because the right side surface of the unit casing 51 can be cooled utilizing the low pressure gas refrigerant flowing through the accumulator 33 and the low pressure liquid refrigerant stored inside the accumulator 33.

Further, here, although it is not shown, the suction plate pipe 2 1 a shown in FIG. 44 may also be brought into contact with the inner surface of the right side surface (in the present aspect, the right side plate 57) of the unit casing 51 instead of the accumulator 33. Further, even when the second electrical equipment unit 83 is brought into contact with the inner surface of the right front surface (in the present aspect, the right front plate 56) of the unit casing 51 (see FIG. 38), the accumulator 33 and the suction plate pipe 21a may be brought into contact with the inner surface of the right front surface (in the present aspect, the right front plate 56) of the unit casing 51.

### <When accumulator is brought into contact with bottom surface of unit casing>

For example, when the second electrical equipment unit 83 is installed between the compressor 22 and the bottom plate 52 in the vertical direction and brought into contact with the inner surface of the bottom surface (in the present aspect, the bottom plate 52) of the unit casing 51 (see FIG. 40), as shown in FIG. 46, the accumulator 33 serving as a liquid storage container can be brought into contact with the inner surface of the bottom surface of the unit casing 51. Here, the accumulator 33 is a container having a recumbent circular cylinder shape. It will be noted that FIG. 46 is a front diagram showing a structure where the second electrical equipment unit 83 is attached between the compressor 22 and the bottom plate 52 of the unit casing 51 in the vertical direction and the accumulator 33 is installed in the vicinity thereof.

In this case also, the dissipation of the exhaust heat that the inverter control elements emit can be promoted because the bottom surface of the unit casing 51 can be cooled utilizing the low pressure gas refrigerant flowing through the accumulator 33 and the low pressure liquid refrigerant stored inside the accumulator 33.

Further, here, although it is not shown, the suction plate pipe 21 a shown in FIG. 44 may be brought into contact with the inner surface of the bottom surface (in the present aspect, the bottom plate 52) of the unit casing 51 instead of the accumulator 33.

### <Fourth Aspect>

### (1) Configuration of Refrigerant Circuit of Air Conditioner

FIG. 47 is a general refrigerant circuit diagram of an air conditioner 301 where an outdoor unit of an air conditioner pertaining to a fourth aspect is employed. The air conditioner 301 is a so-called separate type air conditioner, is mainly disposed with an outdoor unit 302, an indoor unit 4, and a liquid refrigerant communication pipe 5 and a gas refrigerant communication pipe 6 that interconnect the outdoor unit 302 and the indoor unit 4, and configures a vapor compression type refrigerant circuit 110.

### <Configuration of Refrigerant Circuit of Indoor Unit>

The indoor unit 4 is installed indoors and disposed with an indoor refrigerant circuit 10a that configures part of the refrigerant circuit 110. The indoor refrigerant circuit 10a mainly includes an indoor heat exchanger 41.

It will be noted that because the configuration of the indoor refrigerant circuit 10a is the same as the configuration of the indoor refrigerant circuit 10a of the first embodiment and second and third aspects, description will be omitted here.

### <Configuration of Refrigerant Circuit of Outdoor Unit>

The outdoor unit 302 is installed outdoors and disposed with an outdoor refrigerant circuit 110b that configures part of the refrigerant circuit 110. The outdoor refrigerant circuit 110b mainly includes a compressor 22, a four-way switch valve 24, an outdoor heat exchanger 26, an expansion valve 28, a liquid close valve 29, a gas close valve 31, and an accumulator 33.

It will be noted that because the configuration of the outdoor refrigerant circuit 110b is the same as the configuration of the outdoor refrigerant circuit 110b of the second aspect, description will be omitted here.

### (2) Structure of Outdoor Unit

Next, the structure of the outdoor unit 302 disposed with the above-described outdoor refrigerant circuit 110b will be described using FIG. 48 to FIG. 50. Here, FIG. 48 is a plan diagram of the outdoor unit 302 (shown excluding the top plate 53 and refrigerant circuit components). FIG. 49 is a front diagram of the outdoor unit 302 (shown excluding the left and right front plates 54 and 56 and refrigerant circuit components). FIG. 50 is a perspective diagram where the outdoor unit 302 is seen diagonally from the right and front (shown excluding the top plate 53, the front plates 54 and 56, the side plate 57, refrigerant circuit components, and a first electrical equipment unit 82). The outdoor unit 302 has a structure (so-called trunk type structure) where the inside of a substantially rectangular parallelepiped box-shaped unit casing 51 is divided into a blower chamber S1 and a machine chamber S₂ by a partition plate 58 extending vertically, and is mainly disposed with the substantially box-shaped unit casing 51, the outdoor heat exchanger 26, an outdoor fan 32, the compressor 22, refrigerant circuit components (see FIG. 47) that configure the outdoor refrigerant circuit 110b together with the outdoor heat exchanger 26 and the compressor 22, and an electrical equipment unit 81 that performs control of the operation of the outdoor unit 302.

It will be noted that because the structures of the unit casing 51, the outdoor heat exchanger 26, the outdoor fan 32 and the compressor 22 are the same as the structures of the unit casing 51, the outdoor heat exchanger 26, the outdoor fan 32 and the compressor 22 of the first embodiment, description will be omitted here.

### <Refrigerant Circuit Components>

The refrigerant circuit components are parts that mainly configure the outdoor refrigerant circuit 110b (excluding the compressor 22 and the outdoor heat exchanger 26) including the suction pipe 21, the discharge pipe 23, the four-way switch valve 24, the first gas refrigerant pipe 25, the liquid refrigerant pipe 27, the expansion valve 28, the liquid close valve 29, the second gas refrigerant pipe 30, the gas close valve 31, and the accumulator 33. The refrigerant circuit components are mainly disposed on the front side, the upper side, the right transverse side and the rear side of the compressor 22 inside the machine chamber S₂.

### <Electrical Equipment Unit>

The electrical equipment unit 81 is disposed with various electrical equipment such as an inverter board and a control board including a microcomputer and the like for performing operation control. In the present aspect, the electrical equipment unit 81 is mainly configured from a first electrical equipment unit 82 and a second electrical equipment unit 83 that are disposed in the space in the upper portion of the machine chamber S₂.

The second electrical equipment unit 83 is mainly an inverter board on which are mounted high heat emitting parts whose heat emission amount is large during operation, including inverter control elements comprising power transistors, diodes and the like, and includes a board body 83a on which the various high heat emitting parts including the inverter control elements are mounted. In the present aspect, inverter control elements used for inverter control of the compressor motor 22a are mounted on the board body 83a. The second electrical equipment unit 83 is disposed inside the machine chamber S₂ in a state where the rear surface of the board body 83a, or the various high heat emitting parts including the inverter control elements, contacts a heat storage body 91 disposed so as to contact the machine chamber S₂ side surface of the partition plate 58. It will be noted that the rear surface of the board body 83a or the various high heat emitting parts including the inverter control elements may directly contact the heat storage body 91 or may contact the heat storage body 91 via a plate member made of metal.

Here, as shown in FIG. 51, the heat storage body 91 mainly includes: a box body 92 that includes a surface 92a along the machine chamber S₂ side surface of the partition plate 58 and a surface 92b that contacts the rear surface of the board body 83a or the high heat emitting parts including the inverter control elements, with a hollow space being formed inside the box body 92; and a heat storage material 93 that fills the inside of the box body 92. In the present modification, the heat storage material 93 is a latent heat storage material that performs heat storage utilizing latent heat of fusion, and a material whose melting point is lower than the use upper limit temperature of the inverter control elements and is higher than the air temperature inside the machine chamber S₂ is used. For example, it is preferable to use a paraffin or salt whose melting point is about 60 to 80°C. Further, the inverter control elements transiently emit heat even after the air conditioner 301 stops. For this reason, it is preferable to remove the transient exhaust heat that the inverter control elements emit for a while even after the air conditioner 301 stops. Thus, as the quantity of the heat storage material 93, it is preferable to employ a quantity capable of storing a cold energy amount that can absorb the exhaust heat that the inverter control elements emit after the air conditioner 301 stops. It will be noted that FIG. 51 is a diagram where the heat storage body 91 is seen from the direction of A in FIG. 48 (with part being broken out).

In this manner, in the outdoor unit 302 of the present embodiment, the second electrical equipment unit 83 serving as an inverter board is brought into contact with the heat storage body 91 disposed inside the machine chamber S₂, whereby a cooling structure is employed which causes the exhaust heat that the high heat emitting parts such as the inverter control elements mounted on the second electrical equipment unit 83 emit during operation and immediately after stopping to be dissipated to the heat storage body 91 (specifically, the heat storage material 93), and the cooling fins that project from the partition plate 58 toward the blower chamber S₁ as in a conventional outdoor unit are omitted.

It will be noted that because the configuration of the first electrical equipment unit 82 is the same as the configuration of the first electrical equipment unit 82 of the first embodiment, description will be omitted here.

### (3) Operation of Outdoor Unit

Next, the operation of the outdoor unit 302 including the operation of cooling the second electrical equipment unit 83 will be described.

In the present aspect also, cooling operation and heating operation are performed, but because the content thereof is the same as cooling operation and heating operation in the second and third aspects, description will be omitted here.

Additionally, during cooling operation and heating operation, the electrical equipment unit 81 of the outdoor unit 302 is powered in order to control operation of the air conditioner 301, and the high heat emitting parts such as the inverter control elements of the second electrical equipment unit 83 emit heat. However, in the outdoor unit 302 of the present aspect, a structure is employed which brings the second electrical equipment unit 83 (specifically, the rear surface of the board body 83a) serving as an inverter board into contact with the heat storage body 91, so the exhaust heat that the inverter control elements mounted on the second electrical equipment unit 83 emit is dissipated mainly by causing the heat storage material 93 filling the inside of the box body 92 of the heat storage body 91 to melt -- that is, by utilizing the cold energy stored in the heat storage material 93. Moreover, in the outdoor unit 302 of the present aspect, because the heat storage body 91 is brought into contact with the machine chamber S₂ side surface of the partition plate 58 of the unit casing 51, the heat storage body 91 (specifically, the surface 92a of the box body 92) can be cooled by the outdoor air and cold energy can be stored in the heat storage material 93, and the dissipation of the exhaust heat that the inverter control elements emit can be promoted.

Further, even after the air conditioner 301 stops, the inverter control elements transiently emit heat, but this transient heat can also be efficiently dissipated by utilizing the cold energy stored in the heat storage material 93.

In this manner, in the outdoor unit 302 of the present aspect, anomalous heating of the inverter control elements during operation and immediately after the air conditioner 301 stops can be prevented.

### (4) Characteristics of Outdoor Unit

In the outdoor unit 302 that has been described using FIG. 48 to FIG. 51, the second electrical equipment unit 83 serving as an inverter board is brought into contact with the heat storage body 91, whereby a cooling structure is employed which causes the exhaust heat that the inverter control elements emit to be dissipated to the heat storage body 91, so the cooling fins that project from the partition plate 58 toward the blower chamber S1 as in a conventional outdoor unit can be omitted. Thus, effective utilization of the space inside the machine chamber S₂ is promoted because the degree of freedom with which the second electrical equipment unit 83 may be disposed inside the machine chamber S₂ is raised, which can contribute to making the entire outdoor unit 302 compact.

Further, by omitting the cooling fins, a reduction in cost and a reduction in the ventilation resistance of the blower chamber S1 are realized and it becomes difficult for the outer peripheral portions of the blades of the outdoor fan 32 and the partition plate 58 to interfere with each other, whereby it becomes possible to enlarge the space of the machine chamber S₂ in the left-right direction.

Moreover, in the outdoor unit 302, the heat storage body 91 can be cooled by the outdoor air (the outdoor air flowing inside the blower chamber S 1 because of the outdoor fan 32) because the heat storage body 91 is brought into contact with the machine chamber S₂ side surface of the partition plate 58 of the unit casing 51. Thus, the dissipation of the exhaust heat that the inverter control elements emit can be promoted.

### (5) Modification 1

In the outdoor unit 302 that has been described using FIG. 48 to FIG. 51, the heat storage body 91 that the second electrical equipment unit 83 serving as an inverter board contacts is brought into contact with the machine chamber S₂ side surface of the partition plate 58, but the present invention is not limited to this; the heat storage body that the second electrical equipment unit 83 contacts may also be brought into contact with the inner surface of the bottom surface, the top surface, the right front surface, the right side surface, or the right rear surface (in the present aspect, the bottom plate 52, the top plate 53, the right front plate 56, or the right side plate 57) that are outer plates of the unit casing 51 and form the machine chamber S₂. In this case, the heat storage body is mainly cooled by natural convection heat transfer of the outdoor air, so the efficiency of heat transfer is somewhat inferior in comparison to when the heat storage body is brought into contact with the partition plate 58, but effective utilization of the space inside the machine chamber S₂ is further promoted because the degree of freedom with which the second electrical equipment unit 83 may be disposed inside the machine chamber S₂ is further raised.

Specific examples thereof will be described below.

### <When heat storage body is brought into contact with side surface of unit casing>

For example, when, of the space inside the machine chamber S₂, there is empty space in the vicinity of the right side surface of the unit casing 51, as shown in FIG. 52, the heat storage body 91 that the second electrical equipment unit 83 serving as an inverter board contacts can be brought into contact with the inner surface of the right side surface (in the present aspect, the right side plate 57) of the unit casing 51. Here, FIG. 52 is a plan diagram of the outdoor unit 302 pertaining to modification 1 (when the heat storage body 91 is brought into contact with the inner surface of a side surface of the unit casing 51).

In this case, it is preferable for the second electrical equipment unit 83 and the heat storage body 91 to be detachably attached to the right side plate 57 in consideration of the serviceability of the second electrical equipment unit 83 during maintenance.

### <When heat storage body is brought into contact with front surface of unit casing>

For example, when, of the space inside the machine chamber S₂, there is empty space in the vicinity of the right front surface of the unit casing 51, as shown in FIG. 53, the heat storage body 91 that the second electrical equipment unit 83 serving as an inverter board contacts can be brought into contact with the inner surface of the right front surface (in the present aspect, the right front plate 56) of the unit casing 51. Here, FIG. 53 is a right side diagram of the outdoor unit 302 pertaining to modification 1 (when the heat storage body 91 is brought into contact with the inner surface of a front surface of the unit casing 51).

In this case, it is preferable for the second electrical equipment unit 83 and the heat storage body 91 to be detachably attached to the right front plate 56 in consideration of the serviceability of the second electrical equipment unit 83 during maintenance.

### <When heat storage body is brought into contact with bottom surface of unit casing>

For example, when, of the space inside the machine chamber S₂, the second electrical equipment unit 83 is to be disposed in the vicinity of the bottom surface of the unit casing 51, as shown in FIG. 54, the heat storage body 91 can be brought into contact with the inner surface of the bottom surface (in the present aspect, the bottom plate 52) of the unit casing 51. Here, FIG. 54 is a partial perspective diagram where the outdoor unit 302 pertaining to modification 1 (when the heat storage body 91 is brought into contact with the inner surface of the bottom surface of the unit casing 51) is seen diagonally from the right and front (shown excluding the top plate 53, the front plates 54 and 56, the side plate 57, refrigerant circuit components, and the first electrical equipment unit 82).

In this case, in order to avoid interference between the compressor 22 and the second electrical equipment unit 83, it is preferable to install the second electrical equipment unit 83 between the compressor 22 and the bottom plate 52 in the vertical direction and to detachably attach the second electrical equipment unit 83 to the bottom plate 52 in consideration of the serviceability of the second electrical equipment unit 83 during maintenance. For example, as shown in FIG. 55, a mount 52b for installing the compressor 22 may be disposed on the bottom plate 52, a space for installing the second electrical equipment unit 83 and the heat storage body 91 may be formed between the compressor 22 and the bottom plate 52 in the vertical direction, the heat storage body 91 may be brought into contact with the bottom plate 52, and the side end portions of the board body 83 a of the second electrical equipment unit 83 may be attached so as to be slidable in the front-rear direction on the surface 92b of the heat storage body 91. Here, FIG 55 is a front diagram showing a structure that attaches the second electrical equipment unit 83 and the heat storage body 91 between the compressor 22 and the bottom plate 52 of the unit casing 51 in the vertical direction.

### (6) Modification 2

In the outdoor unit 302 that has been described using FIG. 48 to FIG. 55, the second electrical equipment unit 83 serving as an inverter board is brought into contact with the heat storage body 91, whereby a cooling structure is employed which causes the exhaust heat that the inverter control elements emit to be dissipated to the heat storage body 91, and the heat storage body 91 is brought into contact with the partition plate 58 or the inner surface of an outer plate such as the bottom plate 52, the right front plate 56 or the right side plate 57 forming the machine chamber S₂, but the heat storage body 91 may also be brought into contact with some of the refrigerant circuit components. In this case, the dissipation of the exhaust heat that the inverter control elements emit can be promoted because an outer plate of the unit casing 51 or the partition plate 58 can be cooled by the refrigerant circulating inside the refrigerant circuit 110.

Specific examples thereof will be described below.

### <When heat storage body is brought into contact with accumulator>

For example, it is possible to bring the heat storage body into contact with the accumulator 33 serving as a refrigerant circuit component. Specifically, as shown in FIG. 56 and FIG. 57, the accumulator 33 that comprises a container having an upright circular cylinder shape can be disposed in a corner portion of the unit casing 51 (specifically, in the vicinity of the connection portion between the right side surface portion and the right rear surface portion of the right side plate 57), the second electrical equipment unit 83 can be disposed such that it slants diagonally with respect to the right side surface portion and the right rear surface portion of the right side plate 57 when the unit casing 51 is seen in plan view, and a heat storage body 191 can be brought into contact with the rear surface of the board body 83a and the outer peripheral surface of the accumulator 33 and also the inner surface of the right side plate 57 and disposed in a gap enclosed by the accumulator 33, the second electrical equipment unit 83 and the right side plate 57 when the unit casing 51 is seen in plan view. Here, the heat storage body 191 includes a first heat storage body 194 that faces the right side surface of the right side plate 57 and a second heat storage body 195 that faces the rear surface of the right side plate 57 including a shape that symmetrically mirrors the first heat storage body 194. The first heat storage body 194 includes: a box body 192 that includes a surface 192a that contacts the inner surface of the right side surface of the right side plate 57 (in the case of the second heat storage body 195, the surface 192a contacts the inner surface of the rear surface of the right side plate 57), a surface 192b that contacts the rear surface of the board body 83a or the high heat emitting parts including the inverter control elements, and a surface 192c that contacts the outer peripheral surface of the accumulator 33, with a hollow space being formed inside the box body 192; and a heat storage material 193 that fills the inside of the box body 192. Further, a material that is the same as the above-described heat storage material 93 is used for the heat storage material 193. It will be noted that FIG. 56 is a plan diagram of the outdoor unit pertaining to modification 2 (when the accumulator 33 is disposed in a corner portion of the right side plate 57 and the heat storage body 191 is brought into contact with the accumulator 33) (shown excluding the top plate 53 and refrigerant circuit components other than the accumulator 33). FIG. 57 is a perspective diagram showing the vicinity of the second electrical equipment unit 83 pertaining to modification 2 (when the accumulator 33 is disposed in a corner portion of the right side plate 57 and the heat storage body 191 is brought into contact with the accumulator 33).

### <When heat storage body is brought into contact with suction plate pipe>

For example, when, of the space inside the machine chamber S₂, the second electrical equipment unit 83 is disposed in the vicinity of the bottom surface of the unit casing 51 and the heat storage body 91 is brought into contact with the inner surface of the bottom surface (in the present aspect, the bottom plate 52) of the unit casing 51 (see FIG. 54 and FIG. 55), as shown in FIG. 58, a heat storage body 291 can be brought into contact with the suction plate pipe 21a that configures part of the suction pipe 21. Here, as shown in FIG. 59, for example, the suction plate pipe 21 a comprises a pair of plate materials that are adhered together by brazing or the like to the portion of the suction pipe 21 between the four-way switch valve 24 and the accumulator 33 (see FIG. 47) to form a flow path inside. Further, as shown in FIG. 60, the heat storage body 291 mainly includes: a box body 292 that includes a rectangular hole 292a into which the suction plate pipe 21 a can be inserted, with a hollow cylindrical space being formed inside the box body 292; and a heat storage material 293 that fills the inside of the box body 192. The box body 292 includes: a surface 292b that covers the outer peripheral surface of the suction plate pipe 21a in a state where the suction plate pipe 21a has been inserted into the rectangular hole 292a and contacts the rear surface of the board body 83a or the high heat emitting parts including the inverter control elements; and a surface 292c that contacts the bottom plate 52. Further, a material that is the same as the above-described heat storage materials 93 and 193 is used for the heat storage material 293. Additionally, the second electrical equipment unit 83 and the suction plate pipe 21 a that has been inserted into the rectangular hole 292a in the heat storage body 291 may be installed in the space formed by the mount 52b so as to be vertically stacked, rail members 52a may be disposed in this space, the suction plate pipe 21 a may be disposed along the bottom plate 52, and the side end portions of the board body 83 a of the second electrical equipment unit 83 may be attached so as to be slidable in the front-rear direction on the surface 292b of the heat storage body 291. It will be noted that FIG. 58 is a front diagram showing a structure that attaches the suction plate pipe 21a, the heat storage body 291 and the second electrical equipment unit 83 between the compressor 22 and the bottom plate 52 of the unit casing 51 in the vertical direction. FIG. 59 is a diagram where the suction plate pipe 21 a is seen from the direction of B in FIG. 58 (with part being broken out). FIG. 60 is a diagram where the heat storage body 291 is seen from the direction of B in FIG. 58 (with part being broken out).

### <Other Embodiments>

In the third and fourth aspects and their modifications, the present disclosure was applied to an outdoor unit disposed with an outdoor refrigerant circuit including an accumulator as a liquid storage container, but the present invention is not limited to this and may also be applied to an outdoor unit disposed with an outdoor refrigerant circuit where a receiver is disposed in the liquid refrigerant pipe as a liquid storage container as in the first embodiment and its modifications.

Further, in this case, as the refrigerant circuit component that contacts the machine chamber side surface of the partition plate or the inner surface of an outer plate of the unit casing contacting the second electrical equipment unit serving as an inverter board, a high pressure plate pipe that configures part of the liquid refrigerant pipe or the receiver described in the first embodiment and its modifications may be utilized instead of the accumulator or the suction plate pipe.

Further, in each of the preceding embodiments and the preceding aspects and their modifications, a latent heat storage material that performs heat storage by solid-liquid phase change was used as the heat storage material, but a solid heat storage material that performs heat storage by sensible heat may be used regardless of phase changes.

In this case, the box body configuring the heat storage body is omitted, and the heat storage material itself contacts the second electrical equipment unit serving as an inverter board.

### INDUSTRIAL APPLICABILITY

By utilizing the present invention, there can be provided a cooling structure for inverter control elements that can eliminate restrictions on the disposition of an inverter board in an outdoor unit having a trunk type structure.

## Claims

1. An outdoor unit of an air conditioner, the outdoor unit having a structure where the space inside a substantially rectangular parallelepiped box-shaped casing (51) is partitioned into a blower chamber (S1) and a machine chamber (S2) by a partition plate (58) extending in a vertical direction, and that is connectable to an indoor unit via refrigerant communication pipes (5, 6) to configure a vapor compression type refrigerant circuit (10), the outdoor unit comprising:
an outdoor heat exchanger (26) and an outdoor fan (32) that are disposed inside the blower chamber (S1);
a compressor (22) that is disposed inside the machine chamber (S2);
a refrigerant circuit component (36, 39a) that is disposed inside the machine chamber (S2) and configures the refrigerant circuit together with the compressor and the outdoor heat exchanger; and
an inverter board (83) that is disposed inside the machine chamber (S2) and on which inverter control elements are mounted, wherein the inverter board is attached to any of the refrigerant circuit component (36, 39a), an inner surface of an outer plate of the casing that the refrigerant circuit component contacts, and a machine chamber side surface of the partition plate (58) hat the refrigerant circuit component contacts,
**characterized in that**
the refrigerant circuit component (36, 39a) is a component through which high pressure refrigerant flows that has been condensed in the outdoor heat exchanger.

2. The outdoor unit of an air conditioner of claim 1, wherein the refrigerant circuit component is a receiver (36) for temporarily storing high pressure liquid refrigerant connected to a liquid side of the outdoor heat exchanger (26) .

3. The outdoor unit of an air conditioner of claim 1, wherein the refrigerant circuit component is a high pressure plate pipe (39a) that configures a refrigerant pipe through which high pressure liquid refrigerant connected to a liquid side of the outdoor heat exchanger (26) flows.

4. The outdoor unit of an air conditioner of claim 3, wherein the inverter board (83) is disposed between the compressor (22) and a bottom plate of the casing (51) in a vertical direction.

5. The outdoor unit of an air conditioner of any of claims 1 to 3, wherein the inverter board (83) contacts an inner surface of a bottom plate configuring the outer plate and is disposed between the compressor (22) and the bottom plate of the casing (51) in a vertical direction.

6. The outdoor unit of an air conditioner of any of claims 1 to 5, wherein the inverter board (83) is detachably attached to the outer plate.

7. The outdoor unit of an air conditioner of any of claims 1 to 4, wherein a heat storage body is disposed on any of the refrigerant circuit component, the inner surface of the outer plate of the casing that the refrigerant circuit component contacts, and the machine chamber side surface of the partition plate that the refrigerant circuit component contacts.

8. The outdoor unit of an air conditioner of claim 7, wherein the heat storage body contacts the inverter board (83).

9. An air conditioner being a so-called separate type air conditioner and having an outdoor unit according to one of the preceding claims, an indoor unit, and a liquid refrigerant communication pipe and a gas refrigerant communication pipe that interconnect the outdoor unit and the indoor unit, and configures a vapor compression type refrigerant circuit.

## Patentansprüche

1. Außeneinheit einer Klimaanlage, wobei die Außeneinheit eine Struktur aufweist, in welcher der Raum innerhalb eines im Wesentlichen rechteckig quaderförmigen Gehäusekastens (51) durch eine Trennplatte (58), die sich in eine vertikale Richtung erstreckt, in eine Gebläsekammer (S1) und eine Maschinenkammer (S2) unterteilt ist, und
die, über Kältemittelverbindungsleitungen (5, 6) mit einer Inneneinheit verbunden werden kann, um einen Kältemittelkreislauf eines Dampfkompressionstyps (10) auszubilden,
wobei die Außeneinheit aufweist:
einen Außenwärmetauscher (26) und ein Außengebläse (32), die innerhalb der Gebläsekammer (S1) angeordnet sind;
einen Kompressor (22), der innerhalb der Maschinenkammer (S2) angeordnet ist;
eine Kältemittelkreislaufkomponente (36, 39a), die innerhalb der Maschinenkammer (S2) angeordnet ist und den Kältemittelkreislauf zusammen mit dem Kompressor und dem Außenwärmetauscher ausbildet; und
eine Inverterplatine (83), die innerhalb der Maschinenkammer (S2) angeordnet ist und auf der Invertersteuerelemente angebracht sind, wobei die Inverterplatine an einem aus der Kältemittelkreislaufkomponente (36, 39a), einer inneren Fläche einer äußeren Platte des Gehäuses, mit welcher die Kältemittelkreislaufkomponente in Kontakt steht und einer Maschinenkammerseitenfläche der Trennplatte (58) mit welcher die Kühlmittelkreislaufkomponente in Kontakt steht, angebracht ist,
**dadurch gekennzeichnet, dass**
die Kältemittelkreislaufkomponente (36, 39a) eine Komponente ist, durch die Hochdruckkältemittel strömt, das in dem Außenwärmetauscher kondensiert wurde.

2. Außeneinheit einer Klimaanlage nach Anspruch 1, wobei
die Kältemittelkreislaufkomponente ein Empfänger (36) zum zeitweisen Speichern von Hochdruckflüssigkältemittel ist, der mit einer Flüssigkeitsseite des Außenwärmetauschers (26) verbunden ist.

3. Außeneinheit einer Klimaanlage nach Anspruch 1, wobei
die Kältemittelkreislaufkomponente eine mit einer Flüssigkeitsseite des Außenwärmetauschers (26) verbundene Hochdruckplattenleitung (39a) ist, die eine Kältemittelleitung ausbildet, durch die Hochdruckflüssigkältemittel strömt.

4. Außeneinheit einer Klimaanlage nach Anspruch 3, wobei
die Inverterplatine (83) in einer vertikalen Richtung zwischen dem Kompressor (22) und einer Bodenplatte des Gehäuses (51) angeordnet ist.

5. Außeneinheit einer Klimaanlage nach einem der Ansprüche 1 bis 3, wobei
die Inverterplatine (83) mit einer Innenfläche einer Bodenplatte, welche die äußere Platte ausbildet, in Kontakt steht und zwischen dem Kompressor (22) und der Bodenplatte des Gehäuses (51) in einer vertikalen Richtung angeordnet ist.

6. Außeneinheit einer Klimaanlage nach einem der Ansprüche 1 bis 5, wobei
die Inverterplatine (83) lösbar an der äußeren Platte angebracht ist.

7. Außeneinheit einer Klimaanlage nach einem der Ansprüche 1 bis 4, wobei
ein Wärmespeicherkörper an einem aus der Innenfläche der äußeren Platte des Gehäuses, mit welcher die Kältemittelkreislaufkomponente in Kontakt steht und der Maschinekammerseitenfläche der Trennplatte, mit welcher die Kühlmittelkreislaufkomponente in Kontakt steht, angeordnet ist.

8. Außeneinheit einer Klimaanlage nach Anspruch 7, wobei
der Wärmespeicherkörper mit der Inverterplatine (83) in Kontakt steht.

9. Klimaanlage, die eine Trenntyp-Klimaanlage ist und eine Außeneinheit nach einem der vorangegangenen Ansprüche, eine Inneneinheit und eine Flüssigkältemittelverbindungsleitung und eine Gaskältemittelverbindungsleitung, welche die Außeneinheit und die Inneneinheit verbinden, aufweist und einen Dampfkompressionstyp-Kältemittelkreislauf ausbildet.

## Revendications

1. Unité extérieure d'un climatiseur, l'unité extérieure possédant une structure où l'espace à l'intérieur d'un boîtier en forme de boîte parallélépipède sensiblement rectangulaire (51) est séparé en une chambre de soufflage (S1) et une chambre de machine (S2) par une plaque de séparation (58) s'étendant dans une direction verticale, et qui est raccordable à une unité intérieure par des tuyaux de communication frigorifiques (5, 6) pour configurer un circuit frigorifique à compression de vapeur (10), l'unité extérieure comprenant :
un échangeur de chaleur extérieur (26) et un ventilateur extérieur (32) qui sont disposés à l'intérieur de la chambre de soufflage (S1) ;
un compresseur (22) qui est disposé à l'intérieur de la chambre de machine (S2) ;
un composant de circuit frigorifique (36, 39a) qui est disposé à l'intérieur de la chambre de machine (S2) et qui configure le circuit frigorifique avec le compresseur et l'échangeur de chaleur extérieur ; et
une carte d'onduleur (83) qui est disposée à l'intérieur de la chambre de machine (52) et sur laquelle des éléments de contrôle d'onduleur sont montés, dans laquelle la carte d'onduleur est attachée à un composant de circuit frigorifique (36, 29a) quelconque, une face interne d'une plaque externe du boîtier en contact avec le composant de circuit frigorifique, et une face latérale de la chambre de machine de la plaque de séparation (58) en contact avec le composant de circuit frigorifique, **caractérisée en ce que**
le composant de circuit frigorifique (36, 39a) est un composant à travers lequel circule du réfrigérant à haute pression qui a été condensé dans l'échangeur de chaleur extérieur.

2. Unité extérieure d'un climatiseur selon la revendication 1, dans laquelle le composant de circuit frigorifique est un réservoir (36) destiné à stocker temporairement un réfrigérant liquide à haute pression relié à un côté liquide de l'échangeur de chaleur extérieur (26).

3. Unité extérieure d'un climatiseur selon la revendication 1, dans laquelle le composant de circuit frigorifique est un tuyau (39a) en plaque à haute pression qui configure un tuyau de réfrigérant à travers lequel circule du réfrigérant liquide à haute pression relié au côté liquide de l'échangeur de chaleur extérieur (26).

4. Unité extérieure d'un climatiseur selon la revendication 3, dans laquelle la carte d'onduleur (83) est disposée entre le compresseur (22) est une plaque inférieure du boîtier (51) dans une direction verticale.

5. Unité extérieure d'un climatiseur selon l'une quelconque des revendications 1 à 3, dans laquelle la carte d'onduleur est en contact avec une face interne d'une plaque inférieure configurant la plaque extérieure et est disposée entre le compresseur (22) et la plaque inférieure du boîtier (51) dans une direction verticale.

6. Unité extérieure de climatiseur selon l'une quelconque des revendications 1 à 5, dans laquelle la carte d'onduleur (83) est attachée de manière détachable à la plaque externe.

7. Unité extérieure d'un climatiseur selon l'une quelconque des revendications 1 à 4, dans laquelle un corps de stockage de chaleur est disposé sur l'un quelconque parmi le composant de circuit frigorifique, la face interne de la plaque externe du boîtier en contact avec le composant de circuit frigorifique, et la face latérale de la chambre de machine de la plaque de séparation en contact avec le composant de circuit frigorifique.

8. Unité extérieure de climatiseur selon la revendication 7, dans laquelle le corps de stockage de chaleur est en contact avec la carte d'onduleur (83).

9. Climatiseur de type climatiseur séparé et qui a une unité extérieure selon l'une des revendications précédentes, une unité intérieure, et un tuyau de communication de réfrigérant liquide et un tuyau de communication de réfrigérant gazeux interconnectant l'unité extérieure et l'unité intérieure, et configure un circuit frigorifique à compression de vapeur.
